(19) Europäisches Patentamt European Patent Office Office européen des brevets

(11) **EP 4 318 467 A1**

## (12) EUROPEAN PATENT APPLICATION
published in accordance with Art. 153(4) EPC

(43) Date of publication:
**07.02.2024 Bulletin 2024/06**

(21) Application number: **22790822.5**

(22) Date of filing: **29.03.2022**

(51) International Patent Classification (IPC):
**G10L 19/002** (2013.01)    **H04W 4/80** (2018.01)

(52) Cooperative Patent Classification (CPC):
**G10L 19/002; G10L 19/16; G10L 19/18; H04W 4/80**

(86) International application number:
**PCT/CN2022/083816**

(87) International publication number:
**WO 2022/222713 (27.10.2022 Gazette 2022/43)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **20.04.2021  CN 202110423987**

(71) Applicant: **Huawei Technologies Co., Ltd.
Longgang
Shenzhen, Guangdong 518129 (CN)**

(72) Inventors:
• **TI, Chunli
  Shenzhen, Guangdong 518129 (CN)**
• **LU, Yuewan
  Shenzhen, Guangdong 518129 (CN)**
• **WEI, Jiayi
  Shenzhen, Guangdong 518129 (CN)**

(74) Representative: **Maiwald GmbH
Engineering
Elisenhof
Elisenstrasse 3
80335 München (DE)**

## (54) CODEC NEGOTIATION AND SWITCHING METHOD

(57)    A codec negotiation and switching method and system, an electronic device, a computer-readable storage medium, and a computer program product are disclosed. The system includes an electronic device (100) and an audio play device (200). Before transmitting audio data, the electronic device (100) and the audio play device (200) categorize codecs into a plurality of categories, and determine a common codec category, for example, a first category and a second category, supported by the electronic device (100) and the audio play device (200). The electronic device (100) transmits the audio data to the audio play device (200) based on a codec of the first category. When the codec needs to be switched, the electronic device (100) does not need to renegotiate with the audio play device (200) on a codec type, but directly transmits the audio data based on a codec of the second category. In the method, a problem that audio data is interrupted and stalling occurs during codec switching performed by the electronic device and the audio play device is resolved, and user experience is improved.

FIG. 9

**Description**

This application claims priority to Chinese Patent Application No. 202110423987.8, filed with the China National Intellectual Property Administration on April 20, 2021 and entitled "CODEC NEGOTIATION AND SWITCHING METHOD", which is incorporated herein by reference in its entirety.

**TECHNICAL FIELD**

This application relates to the field of audio processing technologies, and in particular, to a codec negotiation and switching method.

**BACKGROUND**

As users have increasing requirements for audio experience, audio content that supports high-definition audio quality, multi-channel, 3D audio, and other features is increasingly enriched, corresponding encoding and decoding technologies also rapidly emerge, and a wireless audio device is usually equipped with a plurality of audio coders-decoders (Coder-Decoder, Codec).

Each time an electronic device establishes a connection to an audio play device, the electronic device and the audio play device negotiate with each other and obtain a codec type supported by both the electronic device and the audio play device. Then the electronic device processes audio data based on the codec type supported by both the electronic device and the audio play device. Then the electronic device sends encoded audio data to the audio play device. The audio play device receives the encoded audio data, decodes the encoded audio data by using a corresponding decoder, and play decoded audio data.

When quality of a network of the electronic device deteriorates or a user selects higher sound quality, the electronic device needs to switch an encoder. In this case, the electronic device needs to renegotiate with the audio play device on a codec type. In a process in which the electronic device renegotiates with the audio play device on a codec type, the electronic device pauses sending audio data to the audio play device. Consequently, audio data is interrupted, or stalling occurs, affecting user experience. Therefore, how to enable an electronic device and an audio play device to quickly switch a codec and avoid interruption of audio data during switching is an issue that urgently needs to be addressed.

**SUMMARY**

This application provides a codec negotiation and switching method. When an electronic device needs to switch an encoder, the electronic device does not need to renegotiate with an audio play device on a codec type, but directly selects a codec of a category from codec categories that are supported by both the electronic device and the audio play device and that are previously determined through negotiation, to transmit audio data. This resolves a problem that audio data is interrupted and stalling occurs during codec switching performed by the electronic device and the audio play device, and improves user experience.

According to a first aspect, this application provides a codec negotiation and switching system. The system includes an electronic device and an audio play device. The electronic device is configured to: when first parameter information of audio data meets a first condition, encode the audio data into first encoded audio data based on a first encoder of a first category, and send the first encoded audio data to the audio play device, where the first category is a common codec category that is supported by the electronic device and the audio play device and that is determined by the electronic device before obtaining the audio data; and send an identifier of the first category to the audio play device. The audio play device is configured to receive the identifier of the first category that is sent by the electronic device, and decode the first encoded audio data into first play audio data by using a first decoder of the first category. The electronic device is further configured to: when second parameter information of audio data meets a second condition, encode the audio data into second encoded audio data based on a second encoder of a second category, and send the second encoded audio data to the audio play device, where the second category is a common codec category that is supported by the electronic device and the audio play device and that is determined by the electronic device before obtaining the audio data; and send an identifier of the second category to the audio play device. The audio play device is further configured to receive the identifier of the second category that is sent by the electronic device, and decode the second encoded audio data into second play audio data by using a second decoder of the second category, where the first condition is different from the second condition, and the first category is different from the second category.

In the system in the first aspect, before transmitting the audio data, the electronic device and the audio play device categorize codecs into a plurality of categories, and determine the common codec category (for example, the first category and the second category) supported by the electronic device and the audio play device. Then the electronic device obtains the first parameter information of the audio data, and when the first parameter information of the audio data meets the first condition, selects a codec of the first category from the common codec category to transmit the audio data. After to-be-played audio data content, an application for playing audio data, a user choice, or a network condition changes, the electronic device obtains a second parameter of the audio data. When the second parameter of the audio data meets the second condition, the electronic device does not need to renegotiate with the audio play device on a codec, but directly selects a codec of the second category from the common codec category to transmit the audio data. In this way, when the electronic device needs to switch an encoder, the electronic device does not need to renegotiate with the audio play device on a codec type, but directly selects a codec of a category from codec categories that are supported by both the electronic device and the audio play device and that are previously determined through negotiation, to transmit the audio data. This resolves a problem that audio data is interrupted and stalling occurs during codec switching performed by the electronic device and the audio play device, and improves user experience.

With reference to the first aspect, in a possible implementation, an encoder of the first category includes at least the first encoder, and an encoder of the second category includes at least the second encoder.

With reference to the first aspect, in a possible implementation, the electronic device is further configured to receive the identifier of the first category and the identifier of the second category that are sent by the audio play device, where a decoder of the first category includes at least the first decoder, and a decoder of the second category includes at least the second decoder. In this way, the audio play device categorizes decoders into a plurality of categories based on a codec categorization standard. For example, categories of codecs that are categorized into a plurality of categories and that correspond to one or more decoder identifiers are the first category and the second category. A decoder categorized into the first category includes at least the first decoder, and may further include another decoder, for example, a third decoder. A decoder categorized into the second category includes at least the second decoder, and may further include another decoder, for example, a fourth decoder.

With reference to the first aspect, in a possible implementation, the electronic device is further configured to determine that a common category supported by the electronic device and the audio play device is the first category and the second category, and send the identifier of the first category and the identifier of the second category to the audio play device. The audio play device is further configured to receive the identifier of the first category and the identifier of the second category that are sent by the electronic device. The electronic device sends, to the audio play device, a codec category supported by both the electronic device and the audio play device, so that the audio play device learns of the codec category supported by both the electronic device and the audio play device.

In another possible implementation, the electronic device may alternatively not need to send the identifier of the first category or the identifier of the second category to the audio play device. When transmitting the audio data, the electronic device only needs to send, to the audio play device, an identifier of a codec category used based on parameter information of the audio data.

With reference to the first aspect, in a possible implementation, the encoder of the first category includes only the first encoder, and the decoder of the first category includes only the first decoder. After the electronic device determines that the common category supported by the electronic device and the audio play device is the first category and the second category, the electronic device is further configured to: when the first parameter information meets the first condition, encode the audio data into the first encoded audio data by using the first encoder of the first category, and send the first encoded audio data to the audio play device. The audio play device is further configured to decode the first encoded audio data into the first play audio data by using the first decoder of the first category. The codec category supported by both the electronic device and the audio play device is the first category and the second category. When the first category includes only one encoder and one decoder, the electronic device uses the encoder and the decoder of the category as a default encoder and a default decoder. Then, when transmitting the audio data to the audio play device by using the codec of the first category, the electronic device encodes the audio data into the first encoded audio data based on the default encoder of the first category. Then the electronic device sends the first encoded audio data to the audio play device, and the audio play device decodes the first encoded audio data into the first play audio data by using the default decoder of the first category.

With reference to the first aspect, in a possible implementation, the encoder of the first category further includes a third encoder, and the decoder of the first category further includes a third decoder. After the electronic device determines that the common category supported by the electronic device and the audio play device is the first category and the second category, the electronic device is further configured to: when the first parameter information meets the first condition, encode the audio data into the first encoded audio data by using the first encoder of the first category, and send the first encoded audio data to the audio play device, where power consumption of the first encoder is lower than that of the third encoder, or a priority or power of the first encoder is higher than that of the third encoder. The audio play device is further configured to decode the first encoded audio data into the first play audio data by using the first decoder of the first category, where power consumption of the first decoder is lower than that of the second decoder, or a priority or power of the first decoder is higher than that of the second decoder. The codec category supported by both the electronic device and the audio play device is the first category and the second category. When the first category includes a plurality of encoders and a plurality of decoders, the electronic device determines, from the plurality of encoders according to a preset rule, one encoder as a default encoder, and determines, from the plurality of decoders according to a preset rule, one decoder as a default decoder. A default rule may be a priority rule, an efficiency rule, a power consumption rule, or the like. It should be noted that the electronic device may determine, from the plurality of encoders according to the preset rule, one encoder as a default encoder, and determine, from the plurality of decoders according to the preset rule, one decoder as a default decoder. In another possible implementation, the electronic device only needs to determine, from the plurality of encoders according to the preset rule, one encoder as a default encoder, and the audio play device determines, from the plurality of decoders according to the preset rule, one decoder as a default decoder. This is not limited herein in this application.

With reference to the first aspect, in a possible implementation, when a common encoder category supported by the electronic device and the audio play device includes only the first category, the electronic device is further configured to: when the second parameter information meets the second condition, encode the audio data into third encoded audio data by using the first encoder of the first category, and send the third encoded audio data to the audio play device. The audio play device is further configured to decode the third encoded audio data into third play audio data by using the first decoder of the first category. When the electronic device and the audio play device support only one codec category, and when the parameter information of the audio data changes from the first parameter information to the second parameter information and the second parameter information meets the second condition, the electronic device cannot switch a codec, and the electronic device transmits the audio data to the audio play device still by using a default codec of the first category.

With reference to the first aspect, in a possible implementation, that the common encoder category supported by the electronic device and the audio play device includes only the first category includes: The electronic device does not receive the identifier of the second category that is sent by the audio play device; or a quantity of encoders, categorized into the second category, of the electronic device is 0.

With reference to the first aspect, in a possible implementation, the encoder of the first category includes only the first encoder, and the decoder of the first category includes only the first decoder. When the first parameter information meets the first condition, the electronic device is further configured to encode the audio data into the first encoded audio data by using the first encoder of the first category, and send the first encoded audio data to the audio play device. The audio play device is further configured to decode the first encoded audio data into the first play audio data by using the first decoder of the first category. The codec category supported by both the electronic device and the audio play device includes only the first category. When the first category includes only one encoder and one decoder, the electronic device uses the encoder and the decoder of the category as a default encoder and a default decoder. Then, when transmitting the audio data to the audio play device by using the codec of the first category, the electronic device encodes the audio data into the first encoded audio data based on the default encoder of the first category. Then the electronic device sends the first encoded audio data to the audio play device, and the audio play device decodes the first encoded audio data into the first play audio data by using the default decoder of the first category.

With reference to the first aspect, in a possible implementation, the encoder of the first category further includes a third encoder, and the decoder of the first category further includes a third decoder. When the first parameter information meets the first condition, the electronic device is further configured to encode the audio data into the first encoded audio data based on the first encoder of the first category, and send the first encoded audio data to the audio play device, where power consumption of the first encoder is lower than that of the third encoder, or a priority or power of the first encoder is higher than that of the third encoder. The audio play device is further configured to decode the first encoded audio data into the first play audio data by using the first decoder of the first category, where power consumption of the first decoder is lower than that of the third decoder, or a priority or power of the first decoder is higher than that of the third decoder. The codec category supported by both the electronic device and the audio play device includes only the first category. When the first category includes a plurality of encoders and a plurality of decoders, the electronic device determines, from the plurality of encoders according to a preset rule, one encoder as a default encoder, and determines, from the plurality of decoders according to a preset rule, one decoder as a default decoder. A default rule may be a priority rule, an efficiency rule, a power consumption rule, or the like. It should be noted that the electronic device may determine, from the plurality of encoders according to the preset rule, one encoder as a default encoder, and determine, from the plurality of decoders according to the preset rule, one decoder as a default decoder. In another possible implementation, the electronic device only needs to determine, from the plurality of encoders according to the preset rule, one encoder as a default encoder, and the audio play device determines, from the plurality of decoders according to the preset rule, one decoder as a default decoder. This is not limited herein in this application.

With reference to the first aspect, in a possible implementation, a codec of the first category is a codec with high-definition sound quality, and a codec of the second category is a codec with standard sound quality; or a codec of the first category is a codec with standard sound quality, and a codec of the second category is a codec with high-definition sound quality.

With reference to the first aspect, in a possible implementation, before the electronic device obtains the audio data, the electronic device is further configured to categorize the first encoder into the first category based on parameter information of the first encoder and a codec categorization standard, and categorize the second encoder into the second category based on parameter information of the second encoder and the codec categorization standard, where the parameter information of the first encoder and the parameter information of the second encoder include one or more of a sampling rate, a bit rate, a quantization bit depth, a sound channel quantity, and an audio stream format; and the audio play device is further configured to categorize the first decoder into the first category based on parameter information of the first decoder and the codec categorization standard, and categorize the second decoder into the second category based on parameter information of the second decoder and the codec categorization standard, where the parameter information of the first decoder and the parameter information of the second decoder include one or more of a sampling rate, a bit rate, a quantization bit depth, a sound channel quantity, and an audio stream format, and the codec categorization standard includes a mapping relationship between a codec category and parameter information of a codec. It should be noted that the parameter information of the first encoder, the parameter information of the second encoder, the parameter information of the first decoder, and the parameter information of the second decoder are all the same.

With reference to the first aspect, in a possible implementation, a sampling rate of a codec of the first category is greater than or equal to a target sampling rate, and a sampling rate of a codec of the second category is less than the target sampling rate; and/or a bit rate of the codec of the first category is greater than or equal to a target bit rate, and a bit rate of the codec of the second category is less than the target bit rate; and/or a sound channel quantity of the codec of the first category is greater than or equal to a target sound channel quantity, and a sound channel quantity of the codec of the second category is less than the target sound channel quantity; and/or a quantization bit depth of the codec of the first category is greater than or equal to a target quantization bit depth, and a quantization bit depth of the codec of the second category is less than the target quantization bit depth; and/or an audio stream format of the codec of the first category is a target audio stream format, and an audio stream format of the codec of the second category is the target audio stream format.

With reference to the first aspect, in a possible implementation, a type of a parameter in the first parameter information, a type of a parameter in the parameter information of the first encoder, a type of a parameter in the parameter information of the first decoder, a type of a parameter in the parameter information of the second parameter, a type of a parameter in the parameter information of the second encoder, and a type of a parameter in the parameter information of the second decoder are the same. That the first parameter information meets the first condition and the second parameter information meets the second condition specifically includes: A sampling rate in the first parameter information is greater than or equal to the target sampling rate, and a sampling rate in the second parameter information is less than the target sampling rate; and/or a bit rate in the first parameter information is greater than or equal to the target bit rate, and a bit rate in the second parameter information is less than the target bit rate; and/or a quantization bit depth in the first parameter information is greater than or equal to the target quantization bit depth, and a quantization bit depth in the second parameter information is less than the target quantization bit depth; and/or a sound channel quantity in the first parameter information is greater than or equal to the target sound channel quantity, and a sound channel quantity in the second parameter information is less than the target sound channel quantity; and/or an audio stream format in the first parameter information is the target audio stream format, and an audio stream format in the second parameter information is the target audio stream format.

With reference to the first aspect, in a possible implementation, when delays of the first encoder and the second encoder are the same, the electronic device is further configured to: encode a first audio frame in the audio data into a first encoded audio frame by using the first encoder, and send the first encoded audio frame to the audio play device; encode the first audio frame in the audio data into a second encoded audio frame by using the second encoder, and send the second encoded audio frame to the audio play device; and encode a second audio frame in the audio data into an Nth encoded audio frame by using the second encoder, and send the Nth encoded audio frame to the audio play device. The audio play device is further configured to: decode the first encoded audio frame into a first decoded audio frame by using the first decoder, decode the second encoded audio frame into a second decoded audio frame by using the second decoder, and decode the Nth encoded audio frame into an Nth play audio frame by using the second decoder; and smooth the first decoded audio frame and the second decoded audio frame to obtain a first play audio frame. The electronic device first plays the first play audio frame, and then the electronic device plays the Nth play audio frame. In this way, when the delays of the first encoder and the second encoder are the same, switching between the first encoder and the second encoder needs to be completed within one frame, and the frame is the first audio frame. The audio play device smooths the first audio frame and then plays a smoothed first audio frame, to prevent stalling during codec switching, and implement smooth transition. An adjacent audio frame after the first audio frame, for example, the second audio frame, does not need to be smoothed, and the second audio frame is directly decoded by using the second decoder and played.

With reference to the first aspect, in a possible implementation, when delays of the first encoder and the second encoder are different, the electronic device is further configured to: obtain D audio data frames by using the following formula: D=round((max(total delay of an encoder 1, total delay of an encoder 2)+(frame length-total delay of the encoder 1%frame length)+frame length-1)/frame length), where D indicates a total quantity of audio data frames during switching between the first encoder and the second encoder, max indicates an operation for obtaining a maximum value, % indicates a modulo operation, and the frame length indicates duration of one frame of audio data; encode a first audio frame to a $D^{th}$ audio frame in the audio data by using the first encoder to obtain a third encoded audio frame to a $(D+2)^{th}$ encoded audio frame; encode the $D^{th}$ audio frame in the audio data by using the second encoder to obtain a $(D+3)$th encoded audio frame, and encode a $(D+1)^{th}$ audio frame in the audio data by using the second encoder to obtain an $N^{th}$ encoded audio frame; and send the third encoded audio frame to the $(D+2)^{th}$ encoded audio frame, the $(D+3)^{th}$ encoded audio frame, and the Nth encoded audio frame to the audio play device. The audio play device is further configured to: decode, by using the first decoder, the third encoded audio frame to the $(D+2)^{th}$ encoded audio frame into a second play audio frame to a $(D+1)^{th}$ play audio frame, and decode, by using the second decoder, the $(D+3)^{th}$ encoded audio frame into a third decoded audio frame; play the second play audio frame to the $D^{th}$ play audio frame; smooth the $(D+1)^{th}$ play audio frame and the third decoded audio frame to obtain a target play audio frame, and play the target play audio frame; and decode, by using the second decoder, the Nth encoded audio frame into an Nth decoded audio frame, and play the Nth decoded audio frame. In this way, when the delays of the first encoder and the second encoder are different, switching between the first encoder and the second encoder needs to be completed within a plurality of frames (D frames). In this way, during switching between the first encoder and the second encoder, a moment at which audio data encoded by the first encoder arrives at the audio play device and is decoded is the same as a moment at which audio data encoded by the second encoder arrives at the audio play device and is decoded. If encoder switching needs to be completed within D frames, the audio play device directly decodes the first audio frame to a $(D-1)^{th}$ audio frame and plays decoded audio frames, and the audio play device smooths the $D^{th}$ audio frame and then plays a smoothed audio frame, to prevent stalling during codec switching, and implement smooth transition. An adjacent audio frame after the $D^{th}$ audio frame, for example, an Nth audio frame, does not need to be smoothed, and an Nth audio frame is directly decoded and played.

With reference to the first aspect, in a possible implementation, the audio play device is further configured to obtain the first play audio frame by using the following formula: Pcm=wi×pcmA+(1-wi)×pcmB, where Pcm is the first play audio frame, wi is a smoothing coefficient, wi i is greater than 0 and less than 1, pcmA is the first decoded audio frame, and pcmB is the second decoded audio frame.

With reference to the first aspect, in a possible implementation, the audio play device is further configured to obtain the first play audio frame by using the following formula: Pcm=wi×pcmA+(1-wi)×pcmB, where Pcm is the first play audio frame, wi is a smoothing coefficient, wi i is greater than 0 and less than 1, pcmA is the first decoded audio frame, and pcmB is the second decoded audio frame.

With reference to the first aspect, in a possible implementation, the audio play device is further configured to obtain the target play audio frame by using the following formula: Pcm=wi×pcmA+(1-wi)×pcmB, where Pcm is the target play audio frame, wi is a smoothing coefficient, wi i is greater than 0 and less than 1, pcmA is the $(D+1)^{th}$ play audio frame, and pcmB is the third decoded audio frame.

According to a second aspect, this application provides a codec negotiation and switching method. The method includes: When first parameter information of audio data meets a first condition, an electronic device encodes audio data into first encoded audio data based on a first encoder of a first category, and sends the first encoded audio data to an audio play device, where the second category is a common codec category that is supported by the electronic device and the audio play device and that is determined by the electronic device before obtaining the audio data. When second parameter information meets a second condition, the electronic device encodes the audio data into second encoded audio data based on a second encoder of a second category, and sends the second encoded audio data to the audio play device, where the second category is a common codec category that is supported by the electronic device and the audio play device and that is determined by the electronic device before obtaining the audio data, the second category is a common codec category that is supported by the electronic device and the audio play device and that is determined by the electronic device before obtaining the audio data, the first condition is different from the second condition, and the first category is different from the second category.

In the method in the second aspect, before transmitting the audio data, the electronic device and the audio play device categorize codecs into a plurality of categories, and determine the common codec category (for example, the first category and the second category) supported by the electronic device and the audio play device. Then the electronic device obtains the first parameter information of the audio data, and when the first parameter information of the audio data meets the first condition, selects a codec of the first category from the common codec category to transmit the audio data. After to-be-played audio data content, an application for playing audio data, a user choice, or a network condition changes, the electronic device obtains a second parameter of the audio data. When the second parameter of the audio data meets the second condition, the electronic device does not need to renegotiate with the audio play device on a codec, but directly selects a codec of the second category from the common codec category to transmit the audio data. In this way, when the electronic device needs to switch an encoder, the electronic device does not need to renegotiate with the audio play device on a codec type, but directly selects a codec of a category from codec categories that are supported by both the electronic device and the audio play device and that are previously determined through negotiation, to transmit the audio data. This resolves a problem that audio data is interrupted and stalling occurs during codec switching performed by the electronic device and the audio play device, and improves user experience.

With reference to the second aspect, in a possible implementation, an encoder of the first category includes at least the first encoder, and an encoder of the second category includes at least the second encoder.

With reference to the second aspect, in a possible implementation, the method further includes: The electronic device receives an identifier of the first category and an identifier of the second category that are sent by the audio play device, where a decoder of the first category includes at least a first decoder, and a decoder of the second category includes at least a second decoder. In this way, the audio play device categorizes decoders into a plurality of categories based on a codec categorization standard. For example, categories of codecs that are categorized into a plurality of categories and that correspond to one or more decoder identifiers are the first category and the second category. A decoder categorized into the first category includes at least the first decoder, and may further include another decoder, for example, a third decoder. A decoder categorized into the second category includes at least the second decoder, and may further include another decoder, for example, a fourth decoder.

With reference to the second aspect, in a possible implementation, the method further includes: The electronic device determines that a common category supported by the electronic device and the audio play device is the first category and the second category, and the electronic device sends the identifier of the first category and the identifier of the second category to the audio play device. The electronic device sends, to the audio play device, a codec category supported by both the electronic device and the audio play device, so that the audio play device learns of the codec category supported by both the electronic device and the audio play device.

With reference to the second aspect, in a possible implementation, the encoder of the first category includes only the first encoder, and after the electronic device determines that the common category supported by the electronic device and the audio play device is the first category and the second category, the method further includes: When the first parameter information meets the first condition, the electronic device encodes the audio data into the first encoded audio data by using the first encoder of the first category, and sends the first encoded audio data to the audio play device. The codec category supported by both the electronic device and the audio play device is the first category and the second category. When the first category includes only one encoder, the electronic device uses the encoder of the category as a default encoder and a default decoder. Then, when transmitting the audio data to the audio play device by using the codec of the first category, the electronic device encodes the audio data into the first encoded audio data based on the default encoder of the first category. Then the electronic device sends the first encoded audio data to the audio play device.

With reference to the second aspect, in a possible implementation, the encoder of the first category further includes a third encoder, and after the electronic device determines that the common category supported by the electronic device and the audio play device is the first category and the second category, the method further includes: When the first parameter information meets the first condition, the electronic device encodes the audio data into the first encoded audio data by using the first encoder of the first category, and sends the first encoded audio data to the audio play device, where power consumption of the first encoder is lower than that of the third encoder, or a priority or power of the first encoder is higher than that of the third encoder. The codec category supported by both the electronic device and the audio play device is the first category and the second category. When the first category includes a plurality of encoders, the electronic device determines, from the plurality of encoders according to a preset rule, one encoder as a default encoder. A default rule may be a priority rule, an efficiency rule, a power consumption rule, or the like.

With reference to the second aspect, in a possible implementation, when the common encoder category supported by the electronic device and the audio play device includes only the first category, the method further includes: When the second parameter information meets the second condition, the electronic device encodes the audio data into third encoded audio data by using the first encoder of the first category, and sends the third encoded audio data to the audio play device. When the electronic device and the audio play device support only one codec category, and when the parameter information of the audio data changes from the first parameter information to the second parameter information and the second parameter information meets the second condition, the electronic device cannot switch a codec, and the electronic device transmits the audio data to the audio play device still by using a default codec of the first category.

With reference to the second aspect, in a possible implementation, when the electronic device does not receive the identifier of the second category that is sent by the audio play device, or a quantity of encoders, categorized into the second category, of the electronic device is 0, the common encoder category supported by the electronic device and the audio play device includes only the first category.

With reference to the second aspect, in a possible implementation, the encoder of the first category includes only the first encoder, and the decoder of the first category includes only the first decoder; and when the first parameter information meets the first condition, the electronic device encodes the audio data into the first encoded audio data based on the first encoder of the first category, and sends the first encoded audio data to the audio play device. The codec category supported by both the electronic device and the audio play device includes only the first category. When the first category includes only one encoder, the electronic device uses the encoder of the category as a default encoder. Then, when transmitting the audio data to the audio play device by using the codec of the first category, the electronic device encodes the audio data into the first encoded audio data based on the default encoder of the first category. Then the electronic device sends the first encoded audio data to the audio play device.

With reference to the second aspect, in a possible implementation, the encoder of the first category further includes a third encoder, and the decoder of the first category further includes a third decoder; and when the first parameter information meets the first condition, the electronic device encodes the audio data into the first encoded audio data based on the first encoder of the first category, and sends the first encoded audio data to the audio play device, where power consumption of the first encoder is lower than that of the third encoder, or a priority or power of the first encoder is higher than that of the third encoder. The codec category supported by both the electronic device and the audio play device includes only the first category. When the first category includes a plurality of encoders, the electronic device determines, from the plurality of encoders according to a preset rule, one encoder as a default encoder. A default rule may be a priority rule, an efficiency rule, a power consumption rule, or the like.

With reference to the second aspect, in a possible implementation, a codec of the first category is a codec with high-definition sound quality, and a codec of the second category is a codec with standard sound quality; or a codec of the first category is a codec with standard sound quality, and a codec of the second category is a codec with high-definition sound quality.

With reference to the second aspect, in a possible implementation, before the electronic device obtains the audio data, the method further includes:

The electronic device categorizes the first encoder into the first category based on parameter information of the first encoder and a codec categorization standard, and categorizes the second encoder into the second category based on parameter information of the second encoder and the codec categorization standard, where the parameter information of the first encoder and the parameter information of the second encoder include one or more of a sampling rate, a bit rate, a quantization bit depth, a sound channel quantity, and an audio stream format, and the codec categorization standard includes a mapping relationship between a codec category and parameter information of a codec. It should be noted that the parameter information of the first encoder and the parameter information of the second encoder are the same.

With reference to the second aspect, in a possible implementation, a sampling rate of a codec of the first category is greater than or equal to a target sampling rate, and a sampling rate of a codec of the second category is less than the target sampling rate; and/or a bit rate of the codec of the first category is greater than or equal to a target bit rate, and a bit rate of the codec of the second category is less than the target bit rate; and/or a sound channel quantity of the codec of the first category is greater than or equal to a target sound channel quantity, and a sound channel quantity of the codec of the second category is less than the target sound channel quantity; and/or a quantization bit depth of the codec of the first category is greater than or equal to a target quantization bit depth, and a quantization bit depth of the codec of the second category is less than the target quantization bit depth; and/or an audio stream format of the codec of the first category is a target audio stream format, and an audio stream format of the codec of the second category is the target audio stream format.

With reference to the second aspect, in a possible implementation, a type of a parameter in the first parameter information, a type of a parameter in the parameter information of the first encoder, a type of a parameter in the parameter information of the first decoder, a type of a parameter in the parameter information of the second parameter, a type of a parameter in the parameter information of the second encoder, and a type of a parameter in the parameter information of the second decoder are the same. That the first parameter information meets the first condition and the second parameter information meets the second condition specifically includes: A sampling rate in the first parameter information is greater than or equal to the target sampling rate, and a sampling rate in the second parameter information is less than the target sampling rate; and/or a bit rate in the first parameter information is greater than or equal to the target bit rate, and a bit rate in the second parameter information is less than the target bit rate; and/or a quantization bit depth in the first parameter information is greater than or equal to the target quantization bit depth, and a quantization bit depth in the second parameter information is less than the target quantization bit depth; and/or a sound channel quantity in the first parameter information is greater than or equal to the target sound channel quantity, and a sound channel quantity in the second parameter information is less than the target sound channel quantity; and/or an audio stream format in the first parameter information is the target audio stream format, and an audio stream format in the second parameter information is the target audio stream format.

According to a third aspect, this application provides an electronic device, including one or more processors, one or more memories, and one or more encoders. The one or more memories and the one or more encoders are coupled to the one or more processors. The one or more memories are configured to store computer program code. The computer program code includes computer instructions. The one or more processors invoke the computer instructions to enable the electronic device to perform the codec negotiation and switching method according to any one of the possible implementations of the second aspect.

According to a fourth aspect, this application provides a computer-readable storage medium. The computer-readable storage medium stores computer-executable instructions. When the computer-executable instructions are invoked by a computer, the computer is enabled to perform the codec negotiation and switching method provided in any one of the possible implementations of the second aspect.

According to a fifth aspect, this application provides a computer program product including instructions. When the computer program product runs on a computer, the computer is enabled to perform the codec negotiation and switching method provided in any one of the possible implementations of the second aspect.

**BRIEF DESCRIPTION OF DRAWINGS**

FIG. 1 is a schematic diagram of a process of transmitting audio data between an electronic device and an audio play device according to an embodiment of this application;

FIG. 2 is a schematic diagram of a system according to an embodiment of this application;

FIG. 3 is a schematic diagram of a system for networking and transmission according to an embodiment of this application;

FIG. 4 is a schematic diagram of another process of transmitting audio data between an electronic device 100 and an audio play device 200 according to an embodiment of this application;

FIG. 5 is a schematic diagram of a structure of an electronic device 100 according to an embodiment of this application;

FIG. 6 is a block diagram of a software structure of an electronic device 100 (for example, a mobile phone) according to an embodiment of this application;

FIG. 7 is a schematic diagram of a hardware structure of an audio play device 200 according to an embodiment of this application;

FIG. 8 is a schematic diagram of negotiating by an electronic device 100 and an audio play device 200 on a common codec category according to an embodiment of this application;

FIG. 9 is a flowchart of a codec negotiation and switching method according to an embodiment of this application;

FIG. 9A to FIG. 9C are diagrams of a group of UIs on which an electronic device 100 establishes a communication connection to an audio play device 200 through Bluetooth according to an embodiment of this application; and

FIG. 10A to FIG. 10D are diagrams of another group of UIs according to an embodiment of this application.

**DESCRIPTION OF EMBODIMENTS**

The following clearly describes technical solutions in embodiments of this application in detail with reference to accompanying drawings. In descriptions of embodiments of this application, "/" indicates "or", unless otherwise specified. For example, A/B may indicate A or B. The term "and/or" in this specification describes only an association relationship between associated objects, and indicates that three relationships may exist. For example, A and/or B may indicate the following three cases: Only A exists, both A and B exist, and only B exists. In addition, in descriptions of embodiments of this application, "a plurality of means two or more than two.

The terms "first" and "second" used below are merely intended for a purpose of description, and shall not be construed as an indication or an implication of relative importance or an implicit indication of a quantity of indicated technical features. Therefore, a feature limited by "first" or "second" may explicitly or implicitly include one or more features. In descriptions of embodiments of this application, "a plurality of" means two or more than two, unless otherwise specified.

The term "user interface (user interface, UI)" in the specification, claims, and accompanying drawings of this application is a medium interface for interaction and information exchange between a user and an application or an operating system, and implements conversion between an internal form of information and a form acceptable to the user. A user interface of an application is source code written in a specific computer language, for example, Java or an extensible markup language (extensible markup language, XML). The source code of the interface is parsed and rendered on a terminal device, and is finally presented as user-recognizable content, for example, a control, for example, an image, text, or a button. The control (control), also referred to as a widget (widget), is a basic element on the user interface. Typical controls include a toolbar (toolbar), a menu bar (menu bar), an input box, a button (button), a scrollbar (scrollbar), an image, and text. An attribute and content of a control on an interface are defined by using a tag or a node. For example, the control included in the interface is defined in the XML by using a node, for example, <Textview>, <ImgView>, or <VideoView>. One node corresponds to one control or one attribute on the interface. After being parsed and rendered, the node is presented as user-visible content. In addition, interfaces of many applications such as a hybrid application (hybrid application) usually further include a web page. A web page, also referred to as a page, may be understood as a special control embedded in an interface of an application. A web page is source code written in a specific computer language, for example, a hypertext markup language (hypertext markup language, HTML), cascading style sheets (cascading style sheets, CSS), or JavaScript (JavaScript, JS). The source code of the web page may be loaded and displayed as user-recognizable content by a browser or a web page display component with a function similar to a function of the browser. Specific content included in the web page is also defined by using a tag or a node in the source code of the web page. For example, an element and an attribute of the web page are defined in the HTML by using <p>, <img>, <video>, or <canvas>.

The user interface is usually represented in a form of a graphical user interface (graphical user interface, GUI), and is a user interface that is related to a computer operation and that is displayed in a graphic manner. The graphical user interface may be an interface element such as a window or a control displayed on a display of an electronic device.

Currently, after an electronic device (for example, a mobile phone) establishes a communication connection to an audio play device (for example, a headset), the electronic device sends audio data to the audio play device, and the audio play device plays the audio data sent by the electronic device. Before the electronic device sends the audio data to the audio play device, the electronic device negotiates with the audio play device on a codec type. The electronic device selects a codec supported by both the electronic device and the audio play device to encode the audio data, and sends encoded audio data to the audio play device.

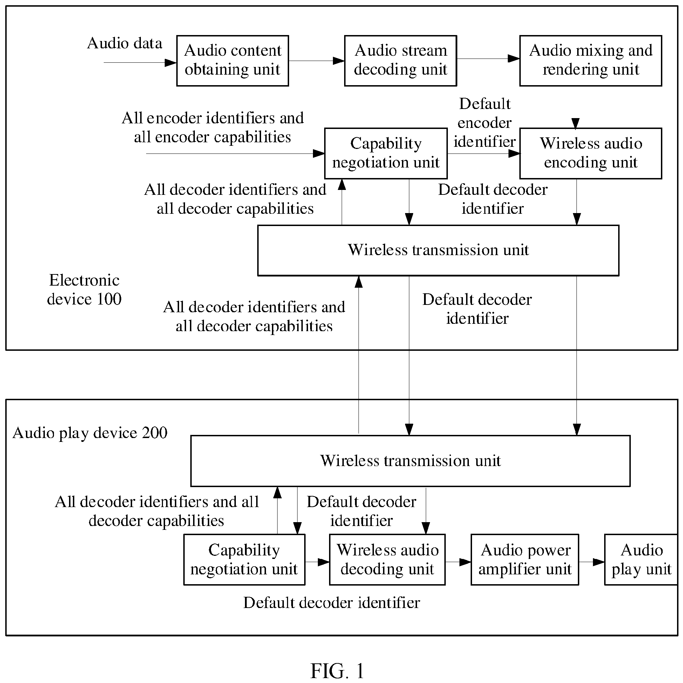

FIG. 1 is a schematic diagram of an example process of transmitting audio data between an electronic device and an audio play device.

The electronic device may be an audio signal source (Source, SRS), and the audio play device may be an audio signal sink (Sink, SNK).

The electronic device includes an audio data obtaining unit, an audio stream decoding unit, an audio mixing and rendering unit, a wireless audio encoding unit, a capability negotiation unit, and a wireless transmission unit.

The audio play device includes a wireless transmission unit, a wireless audio decoding unit, an audio power amplifier unit, an audio play unit, and a capability negotiation unit.

Before the electronic device sends obtained audio data to the audio play device, the electronic device negotiates with the audio play device to obtain a type of codec supported by both the electronic device and the audio play device, to perform data transmission. Specifically, after the electronic device establishes a communication connection to the audio play device, the audio play device sends, by using the capability negotiation unit, all decoder identifiers and capabilities of all decoders to the wireless transmission unit on the audio play device side, where a decoder identifier is a number of a decoder, and the audio play device may find, based on the decoder identifier, a decoder corresponding to the decoder identifier, and obtain a capability of the decoder corresponding to the decoder identifier. The wireless transmission unit on the audio play device side sends all the decoder identifiers and the capabilities of all the decoders to the wireless transmission unit on the electronic device side. The wireless transmission unit on the electronic device side sends all the decoder identifiers and the capabilities of all the decoders to the capability negotiation unit on the electronic device side. The capability negotiation unit on the electronic device side obtains all encoder identifiers and capabilities of all encoders on the electronic device, where an encoder identifier is a number of an encoder, and the electronic device may find, based on the encoder identifier, an encoder corresponding to the encoder identifier, and obtain a capability of the encoder corresponding to the encoder identifier. The capability negotiation unit on the electronic device side obtains, based on capabilities of all codecs, one or more common codec capabilities supported by the electronic device and the audio play device, where a capability of a codec includes a value of a sampling rate, a value of a quantization bit depth, a bit rate, a sound channel quantity, and the like supported by the codec. The electronic device determines, as a default codec based on a type of played audio and other factors, a codec identifier from the one or more common codec capabilities supported by the electronic device and the audio play device. Then the electronic device transmits audio data to the audio play device based on the default codec identifier. The capability negotiation unit of the electronic device sends a default encoder identifier to the wireless encoding unit. In addition, the capability negotiation unit of the electronic device sends a default decoder identifier to the wireless transmission unit on the electronic device side, the wireless transmission unit on the electronic device side sends the default decoder identifier to the wireless transmission unit on the audio play device side, the wireless transmission unit on the audio play device side sends the default decoder identifier to the capability negotiation unit of the audio play device, and the audio play device sends the default decoder identifier to the wireless audio decoding unit by using the capability negotiation unit.

In some embodiments, the electronic device and the audio play device may alternatively not include the capability negotiation unit. When the electronic device and the audio play device do not include the capability negotiation unit, the wireless transmission unit of the electronic device and the audio play device may implement a codec capability negotiation function.

For the electronic device, the audio data obtaining unit is configured to obtain an audio bitstream, where the audio bitstream may be a network audio bitstream obtained by the electronic device in real time, or may be an audio bitstream cached in the electronic device. After obtaining the audio bitstream, the audio data obtaining unit sends the audio bitstream to the audio stream decoding unit.

The audio stream decoding unit receives the audio bitstream sent by the audio data obtaining unit, and decodes the audio bitstream to obtain an uncompressed audio bitstream. Then the audio stream decoding unit sends the uncompressed audio bitstream to the audio mixing and rendering unit.

The audio mixing and rendering unit receives the uncompressed audio bitstream sent by the audio stream decoding unit, and performs audio mixing and rendering on the uncompressed audio bitstream, where an audio bitstream obtained through audio mixing and rendering is referred to as audio data. Audio mixing is to mix the uncompressed audio bitstream with audio data having an ambient attribute, so that the audio bitstream obtained through audio mixing and rendering has an ambient attribute. It can be understood that the electronic device may provide a plurality of pieces of audio data for audio mixing and rendering. For example, during dubbing and narration for a documentary, a dubbing specialist records a narration audio bitstream. To make the audio bitstream match a picture of the documentary, an ambient attribute of the audio bitstream needs to be rendered to create a mysterious atmosphere. Rendering is to adjust a sampling rate, a sampling bit depth, a sound channel quantity, and the like of audio data.

It should be noted that, in some embodiments, the electronic device may alternatively not include the audio mixing and rendering unit, that is, the electronic device does not need to perform audio mixing and rendering on the audio bitstream. This is not limited herein in this application. Then the audio mixing and rendering unit sends the audio data to the wireless audio encoding unit.

The wireless audio encoding unit receives the audio data sent by the audio mixing and rendering unit, and encodes the audio data based on the default encoder identifier. Then the wireless audio encoding unit sends encoded audio data to the wireless transmission unit.

The wireless transmission unit receives the encoded audio data sent by the wireless audio encoding unit, and sends the encoded audio data to the wireless transmission unit of the audio play device through a transmission channel between the electronic device and the audio play device.

The wireless transmission unit of the audio play device receives the encoded audio data sent by the wireless transmission unit of the electronic device, and the wireless transmission unit of the audio play device sends the encoded audio data to the wireless audio decoding unit of the audio play device.

The wireless audio decoding unit of the audio play device receives the encoded audio data sent by the wireless transmission unit, and performs audio decoding on the encoded audio data based on the default decoder identifier to obtain uncompressed audio data. The wireless audio decoding unit of the audio play device sends the uncompressed audio data to the audio power amplifier unit of the audio play device.

The audio power amplifier unit of the audio play device receives the uncompressed audio data, performs operations, such as digital-to-analog conversion and power amplification, on the uncompressed audio data, and then plays audio data by using the audio play unit.

When a communication connection is initially established, the electronic device transmits audio data to the audio play device based on a default codec identifier obtained through negotiation. However, when network quality deteriorates or the electronic device performs transmission with higher-definition sound quality, the electronic device needs to switch to an encoder suitable for network transmission or an encoder with higher-definition sound quality. However, when the electronic device switches an encoder, the electronic device needs to renegotiate with the audio play device on a codec capability. When the electronic device renegotiates with the audio play device on a codec capability, the electronic device pauses sending audio data to the audio play device. Consequently, audio data is interrupted and stalling occurs during codec switching performed by the electronic device and the audio play device, affecting user experience.

Therefore, this application provides a codec negotiation and switching method. The method includes: Before an electronic device and an audio play device establish a communication connection, the electronic device and the audio play device categorize one or more codecs into a plurality of categories based on a sampling rate, a quantization bit depth, a bit rate, a sound channel quantity, and other parameters. After the electronic device and the audio play device establish a communication connection, and before the electronic device sends audio data to the audio play device, the audio play device sends, to the electronic device, a category identifier corresponding to one or more decoder identifiers. The electronic device obtains a common category based on a category corresponding to one or more decoder identifiers and a category corresponding to one or more encoder identifiers. Then the electronic device selects a default codec of a category based on a condition such as a user choice, audio data play characteristics, whether an audio rendering capability of the electronic device is enabled, or an application type, to transmit audio data. When the condition such as the user choice, the audio data play characteristics, whether the audio rendering capability of the electronic device is enabled, or the application type changes, the electronic device reselects a default encoder of another category for encoding and transmission, and sends an identifier of the reselected another category to the audio play device. The audio play device performs decoding by using a default decoder of the category, and plays audio data. In this way, when the electronic device needs to switch an encoder, the electronic device does not need to renegotiate with the audio play device on a codec type. This resolves a problem that audio data is interrupted and stalling occurs during codec switching performed by the electronic device and the audio play device, and improves user experience.

This technical solution is applicable to a wireless audio play scenario in which a mobile phone is connected to a wireless headset in a point-to-point manner; is also applicable to a scenario in which a wearable device such as a tablet computer, a PC, or a smartwatch is connected to a wireless headset in a point-to-point manner; and is also applicable to a smart home scenario in which a network is established based on a mobile phone, a PC, a tablet computer, a smart television, a set-top box, a smart speaker, or a smart router, where the audio play device may be one or more of a speaker, an echo wall, and an intelligent television for networking and play.

The following describes an architecture of a wireless audio play system according to an embodiment of this application.

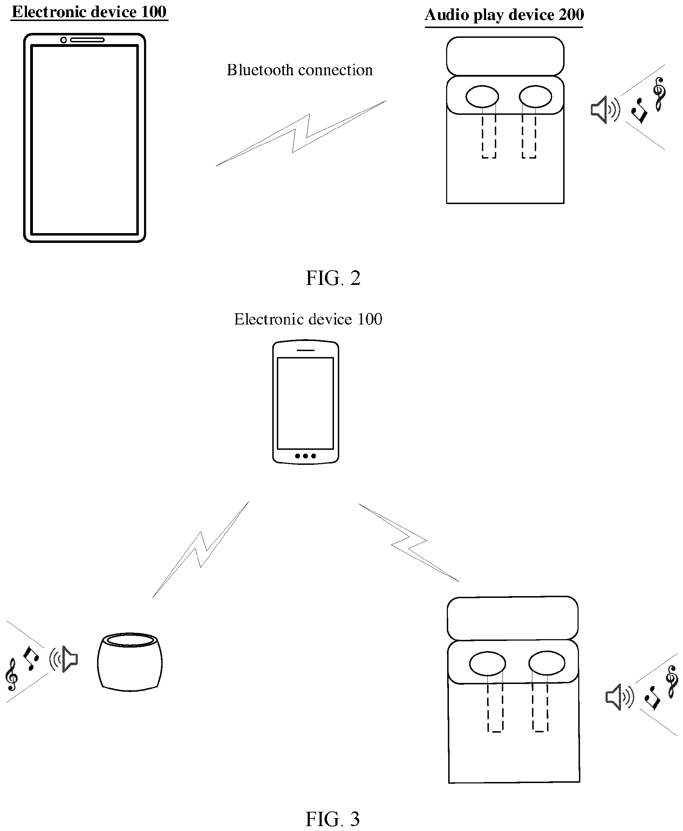

FIG. 2 is a schematic diagram of a system according to an embodiment of this application.

First, an electronic device 100 establishes a communication connection to an audio play device 200, the electronic device 100 may send audio data to the audio play device, and the audio play device plays the audio data.

The electronic device 100 may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, and/or a smart city device. A specific type of the electronic device 100 is not particularly limited in this embodiment of this application. A software system of the electronic device 100 includes but is not limited to iOS®, Android®, Harmony®, Windows®, Linux, or another operating system. Harmony® is HarmonyOS of Huawei.

The audio play device 200 is a device with an audio play capability. The audio play device may be but is not limited to a headset, a speaker, a television, an AR/VR glasses device, a wearable device such as a tablet computer, a PC, or a smartwatch, and the like.

In the following embodiments of this application, an example in which the electronic device 100 is a mobile phone and the audio play device 200 is a Bluetooth headset is used for description.

The electronic device 100 and the audio play device 200 may be connected and communicate with each other through a wireless communication technology. The wireless communication technology herein includes but is not limited to a wireless local area network (wireless local area network, WLAN) technology, Bluetooth (Bluetooth), infrared, near field communication (near field communication, NFC), ZigBee, wireless fidelity direct (wireless fidelity direct, Wi-Fi direct) (also referred to as wireless fidelity peer-to-peer (wireless fidelity peer-to-peer, Wi-Fi P2P)), and other wireless communication technologies that appear in subsequent development. For ease of description, in the following embodiments, an example in which the electronic device 100 and the audio play device 200 communicate with each other through the Bluetooth (Bluetooth) wireless communication technology is used for description.

When the audio play device 200 is connected to the electronic device 100 through the Bluetooth technology, the electronic device 100 sends time synchronization information (for example, handshake information) to the audio play device 200 for network synchronization. After networking succeeds and synchronization is completed, the audio play device 200 plays audio under the control of the electronic device 100. To be specific, the electronic device 100 sends audio data to the audio play device 200 through an established Bluetooth channel, and the audio play device 200 plays the audio data sent by the electronic device 100.

The schematic diagram of the system shown in FIG. 2 merely shows an example system. In some embodiments, the electronic device 100 may alternatively establish communication connections to a plurality of audio play devices 200. In the following embodiments of this application, an example in which the electronic device 100 establishes a connection to one audio play device 200 is used for description. It should be noted that a quantity of audio play devices 200 is not limited in this application.

The following describes an architecture of a wireless audio play system in another networking connection according to an embodiment of this application.

As shown in FIG. 3, an electronic device 100 establishes communication connections to a plurality of audio play devices 200.

The electronic device 100 may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, and/or a smart city device. A specific type of the electronic device 100 is not particularly limited in this embodiment of this application. A software system of the electronic device 100 includes but is not limited to iOS®, Android®, Harmony®, Windows®, Linux, or another operating system. Harmony® is HarmonyOS of Huawei.

The audio play device 200 is a device with an audio play capability. The audio play device may be but is not limited to a headset, a speaker, a television, an AR/VR glasses device, a wearable device such as a tablet computer, a PC, or a smartwatch, and the like.

In this embodiment of this application, an example in which the electronic device 100 is a mobile phone and the plurality of audio play devices 200 are a headset and a speaker is used for description. To be specific, the mobile phone establishes connections to both the headset and the speaker, and the mobile phone may send multimedia content (for example, audio data) to both the headset and the speaker.

When the plurality of audio play devices 200 (for example, the headset and the speaker) have no delay synchronization requirement for same audio data transmitted by the electronic device 100, connections between the electronic device 100 and the plurality of audio play devices may be considered as constituting a plurality of independent systems. To be specific, the electronic device 100 negotiates with the headset on a common codec category, and a default encoder identifier and a default decoder identifier of each category; and the electronic device 100 negotiates with the speaker on a common codec category, and a default encoder identifier and a default decoder identifier of each category. The electronic device 100 and the headset may independently select one of common codec categories supported by both the electronic device 100 and the headset to transmit audio data. The electronic device 100 and the speaker may independently select one of common codec categories supported by both the electronic device 100 and the headset to transmit audio data. The codec category selected by the electronic device 100 and the headset may be the same as or different from the codec category selected by the electronic device 100 and the speaker. In addition, codec category switching performed by the electronic device 100 and the headset and codec category switching performed by the electronic device 100 and the speaker do not affect each other. A method for selecting and switching a codec category by the electronic device 100 and the headset or by the electronic device 100 and the speaker is consistent with a method for selecting and switching a codec category by an electronic device 100 and an audio play device 200 in the following embodiments. Details are not described herein in this application.

When the plurality of audio play devices 200 (for example, the headset and the speaker) have a delay synchronization requirement for same audio data transmitted by the electronic device 100, connections between the electronic device 100 and the plurality of audio play devices are considered as a whole system. Specifically, when the electronic device 100 and the plurality of audio play devices obtain, through negotiation, codec categories supported by all of the electronic device 100 and the plurality of audio play devices, the headset sends all codec categories and a decoder identifier of each category to the electronic device 100, and the speaker sends all codec categories and a decoder identifier of each category to the electronic device 100. The electronic device 100 obtains all codec categories on the electronic device 100 and an encoder identifier of each category. Then the electronic device 100 determines a common codec category from the codec categories on the electronic device 100, the codec categories sent by the headset, and the codec categories sent by the speaker, where the common codec category is a codec category supported by all of the electronic device 100, the headset, and the speaker. A method for determining, by the electronic device 100, a codec category supported by all of the electronic device 100, the headset, and the speaker is consistent with a method for determining, by an electronic device 100 and an audio play device 200, a codec category supported by both the electronic device 100 and the audio play device 200 in the following embodiments. Details are not described herein in this application. Then the electronic device 100 determines a default encoder and a default decoder of the codec category supported by all of the electronic device 100, the headset, and the speaker. The electronic device 100 sends, to the headset and the speaker, the codec category supported by all of the electronic device 100, the headset, and the speaker, and a default encoder identifier and a default decoder identifier of each category. It should be noted that a method for selecting and switching a codec category by the electronic device 100 is consistent with a method for selecting and switching a codec category by an electronic device 100 and an audio play device 200 in the following embodiments. Details are not described herein in this application.

The following describes a codec negotiation and switching method provided in embodiments by using an example in which an electronic device 100 establishes a connection to one audio play device 200. A principle of a case in which an electronic device 100 establishes connections to a plurality of audio play devices 200 is the same as that of a case in which an electronic device 100 establishes a connection to one audio play device 200. Details are not described herein in this application.

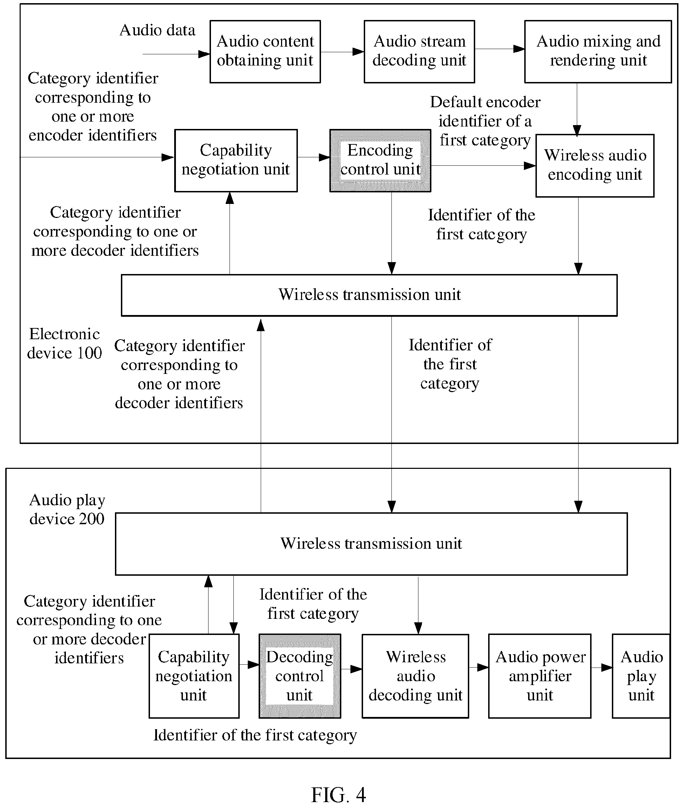

FIG. 4 is a schematic diagram of another example process of transmitting audio data between an electronic device 100 and an audio play device 200.

The electronic device 100 includes an audio data obtaining unit, an audio stream decoding unit, an audio mixing and rendering unit, a wireless audio encoding unit, a capability negotiation unit, an encoding control unit, and a wireless transmission unit.

The audio play device 200 includes a wireless transmission unit, a wireless audio decoding unit, an audio power amplifier unit, an audio play unit, a capability negotiation unit, and a decoding control unit.

Functions of the audio data obtaining unit, the audio stream decoding unit, the audio mixing and rendering unit, the wireless audio encoding unit, and the wireless transmission unit of the electronic device 100 are the same as those of the audio data obtaining unit, the audio stream decoding unit, the audio mixing and rendering unit, the wireless audio encoding unit, and the wireless transmission unit shown in FIG. 1. Details are not described herein again in this application.

Similarly, functions of the wireless transmission unit, the wireless audio decoding unit, the audio power amplifier unit, and the audio play unit of the audio play device 200 are the same as those of the wireless transmission unit, the wireless audio decoding unit, the audio power amplifier unit, and the audio play unit shown in FIG. 1. Details are not described herein again in this application.

For the electronic device 100, the capability negotiation unit is specifically configured to: obtain a codec categorization standard, identifiers of all encoders in the electronic device 100, and capabilities of all the encoders, where a capability of an encoder includes a sampling rate, a quantization bit depth, a bit rate, a sound channel quantity, and other parameter information of the encoder; and categorize all the encoders in the electronic device 100 into a plurality of categories based on the codec categorization standard and the capabilities of all the encoders in the electronic device 100. One encoder may belong to one or more categories. It should be noted that the codec categorization standard is preset on the electronic device 100.

Similarly, for the audio play device 200, the capability negotiation unit is specifically configured to: obtain a codec categorization standard, identifiers of all decoders in the audio play device 200, and capabilities of all the decoders; and categorize all the decoders in the audio play device 200 into a plurality of categories based on the codec categorization standard and the capabilities of all the decoders in the electronic device 100. One decoder may belong to one or more categories. It should be noted that the codec categorization standard is preset on the audio play device 200.

Then the audio play device 200 sends, to the wireless transmission unit of the audio play device 200 by using the capability negotiation unit, a category identifier, on the audio play device 200, that corresponds to one or more decoder identifiers. The wireless transmission unit of the audio play device 200 sends, to the wireless transmission unit of the electronic device 100, the category identifier corresponding to one or more decoder identifiers. A category corresponding to one or more decoder identifiers may be understood as that a quantity of decoder identifiers included in the category is greater than or equal to 1.

The wireless transmission unit of the electronic device 100 receives and sends, to the capability negotiation unit of the electronic device 100, the category identifier corresponding to one or more decoder identifiers.

The capability negotiation unit of the electronic device 100 receives the category identifier corresponding to one or more decoder identifiers.

The capability negotiation unit of the electronic device 100 also obtains a category identifier, on the electronic device 100, that corresponds to one or more encoder identifiers.

The capability negotiation unit of the electronic device 100 sends, to the encoding control unit of the electronic device 100, the category identifier corresponding to one or more decoder identifiers and the category identifier corresponding to one or more encoder identifiers. The encoding control unit of the electronic device 100 determines a common category identifier from the category identifier corresponding to one or more decoder identifiers and the category identifier corresponding to one or more encoder identifiers; and determines a default encoder of each common category. Herein, how the encoding control unit determines, through negotiation, a default encoder of each common category supported by the electronic device 100 and the audio play device 200 is described in detail in subsequent embodiments. This is not limited herein in this application. After the encoding control unit determines the common category and the default encoder of each common category, the encoding control unit selects an appropriate category (for example, a first category) from the common category based on an application type, audio play characteristics (a sampling rate, a quantization bit depth, or a sound channel quantity), whether an audio rendering capability of the electronic device is enabled, a network condition of a channel, and the like, and selects a default encoder of the category, to transmit audio data. How the encoding control unit selects the first category from the common category based on the application type, the audio play characteristics (the sampling rate, the quantization bit depth, or the sound channel quantity), whether the audio rendering capability of the electronic device is enabled, the network condition of the channel, and the like is described in detail in subsequent embodiments. This is not limited herein in this application.

Then the encoding negotiation unit sends an identifier of the first category to the wireless audio encoding unit, and the wireless audio encoding unit encodes audio data based on an encoder corresponding to a default encoder identifier of the first category.

In addition, the encoding negotiation unit sends the identifier of the first category to the wireless transmission unit, and the electronic device 100 sends the identifier of the first category to the wireless transmission unit of the audio play device 200 by using the wireless transmission unit. The wireless transmission unit of the audio play device 200 sends the identifier of the first category to the capability negotiation unit of the audio play device 200. The capability negotiation unit of the audio play device 200 sends the identifier of the first category to the decoding control unit of the audio play device 200. The decoding control unit of the audio play device 200 sends the identifier of the first category to the wireless audio decoding unit. The wireless audio decoding unit decodes, based on a decoder corresponding to a default decoder identifier of the first category, encoded audio data sent by the electronic device 100.

After the encoding negotiation unit selects an appropriate category (for example, the first category) from the common category and transmits audio data by using a default codec of the first category, due to a change of an application type, a change of audio play characteristics (a sampling rate, a quantization bit depth, or a sound channel quantity), enabling of the audio rendering capability of the electronic device, a change of a network condition of a channel, or other factors, the electronic device 100 reselects another category by using the encoding control unit, and notifies the decoding control unit of the audio play device 200 of an identifier of the category. The electronic device 100 transmits audio data to the audio play device 200 by using a default codec of the another category.

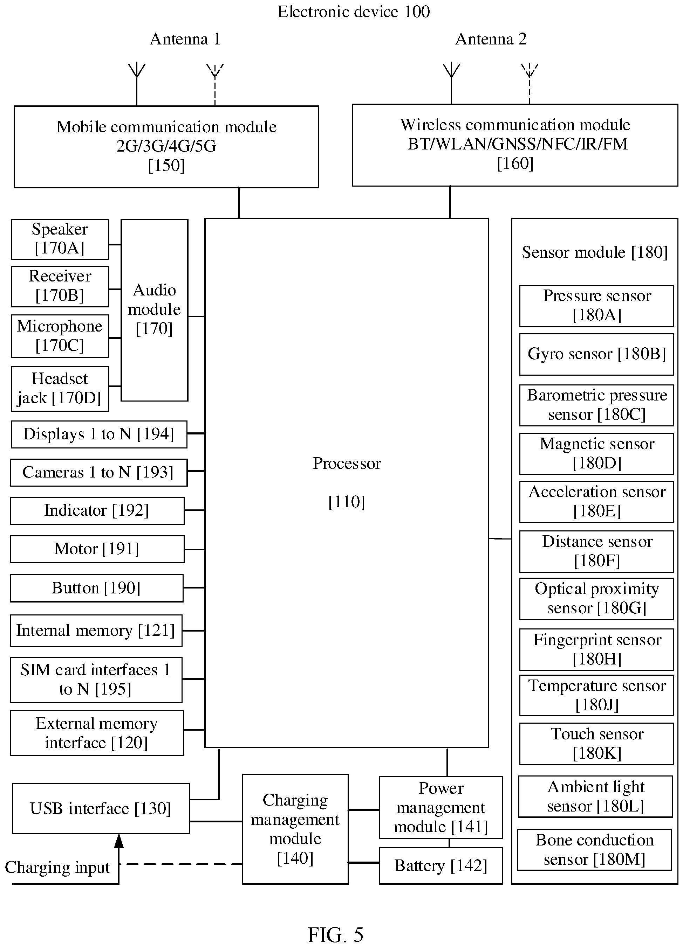

FIG. 5 is a schematic diagram of an example structure of an electronic device 100.

The following describes embodiments in detail by using an example in which the electronic device 100 is a mobile phone. It should be understood that the electronic device 100 shown in FIG. 5 is merely an example, and the electronic device 100 may include more or fewer components than those shown in FIG. 5, two or more components may be combined, or there may be different component configurations. Components shown in the figure may be implemented in hardware including one or more signal processing and/or application-specific integrated circuits, software, or a combination of hardware and software.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It can be understood that the structure shown in this embodiment of the present invention does not constitute a specific limitation on the electronic device 100. In some other embodiments of this application, the electronic device 100 may include more or fewer components than those shown in the figure, some components may be combined, some components may be split, or there may be different component layouts. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the electronic device 100. The controller may generate an operation control signal based on an instruction operation code and a time sequence signal, to control instruction reading and instruction execution.

A memory may be further disposed in the processor 110 to store instructions and data. In some embodiments, the memory in the processor 110 is a cache. The memory may store instructions or data that has been used or is cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronous serial bus, and includes a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C interfaces. For example, the processor 110 may be coupled to the touch sensor 180K through the I2C interface, so that the processor 110 communicates with the touch sensor 180K through the I2C interface, to implement a touch function of the electronic device 100.

The I2S interface may be used for audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used for audio communication, and analog signal sampling, quantization, and encoding. In some embodiments, the audio module 170 may be coupled to the wireless communication module 160 through the PCM interface. In some embodiments, the audio module 170 may alternatively transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is used for asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the electronic device 100. The processor 110 communicates with the display 194 through the DSI interface, to implement a display function of the electronic device 100.

The GPIO interface may be configured by using software. The GPIO interface may be configured to send or receive a control signal or to send or receive a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB interface 130 is an interface that conforms to a USB standard specification, and may be specifically a mini-USB interface, a micro-USB interface, a USB type-C interface, or the like. The USB interface 130 may be configured to connect to a charger to charge the electronic device 100, or may be configured to transmit data between the electronic device 100 and a peripheral device, or may be configured to connect to a headset for playing audio through the headset. The interface may alternatively be configured to connect to another electronic device such as an AR device.

It can be understood that an interface connection relationship between the modules in this embodiment of the present invention is merely an example for description, and does not constitute a limitation on a structure of the electronic device 100. In some other embodiments of this application, the electronic device 100 may alternatively use an interface connection mode different from that in the foregoing embodiment, or use a combination of a plurality of interface connection modes.

The charging management module 140 is configured to receive charging input from a charger. The charger may be a wireless charger or a wired charger. In some embodiments in which wired charging is used, the charging management module 140 may receive charging input from a wired charger through the USB interface 130. In some embodiments in which wireless charging is used, the charging management module 140 may receive wireless charging input through a wireless charging coil of the electronic device 100. The charging management module 140 may further supply power to the electronic device through the power management module 141 while charging the battery 142.

The power management module 141 is connected to the battery 142, the charging management module 140, and the processor 110. The power management module 141 receives input from the battery 142 and/or the charging management module 140, and supplies power to the processor 110, the internal memory 121, an external memory, the display 194, the camera 193, the wireless communication module 160, and the like. The power management module 141 may be further configured to monitor parameters such as a battery capacity, a battery cycle count, and a battery state of health (electric leakage and impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented by the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed to improve antenna utilization. For example, the antenna 1 may be multiplexed as a diversity antenna in a wireless local area network. In some other embodiments, an antenna may be used in combination with a tuning switch.

The mobile communication module 150 may provide a solution applied to the electronic device 100 for wireless communication such as 2G/3G/4G/5G. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation.

The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium- or high-frequency signal. The demodulator is configured to demodulate a received electromagnetic wave signal into a low-frequency baseband signal. Then the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 170A, the receiver 170B, and the like), or displays an image or a video on the display 194. In some embodiments, the modem processor may be an independent device. In some other embodiments, the modem processor may be independent of the processor 110, and is disposed in a same device as the mobile communication module 150 or another functional module.

The wireless communication module 160 may provide a solution applied to the electronic device 100 for wireless communication such as a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, or an infrared (infrared, IR) technology. The wireless communication module 160 may be one or more devices integrating at least one communication processor module. The wireless communication module 160 receives an electromagnetic wave through the antenna 2, performs frequency modulation and filtering on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the electronic device 100, the antenna 1 is coupled to the mobile communication module 150, and the antenna 2 is coupled to the wireless communication module 160, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite-based augmentation system (satellite-based augmentation system, SBAS).

The electronic device 100 implements a display function through the GPU, the display 194, the application processor, and the like. The GPU is a microprocessor for image processing, and is connected to the display 194 and the application processor. The GPU is configured to perform mathematical and geometric computation, and render an image. The processor 110 may include one or more GPUs that execute program instructions to generate or change display information.

The display 194 is configured to display an image, a video, or the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The electronic device 100 may implement a photographing function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP for converting the electrical signal into a digital image signal. The ISP outputs the digital image signal to the DSP for processing. The DSP converts the digital image signal into an image signal in a standard format, for example, RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transform on frequency energy.

The video codec is configured to compress or decompress a digital video. The electronic device 100 may support one or more types of video codecs. In this way, the electronic device 100 may play or record videos in a plurality of encoding formats, for example, moving picture experts group (moving picture experts group, MPEG)-1, MPEG-2, MPEG-3, and MPEG-4.

The NPU is a neural-network (neural-network, NN) computing processor. The NPU quickly processes input information with reference to a structure of a biological neural network, for example, a transfer mode between human brain neurons, and may further continuously perform self-learning. Applications such as intelligent cognition of the electronic device 100, for example, image recognition, facial recognition, speech recognition, and text understanding, may be implemented through the NPU.

The external memory interface 120 may be connected to an external storage card, for example, a microSD card, to extend a storage capability of the electronic device 100. The external storage card communicates with the processor 110 through the external memory interface 120, to implement a data storage function. For example, files such as music and videos are stored in the external storage card.

The internal memory 121 may be configured to store computer-executable program code. The executable program code includes instructions. The processor 110 implements various function applications and data processing of the electronic device 100 by running the instructions stored in the internal memory 121. The internal memory 121 may include a program storage area and a data storage area. The program storage area may store an operating system, an application required by at least one function (for example, a sound playing function or an image playing function), and the like. The data storage area may store data (such as audio data and an address book) and the like that are created during use of the electronic device 100. In addition, the internal memory 121 may include a high-speed random access memory, or may include a nonvolatile memory, for example, at least one magnetic disk storage device, a flash memory, or a universal flash storage (universal flash storage, UFS).

The electronic device 100 may implement an audio function, for example, music play and recording, through the audio module 170, the speaker 170A, the receiver 170B, the microphone 170C, the headset jack 170D, the application processor, and the like.

The audio module 170 is configured to convert digital audio information into analog audio signal output, and is also configured to convert analog audio input into a digital audio signal. The audio module 170 may be further configured to encode and decode an audio signal. In some embodiments, the audio module 170 may be disposed in the processor 110, or some functional modules of the audio module 170 are disposed in the processor 110.

The speaker 170A, also referred to as a "loudspeaker", is configured to convert an electrical audio signal into a sound signal. The electronic device 100 may listen to music or answer a hands-free call through the speaker 170A.

The receiver 170B, also referred to as an "earpiece", is configured to convert an electrical audio signal into a sound signal. When a call is answered or audio information is listened to by using the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to capture a sound signal and further implement a noise reduction function. In some other embodiments, three, four, or more microphones 170C may alternatively be disposed in the electronic device 100, to capture a sound signal, implement noise reduction, and recognize a sound source, to implement a directional recording function and the like.

The headset jack 170D is used for connecting a wired headset. The headset jack 170D may be the USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and may convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on a capacitance change. When a touch operation is performed on the display 194, the electronic device 100 detects intensity of the touch operation based on the pressure sensor 180A. The electronic device 100 may calculate a touch location based on a detection signal of the pressure sensor 180A. In some embodiments, touch operations that are performed at a same touch location but have different touch operation intensity may correspond to different operation instructions. For example, when a touch operation whose touch operation intensity is less than a first pressure threshold is performed on a Messages icon, an instruction for viewing an SMS message is executed. When a touch operation whose touch operation intensity is greater than or equal to the first pressure threshold is performed on the Messages icon, an instruction for creating a new SMS message is executed.

The gyro sensor 180B may be configured to determine a motion attitude of the electronic device 100. In some embodiments, an angular velocity of the electronic device 100 around three axes (that is, axes x, y, and z) may be determined by using the gyro sensor 180B. The gyro sensor 180B may be configured to implement image stabilization during photographing. For example, when the shutter is pressed, the gyro sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyro sensor 180B may be further used in a navigation scenario and a somatic game scenario.

The barometric pressure sensor 180C is configured to measure barometric pressure. In some embodiments, the electronic device 100 calculates an altitude based on a value of the barometric pressure measured by the barometric pressure sensor 180C, to assist in positioning and navigation.

The magnetic sensor 180D includes a Hall effect sensor. The electronic device 100 may detect opening and closing of a flip cover by using the magnetic sensor 180D. In some embodiments, when the electronic device 100 is a clamshell phone, the electronic device 100 may detect opening and closing of a flip cover based on the magnetic sensor 180D. Further, a feature such as automatic unlocking upon opening of the flip cover is set based on a detected opening or closing state of the flip cover.

The acceleration sensor 180E may detect accelerations in various directions (usually on three axes) of the electronic device 100, may detect a magnitude and a direction of gravity when the electronic device 100 is still, and may be further configured to recognize an attitude of the electronic device and used in applications such as landscape/portrait mode switching and a pedometer.

The distance sensor 180F is configured to measure a distance. The electronic device 100 may measure a distance by using infrared or laser. In some embodiments, in a photographing scenario, the electronic device 100 may measure a distance by using the distance sensor 180F, to implement quick focusing.

The optical proximity sensor 180G may include, for example, a light-emitting diode (LED) and an optical detector, for example, a photodiode. The light-emitting diode may be an infrared light-emitting diode. The electronic device 100 emits infrared light by using the light-emitting diode. The electronic device 100 detects infrared reflected light from a nearby object by using the photodiode. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that a user holds the electronic device 100 close to an ear for a call, to automatically turn off a screen for power saving. The optical proximity sensor 180G may also be used in a smart cover mode or a pocket mode for automatic screen unlocking or locking.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the electronic device 100 is in a pocket, to avoid an accidental touch.

The fingerprint sensor 180H is configured to capture a fingerprint. The electronic device 100 may use a feature of the captured fingerprint to implement fingerprint-based unlocking, application lock access, fingerprint-based photographing, fingerprint-based call answering, and the like.

The temperature sensor 180J is configured to detect temperature. In some embodiments, the electronic device 100 executes a temperature processing policy by using the temperature detected by the temperature sensor 180J. For example, when the temperature reported by the temperature sensor 180J exceeds a threshold, the electronic device 100 degrades performance of a processor near the temperature sensor 180J, to reduce power consumption and implement thermal protection. In some other embodiments, when the temperature is less than another threshold, the electronic device 100 heats the battery 142 to prevent the electronic device 100 from being shut down abnormally due to low temperature. In some other embodiments, when the temperature is less than still another threshold, the electronic device 100 boosts an output voltage of the battery 142 to avoid abnormal shutdown due to low temperature.

The touch sensor 180K is also referred to as a "touch panel". The touch sensor 180K may be disposed on the display 194, and the touch sensor 180K and the display 194 constitute a touchscreen, which is also referred to as a "touch control screen". The touch sensor 180K is configured to detect a touch operation performed on or near the touch sensor. The touch sensor may transmit the detected touch operation to the application processor to determine a type of a touch event. Visual output related to the touch operation may be provided by using the display 194. In some other embodiments, the touch sensor 180K may alternatively be disposed on a surface of the electronic device 100 at a location different from a location of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may alternatively be disposed in a headset, to obtain a bone conduction headset. The audio module 170 may obtain a speech signal through parsing based on the vibration signal, obtained by the bone conduction sensor 180M, of the vibration bone of the vocal-cord part, to implement a speech function. The application processor may parse heart rate information based on the blood pressure beating signal obtained by the bone conduction sensor 180M, to implement a heart rate detection function.

The button 190 includes a power button, a volume button, and the like. The button 190 may be a mechanical button or a touch button. The electronic device 100 may receive input on the button, and generate button signal input related to user settings and function control of the electronic device 100.

The motor 191 may generate a vibration prompt. The motor 191 may be configured to provide an incoming call vibration prompt or a touch vibration feedback. For example, touch operations performed on different applications (for example, photographing and audio play) may correspond to different vibration feedback effect. The motor 191 may also correspond to different vibration feedback effect for touch operations performed on different regions of the display 194. Different application scenarios (for example, a time reminder, information receiving, an alarm clock, and a game) may also correspond to different vibration feedback effect. Touch vibration feedback effect may be further customized.

The indicator 192 may be an indicator light, and may be configured to indicate a charging status and a battery level change, or may be configured to indicate a message, a missed call, a notification, and the like.

The SIM card interface 195 is used for connecting a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted in a same SIM card interface 195 at the same time. The plurality of cards may be of a same type or different types. The SIM card interface 195 is also compatible with different types of SIM cards. The SIM card interface 195 is also compatible with an external storage card. The electronic device 100 interacts with a network through the SIM card, to implement functions such as calling and data communication. In some embodiments, the electronic device 100 uses an eSIM, that is, an embedded SIM card. The eSIM card may be embedded into the electronic device 100, and cannot be separated from the electronic device 100.

A software system of the electronic device 100 may use a hierarchical architecture, an event-driven architecture, a microkernel architecture, a micro service architecture, or a cloud architecture. In embodiments of the present invention, an Android system with a hierarchical architecture is used as an example to illustrate a software structure of the electronic device 100.

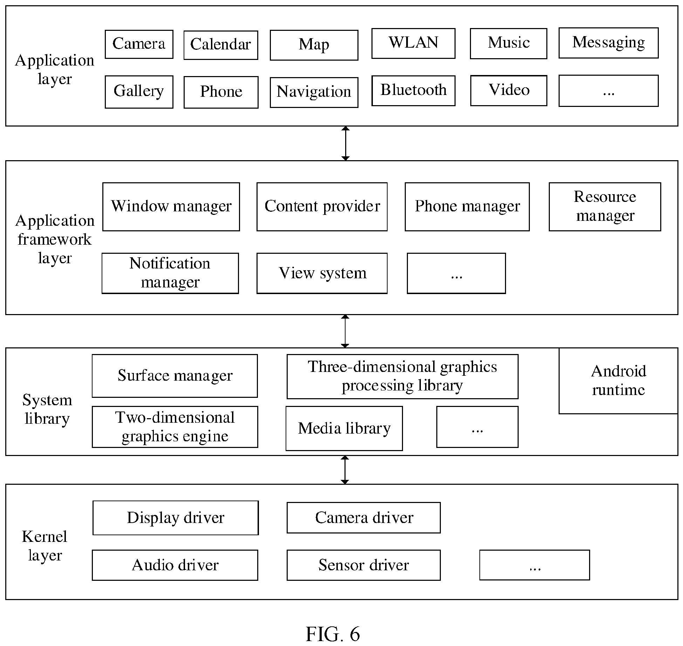

FIG. 6 is a block diagram of a software structure of an electronic device 100 (for example, a mobile phone) according to an embodiment of the present invention.

In a hierarchical architecture, software is divided into several layers, and each layer has a clear role and task. The layers communicate with each other through a software interface. In some embodiments, an Android system is divided into four layers: an application layer, an application framework layer, an Android runtime (Android runtime) and system library, and a kernel layer from top to bottom.

The application layer may include a series of application packages.

As shown in FIG. 6, the application packages may include applications such as Camera, Gallery, Calendar, Phone, Map, Navigation, WLAN, Bluetooth, Music, Videos, and Messaging.

The application framework layer provides an application programming interface (application programming interface, API) and a programming framework for an application at the application layer. The application framework layer includes some predefined functions.

As shown in FIG. 6, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

The content provider is configured to store and obtain data, and enable the data to be accessed by an application. The data may include a video, an image, audio, calls that are made and answered, a browsing history, a bookmark, an address book, and the like.

The view system includes visual controls, such as a control for displaying text and a control for displaying a picture. The view system may be configured to construct an application. A display interface may include one or more views. For example, a display interface including an SMS message notification icon may include a text display view and a picture display view.

The phone manager is configured to provide a communication function for the electronic device 100, for example, management of a call status (including answering, hanging up, or the like).

The resource manager provides various resources such as a localized character string, an icon, a picture, a layout file, and a video file for an application.

The notification manager enables an application to display notification information in a status bar, and may be configured to convey a notification message. The notification manager may automatically disappear after a short pause without user interaction. For example, the notification manager is configured to indicate download completion or provide a message notification. The notification manager may alternatively be a notification that appears in a top status bar of the system in a form of a graph or scroll bar text, for example, a notification for an application running in the background, or may be a notification that appears on the screen in a form of a dialog window. For example, text information is displayed in the status bar, a prompt tone is played, the electronic device vibrates, or an indicator blinks.

The Android runtime includes a kernel library and a virtual machine. The Android runtime schedules and manages the Android system.

The kernel library includes two parts: a function that needs to be called in Java language and a kernel library of Android.

The application layer and the application framework layer run on the virtual machine. The virtual machine executes Java files at the application layer and the application framework layer as binary files. The virtual machine is configured to perform functions such as object lifecycle management, stack management, thread management, security and exception management, and garbage collection.

The system library may include a plurality of functional modules, for example, a surface manager (surface manager), a media library (Media Libraries), a three-dimensional graphics processing library (for example, OpenGL ES), and a 2D graphics engine (for example, SGL).

The surface manager is configured to manage a display subsystem, and provide fusion of 2D and 3D layers for a plurality of applications.

The media library supports play and recording of a plurality of commonly used audio and video formats, static image files, and the like. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The following describes an example operating process of software and hardware of the electronic device 100 with reference to a photographing scenario.

When the touch sensor 180K receives a touch operation, a corresponding hardware interrupt is sent to the kernel layer. The kernel layer processes the touch operation into a raw input event (including information such as touch coordinates and a timestamp of the touch operation). The raw input event is stored at the kernel layer. The application framework layer obtains the raw input event from the kernel layer, and identifies a control corresponding to the input event. For example, the touch operation is a tap operation, and a control corresponding to the tap operation is a control of an icon of a camera application. The camera application invokes an interface of the application framework layer to start the camera application, and further invokes the kernel layer to start the camera driver, to capture a static image or a video by using the camera 193.

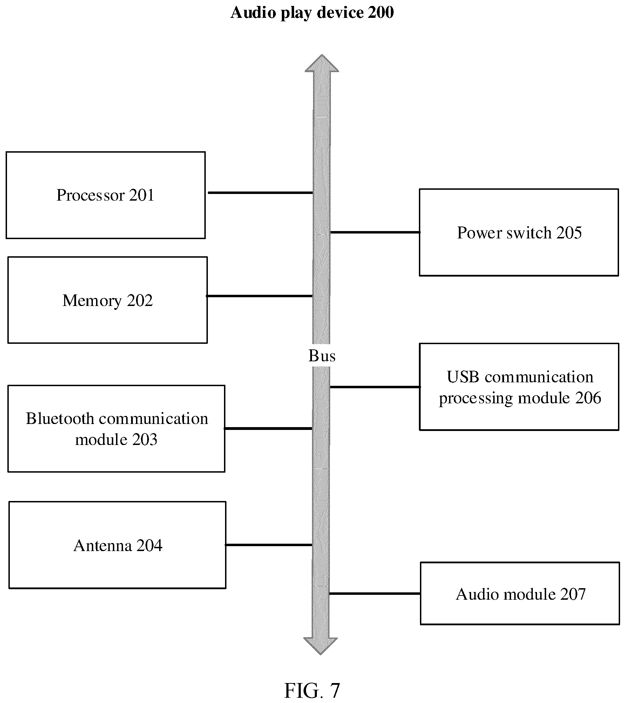

FIG. 7 is a schematic diagram of an example hardware structure of an audio play device 200.

FIG. 7 is a schematic diagram of an example structure of an audio play device 200 (for example, a Bluetooth device) according to an embodiment of this application.

The following describes embodiments in detail by using an example in which the audio play device 200 is a Bluetooth device. It should be understood that the audio play device 200 shown in FIG. 7 is merely an example, and the audio play device 200 may include more or fewer components than those shown in FIG. 7, two or more components may be combined, or there may be different component configurations. Components shown in the figure may be implemented in hardware including one or more signal processing and/or application-specific integrated circuits, software, or a combination of hardware and software.

As shown in FIG. 7, the audio play device 200 may include a processor 201, a memory 202, a Bluetooth communication module 203, an antenna 204, a power switch 205, a USB communication processing module 206, and an audio module 207.

The processor 201 may be configured to read and execute computer-readable instructions. During specific implementation, the processor 201 may mainly include a controller, an arithmetic unit, and a register. The controller mainly decodes instructions and sends a control signal for an operation corresponding to the instructions. The arithmetic unit mainly stores a register operand, an intermediate operation result, and the like that are temporarily stored during instruction execution. During specific implementation, a hardware architecture of the processor 201 may be an application-specific integrated circuit (ASIC) architecture, an MIPS architecture, an ARM architecture, an NP architecture, or the like.

In some embodiments, the processor 201 may be configured to parse a signal received by the Bluetooth communication module 203, for example, a pairing mode modification request sent by the electronic device 100. The processor 201 may be configured to perform a corresponding processing operation based on a parsing result, for example, generate a pairing mode modification response.

The memory 202 is coupled to the processor 201, and is configured to store various software programs and/or a plurality of groups of instructions. During specific implementation, the memory 202 may include a high-speed random access memory, and may also include a nonvolatile memory, for example, one or more magnetic disk storage devices, a flash storage device, or another nonvolatile solid-state storage device. The memory 202 may store an operating system, for example, an embedded operating system such as uCOS, VxWorks, or RTLinux. The memory 202 may further store a communication program. The communication program may be used to communicate with the electronic device 100, one or more servers, or another device.

The Bluetooth communication module 203 may include a classic Bluetooth (BT) module and a Bluetooth low energy (BLE) module.

In some embodiments, the Bluetooth communication module 203 may obtain, through listening, a signal, for example, a detection request or a scanning signal, transmitted by another device (for example, the electronic device 100), and may send a response signal, a scanning response, or the like, so that the another device (for example, the electronic device 100) can discover the audio play device 200, and the audio play device 200 establishes a wireless communication connection to the another device (for example, the electronic device 100), and communicates with the another device (for example, the electronic device 100) through Bluetooth.

In some other embodiments, the Bluetooth communication module 203 may alternatively transmit a signal, for example, broadcast a BLE signal, so that another device (for example, the electronic device 100) can discover the audio play device 200, and the audio play device 200 establishes a wireless communication connection to the another device (for example, the electronic device 100), and communicates with the another device (for example, the electronic device 100) through Bluetooth.

A wireless communication function of the audio play device 200 may be implemented by the antenna 204, the Bluetooth communication module 203, a modem processor, and the like.

The antenna 204 may be configured to transmit and receive an electromagnetic wave signal. Each antenna in the audio play device 200 may be configured to cover one or more communication frequency bands.

In some embodiments, the Bluetooth communication module 203 may include one or more antennas.

The power switch 205 may be configured to control a power supply to supply power to the audio play device 200.

The USB communication processing module 206 may be configured to communicate with another device through a USB interface (not shown). In some embodiments, the audio play device 200 may alternatively not include the USB communication processing module 206.

The audio module 207 may be configured to output an audio signal through an audio output interface, so that the audio play device 200 can support audio play. The audio module may be further configured to receive audio data through an audio input interface. The audio play device 200 may be a media play device such as a Bluetooth headset.

In some embodiments, the audio play device 200 may further include a display (not shown). The display may be configured to display an image, prompt information, and the like. The display may be a liquid crystal display (liquid crystal display, LCD), an organic light-emitting diode (organic light-emitting diode, OLED) display, an active-matrix organic light-emitting diode (active-matrix organic light-emitting diode, AMOLED) display, a flexible light-emitting diode (flexible light-emitting diode, FLED) display, a quantum dot light-emitting diode (quantum dot light-emitting diode, QLED) display, or the like.

In some embodiments, the audio play device 200 may further include a serial interface such as an RS-232 interface. The serial interface may be connected to another device, for example, an audio loudspeaker device such as a speaker, so that the audio play device 200 and the audio loudspeaker device cooperatively play audio or a video.

It can be understood that the structure shown in FIG. 7 does not constitute a specific limitation on the audio play device 200. In some other embodiments of this application, the audio play device 200 may include more or fewer components than those shown in the figure, some components may be combined, some components may be split, or there may be different component layouts. The components shown in the figure may be implemented by using hardware, software, or a combination of software and hardware.

Before the electronic device 100 establishes a communication connection to the audio play device 200, the electronic device 100 categorizes all encoders in the electronic device 100 into a plurality of categories based on a codec categorization standard, and the audio play device 200 categorizes all decoders in the audio play device 200 into a plurality of categories.

In some embodiments, the electronic device 100 and the audio play device 200 may alternatively categorize one or more codecs in the electronic device 100 and the audio play device 200 into a plurality of categories after establishing a communication connection. Time at which the electronic device 100 and the audio play device 200 categorize the one or more codecs is not limited in this application.

The following describes in detail the codec categorization standard and how the electronic device 100 and the audio play device 200 categorize codecs in the electronic device 100 and the audio play device 200 into a plurality of categories based on the codec categorization standard.

Codec categorization standard

The codec categorization standard may be obtained based on one or a combination of two or more of the following parameters: a sampling rate, a quantization bit depth, a bit rate, a sound channel quantity, and the like. For example, the codec categorization standard may be obtained based on one of the following parameters: the sampling rate, the quantization bit depth, the bit rate, the sound channel quantity, and the like, for example, the parameter may be the sampling rate; or the codec categorization standard may be obtained based on two parameters, for example, the two parameters may be the sampling rate and the quantization bit depth; or the codec categorization standard may be obtained based on three parameters, for example, the three parameters may be the sampling rate, the quantization bit depth, and the bit rate; or the codec categorization standard may be obtained based on four parameters, for example, the four parameters may be the sampling rate, the quantization bit depth, the bit rate, and the sound channel quantity. A type of a parameter used in the codec categorization standard is not limited in this application. Another parameter, for example, an audio format, may alternatively be used in the codec categorization standard. This is not limited herein in this application. For example, the codec categorization standard is preset on the electronic device 100 and the audio play device 200.

The sampling rate is a quantity of times of sampling a sound signal in unit time (for example, 1 second). A higher sampling rate indicates a higher degree of restoration of sound and higher sound quality.

The quantization bit depth is quantization accuracy, and determines a dynamic range of digital audio. During frequency sampling, a higher quantization bit depth may provide more possible amplitude values, to obtain a larger vibration range, a higher signal-to-noise ratio, and higher fidelity.

The bit rate indicates a quantity of bits transmitted in unit time. A unit is bit per second or gigabit per second. A higher bit rate indicates a larger amount of audio data transmitted per second and higher-definition sound quality.

The sound channel quantity is a quantity of speakers capable of producing different sound that are supported. The sound channel quantity includes mono, dual, 2.1 channel, 5.1 channel, 7.1 channel, and the like.

Currently, a format of audio data is usually a PCM data format. The PCM (pulse code modulation, pulse code modulation) data format is an uncompressed audio data stream, and is standard digital audio data obtained by converting an analog signal through sampling, quantization, and encoding. The format of audio data further includes an MP3 data format, an MPEG data format, an MPEG-4 data format, a WAVE data format, a CD data format, and the like.

As described above, in the codec categorization standard, codecs are categorized based on a value range of one or more parameters.

For example, when the codec categorization standard is obtained based on the sampling rate, the sampling rate may be divided into a plurality of segments based on a minimum sampling rate and a maximum sampling rate of a codec that is frequently used in a device, and values of sampling rates of the segments are different. Specifically, when a value of a sampling rate of a codec is greater than or equal to a first sampling rate, the codec is categorized into a category 1; when a value of a sampling rate of a codec is less than the first sampling rate and greater than or equal to a second sampling rate, the codec is categorized into a category 2; and when a value of a sampling rate of a codec is less than the second sampling rate, the codec is categorized into a category 3. The first sampling rate is greater than the second sampling rate.

For example, when the codec categorization standard is obtained based on the sampling rate and the bit rate, the sampling rate and the bit rate may be divided into a plurality of segments based on a minimum sampling rate, a maximum sampling rate, a minimum bit rate, and a maximum bit rate of a codec that is frequently used in a device. Specifically, when a value of a sampling rate of a codec is greater than or equal to a first sampling rate, and a value of a bit rate of the codec is greater than or equal to a first bit rate, the codec is categorized into a category 1; when a value of a sampling rate of a codec is less than the first sampling rate and greater than or equal to a second sampling rate, and a value of a bit rate of the codec is less than the first bit rate and greater than or equal to a second bit rate, the codec is categorized into a category 2; and when a value of a sampling rate of a codec is less than the second sampling rate, and a value of a bit rate of the codec is less than the second bit rate, the codec is categorized into a category 3. The first sampling rate is greater than the second sampling rate, and the first bit rate is greater than the second bit rate.

For example, when the codec categorization standard is obtained based on the sampling rate, the bit rate, and the quantization bit depth, the sampling rate, the bit rate, and the quantization bit depth may be divided into a plurality of segments based on a minimum sampling rate, a maximum sampling rate, a minimum bit rate, a maximum bit rate, a minimum quantization bit depth, and a maximum quantization bit depth of a codec that is frequently used in a device. Specifically, when a value of a sampling rate of a codec is greater than or equal to a first sampling rate, a value of a bit rate of the codec is greater than or equal to a first bit rate, and a value of a quantization bit depth of the codec is greater than or equal to a first quantization bit depth, the codec is categorized into a category 1; when a value of a sampling rate of a codec is less than the first sampling rate and greater than or equal to a second sampling rate, a value of a bit rate of the codec is less than the first bit rate and greater than or equal to a second bit rate, and a value of a quantization bit depth of the codec is less than the first quantization bit depth and greater than or equal to a second quantization bit depth, the codec is categorized into a category 2; and when a value of a sampling rate of a codec is less than the second sampling rate, a value of a bit rate of the codec is less than the second bit rate, and a value of a quantization bit depth of the codec is less than the second quantization bit depth, the codec is categorized into a category 3. The first sampling rate is greater than the second sampling rate, the first bit rate is greater than the second bit rate, and the first quantization bit depth is greater than the second quantization bit depth.

For example, when the codec categorization standard is obtained based on the sampling rate, the bit rate, the quantization bit depth, and the sound channel quantity, the sampling rate, the bit rate, the quantization bit depth, and the sound channel quantity may be divided into a plurality of segments based on a minimum sampling rate, a maximum sampling rate, a minimum bit rate, a maximum bit rate, a minimum quantization bit depth, a maximum quantization bit depth, and a commonly used minimum sound channel quantity (for example, dual) of a codec that is frequently used in a device. Specifically, when a value of a sampling rate of a codec is greater than or equal to a first sampling rate, a value of a bit rate of the codec is greater than or equal to a first bit rate, a value of a quantization bit depth of the codec is greater than or equal to a first quantization bit depth, and a value of a sound channel quantity of the codec is greater than or equal to a first sound channel quantity, the codec is categorized into a category 1; when a value of a sampling rate of a codec is less than the first sampling rate and greater than or equal to a second sampling rate, a value of a bit rate of the codec is less than the first bit rate and greater than or equal to a second bit rate, a value of a quantization bit depth of the codec is less than the first quantization bit depth and greater than or equal to a second quantization bit depth, and a value of a sound channel quantity of the codec is greater than or equal to the first sound channel quantity, the codec is categorized into a category 2; and when a value of a sampling rate of a codec is less than the second sampling rate, a value of a bit rate of the codec is less than the second bit rate, a value of a quantization bit depth of the codec is less than the second quantization bit depth, and a value of a sound channel quantity of the codec is greater than or equal to the first sound channel quantity, the codec is categorized into a category 3. The first sampling rate is greater than the second sampling rate, the first bit rate is greater than the second bit rate, and the first quantization bit depth is greater than the second quantization bit depth.

The foregoing shows only some codec categorization standards as examples. During specific implementation, the codec categorization standard may be set according to different requirements. Examples are not listed one by one herein in this application.

The following describes how the electronic device 100 and the audio play device 200 categorize encoders in the electronic device 100 and decoders in the audio play device 200 into a plurality of categories based on the codec categorization standard.

After obtaining the codec categorization standard, the electronic device 100 categorizes all encoders into a plurality of categories, and the audio play device 200 categorizes all decoders into a plurality of categories.

Specifically, for the electronic device 100, the electronic device 100 obtains the codec categorization standard. In the codec categorization standard, codecs may be categorized into a plurality of categories based on information about one or more parameters of the codecs.

Then the electronic device 100 obtains values of one or more parameters corresponding to all encoders in the electronic device 100. When a value of one or more parameters corresponding to an encoder in the electronic device 100 falls within a value range of one or more parameters used in the codec categorization standard, the electronic device 100 categorizes the encoder into one or more categories. By analogy, the electronic device 100 categorizes all encoders into one or more categories according to the foregoing method. It should be noted that one encoder may be categorized into a plurality of categories. The electronic device 100 records an encoder identifier corresponding to each category. For example, a category obtained based on the codec categorization standard is a category 1, and an encoder identifier corresponding to the category 1 includes an encoder 1 and an encoder 2.

A method for categorizing, by the audio play device 200, all decoders into a plurality of categories is consistent with the method for categorizing, by the electronic device 100, all encoders into a plurality of categories. Details are not described herein again in this application. The audio play device 200 records a decoder identifier corresponding to each category. For example, a category obtained based on the codec categorization standard is a category 1, and a decoder identifier corresponding to the category 1 includes a decoder 1 and a decoder 2.

With reference to specific examples, the following describes the codec categorization standard and specific implementations of categorizing, by the electronic device 100, encoders into a plurality of categories and categorizing, by the audio play device 200, decoders into a plurality of categories.

In an optional implementation, the codec categorization standard may be obtained based on a sampling rate.

Table 1 shows an example codec categorization standard obtained based on a sampling rate.

Table 1

| Category based on the codec categorization standard | Categorization condition based on the sampling rate |
|---|---|
| Category 1 | A value of one or more sampling rates supported by a codec is greater than or equal to a first sampling rate. |
| Category 2 | A value of one or more sampling rates supported by a codec is less than the first sampling rate and greater than or equal to a second sampling rate. |
| Category 3 | A value of one or more sampling rates supported by a codec is less than the second sampling rate. |

As shown in Table 1, when a value of one or more sampling rates supported by a codec is greater than or equal to the first sampling rate, the codec belongs to the category 1; when a value of one or more sampling rates supported by a codec is less than the first sampling rate and greater than or equal to the second sampling rate, the codec belongs to the category 2; and when a value of one or more sampling rates supported by a codec is less than the second sampling rate, the codec belongs to the category 3. The second sampling rate is less than the first sampling rate.

During specific implementation, first, the electronic device 100 obtains values of sampling rates supported by all encoders in the electronic device 100. Based on the values of the sampling rates supported by all the encoders in the electronic device 100, the electronic device 100 categorizes the encoders into the categories shown in Table 1. It should be noted that one encoder may be categorized into a plurality of categories.

Table 2 shows an example in which the electronic device 100 and the audio play device 200 categorize codecs in the electronic device 100 and the audio play device 200 into a plurality of categories based on a sampling rate.

**Table 2**

| Category based on the codec categorization standard | Categorization condition based on the sampling rate | Encoder identifier on the electronic device 100 | Decoder identifier on the audio play device 200 |
|---|---|---|---|
| Category 1 | A value of one or more sampling rates supported by a codec is greater than or equal to 48 kHz. | Encoder 1 | Decoder 1 |
| Category 2 | A value of one or more sampling rates supported by a codec is less than 48 kHz and greater than or equal to 24 kHz. | Encoder 1 Encoder 2 | Decoder 1 Decoder 2 |
| Category 3 | A value of one or more sampling rates supported by a codec is less than 24 kHz. | Encoder 1 Encoder 3 | Decoder 1 Decoder 3 |

It can be understood that the encoder identifiers and the decoder identifiers shown in this embodiment of this application may alternatively be represented in binary. For example, the encoder 1 may alternatively be represented as e001, the encoder 2 may alternatively be represented as e010, the encoder 3 may alternatively be represented as e011, the decoder 1 may alternatively be represented as d001, the decoder 2 may alternatively be represented as d010, and the decoder 3 may alternatively be represented as d011.

As shown in Table 2, for example, the first sampling rate is 48 kHz, and the second sampling rate is 24 kHz. In this case, an encoder that is in the electronic device 100 and that is categorized into the category 1 may be referred to as an encoder with high-definition sound quality, an encoder that is in the electronic device 100 and that is categorized into the category 2 may be referred to as an encoder with standard-definition sound quality, and an encoder that is in the electronic device 100 and that is categorized into the category 3 may be referred to as an encoder with basic sound quality. In addition, a decoder that is in the audio play device 200 and that is categorized into the category 1 may be referred to as a decoder with high-definition sound quality, a decoder that is in the audio play device 200 and that is categorized into the category 2 may be referred to as a decoder with standard-definition sound quality, and a decoder that is in the audio play device 200 and that is categorized into the category 3 may be referred to as a decoder with basic sound quality.

For example, the electronic device 100 includes three encoders: an encoder 1, an encoder 2, and an encoder 3. Values of sampling rates supported by the encoder 1 are 8 kHz, 16 kHz, 24 kHz, 32 kHz, 48 kHz, and 96 kHz. Values of sampling rates supported by the encoder 2 are 32 kHz and 48 kHz. Values of sampling rates supported by the encoder 3 are 8 kHz and 16 Hz. Based on the codec categorization standard shown in Table 2, the encoder 1 belongs to the category 1, the encoder 1 also belongs to the category 2 and the category 3, the encoder 2 belongs to the category 2, and the encoder 3 belongs to the category 3.

Similarly, for the audio play device 200, the audio play device 200 also includes a decoder 1, a decoder 2, and a decoder 3. The audio play device 200 obtains values of sampling rates supported by all decoders in the audio play device 200. Based on the values of the sampling rates supported by all the decoders in the audio play device 200, the audio play device 200 categorizes the decoders into the categories obtained based on the codec categorization standard shown in Table 2. A method for categorizing, by the audio play device 200 based on the values of the sampling rates supported by all the decoders in the audio play device 200, the decoders into the categories obtained based on the codec categorization standard shown in Table 1 is the same as the method for categorizing, by the electronic device 100 based on the values of the sampling rates supported by all the encoders in the electronic device 100, the encoders into the categories obtained based on the codec categorization standard shown in Table 1. Details are not described herein again in this application.

In an optional implementation, the codec categorization standard may be obtained based on a sampling rate, a quantization bit depth, a bit rate, and a sound channel quantity.

Table 3 shows an example codec categorization standard obtained based on a sampling rate, a quantization bit depth, a bit rate, and a sound channel quantity.

**Table 3**

| Category based on the codec categorization standard | Categorization condition based on the sampling rate, the quantization bit depth, the bit rate, and the sound channel quantity |
|---|---|
| Category 1 | A value of one or more sampling rates supported by a codec is greater than or equal to a first sampling rate, a value of one or more quantization bit depths supported by the codec is greater than or equal to a first quantization bit depth, a value of one or more bit rates supported by the codec is greater than or equal to a first bit rate, and a sound channel quantity supported by the codec is greater than or equal to a first sound channel quantity. |
| Category 2 | A value of one or more sampling rates supported by a codec is less than the first sampling rate and greater than or equal to a second sampling rate, a value of one or more quantization bit depths supported by the codec is less than the first quantization bit depth and greater than or equal to a second quantization bit depth, a value of one or more bit rates supported by the codec is less than the first bit rate and greater than or equal to a second bit rate, and a sound channel quantity supported by the codec is greater than or equal to the first sound channel quantity. |
| Category 3 | A value of one or more sampling rates supported by a codec is less than the second sampling rate, a value of one or more quantization bit depths supported by the codec is less than the second quantization bit depth, a value of one or more bit rates supported by the codec is less than the second bit rate, and a sound channel quantity supported by the codec is greater than or equal to the first sound channel quantity. |

As shown in Table 3, when a value of one or more sampling rates supported by a codec is greater than or equal to the first sampling rate, a value of one or more quantization bit depths supported by the codec is greater than or equal to the first quantization bit depth, a value of one or more bit rates supported by the codec is greater than or equal to the first bit rate, and a sound channel quantity supported by the codec is greater than or equal to the first sound channel quantity, the codec belongs to the category 1. When a value of one or more sampling rates supported by a codec is less than the first sampling rate and greater than or equal to the second sampling rate, a value of one or more quantization bit depths supported by the codec is less than the first quantization bit depth and greater than or equal to the second quantization bit depth, a value of one or more bit rates supported by the codec is less than the first bit rate and greater than or equal to the second bit rate, and a sound channel quantity supported by the codec is greater than or equal to the first sound channel quantity, the codec belongs to the category 2. When a value of one or more sampling rates supported by a codec is less than the second sampling rate, a value of one or more quantization bit depths supported by the codec is less than the second quantization bit depth, a value of one or more bit rates supported by the codec is less than the second bit rate, and a sound channel quantity supported by the codec is greater than or equal to the first sound channel quantity, the codec belongs to the category 3.

During specific implementation, first, the electronic device 100 obtains values of sampling rates supported by all encoders in the electronic device 100, values of bit rates supported by all the encoders, values of quantization bit depths supported by all the encoders, and values of sound channel quantities supported by all the encoders. The electronic device 100 categorizes all the encoders in the electronic device 100 into the categories shown in Table 3. It should be noted that one encoder may be categorized into a plurality of categories.

Table 4 shows an example in which codecs in the electronic device 100 and the audio play device 200 are categorized into a plurality of categories based on a sampling rate, a quantization bit depth, a bit rate, and a sound channel quantity.

Table 4

| Category based on the codec categorization standard | Categorization condition based on the sampling rate, the quantization bit depth, the bit rate, and the sound channel quantity | Encoder identifier on the electronic device 100 | Decoder identifier on the audio play device 200 |
|---|---|---|---|
| Category 1 | A value of one or more sampling rates supported by a codec is greater than or equal to 48 kHz, a value of one or more quantization bit depths supported by the codec is greater than or equal to 24 bits, a value of one or more bit rates supported by the codec is greater than or equal to 600 kbps, and a sound channel quantity supported by the codec is greater than or equal to two sound channels. | Encoder 1 | Decoder 1 |
| Category 2 | A value of one or more sampling rates supported by a codec is greater than or equal to 24 kHz and less than 48 kHz, a value of one or more quantization bit depths supported by the codec is greater than or equal to 16 bits and less than 24 bits, a value of one or more bit rates supported by the codec is greater than or equal to 300 kbps and less than 600 kbps, and a sound channel quantity supported by the codec is greater than or equal to two sound channels. | Encoder 2 | Decoder 2 |
| Category 3 | A value of one or more sampling rates supported by a codec is less than 24 kHz, a value of one or more quantization bit depths supported by the codec is less than 16 bits, a value of one or more bit rates supported by the codec is less than 300 kbps, and a sound channel quantity supported by the codec is greater than or equal to two sound channels. | Encoder 2 Encoder 3 | Decoder 3 |

As shown in Table 4, for example, the first sampling rate is 48 kHz, the second sampling rate is 24 kHz, the first quantization bit depth is 24 bits, the second quantization bit depth is 16 bits, the first bit rate is 600 kbps, the second bit rate is 300 kbps, and the first sound channel quantity is two sound channels. In this case, an encoder that is in the electronic device 100 and that is categorized into the category 1 may be referred to as an encoder with high-definition sound quality, an encoder that is in the electronic device 100 and that is categorized into the category 2 may be referred to as an encoder with standard-definition sound quality, and an encoder that is in the electronic device 100 and that is categorized into the category 3 may be referred to as an encoder with basic sound quality.

For example, the electronic device 100 includes three encoders: an encoder 1, an encoder 2, and an encoder 3. Values of sampling rates supported by the encoder 1 are 8 kHz, 16 kHz, 24 kHz, 32 kHz, 48 kHz, and 96 kHz. Values of quantization bit depths supported by the encoder 1 are 16 bits, 24 bits, and 32 bits. Values of bit rates supported by the encoder 1 are 600 kbps, 900 kbps, and 1200 kbps. Sound channel quantities supported by the encoder 1 are mono, dual, 2.1 channel, and 5.1 channel. Values of sampling rates supported by the encoder 2 are 16 kHz, 32 kHz, and 48 kHz. Values of quantization bit depths supported by the encoder 2 are 8 bits, 16 bits, and 24 bits. Values of bit rates supported by the encoder 2 are 200 kbps, 300 kbps, 400 kbps, and 600 kbps. Sound channel quantities supported by the encoder 2 are mono and dual. Values of sampling rates supported by the encoder 3 are 8 kHz and 16 kHz. Values of quantization bit depths supported by the encoder 3 are 8 bits and 16 bits. Values of bit rates supported by the encoder 3 are 200 kbps and 300 kbps. Sound channel quantities supported by the encoder 3 are mono, dual, 2.1 channel, 5.1 channel, and 7.1 channel.

Based on the codec categorization standard shown in Table 4, the encoder 1 belongs to the category 1, the encoder 2 belongs to the category 2, the encoder 2 also belongs to the category 3, and the encoder 3 belongs to the category 3.

Similarly, for the audio play device 200, the audio play device 200 also includes a decoder 1, a decoder 2, and a decoder 3. The audio play device 200 obtains values of sampling rates supported by all decoders in the audio play device 200, values of bit rates supported by all the decoders, values of quantization bit depths supported by all the decoders, and values of sound channel quantities supported by all the decoders, and categorizes the decoders into the categories obtained based on the codec categorization standard shown in Table 4. It should be noted that one decoder may belong to a plurality of categories based on the codec categorization standard. A method for categorizing, by the audio play device 200 based on the values of the sampling rates supported by all the decoders in the audio play device 200, the values of the bit rates supported by all the decoders, the values of the quantization bit depths supported by all the decoders, and the values of the sound channel quantities supported by all the decoders, the decoders into the categories shown in Table 4 is the same as the method for categorizing, by the electronic device 100 based on the values of the sampling rates supported by all the encoders in the electronic device 100, the values of the bit rates supported by all the encoders, the values of the quantization bit depths supported by all the encoders, and the values of the sound channel quantities supported by all the encoders, the encoders into the categories shown in Table 4. Details are not described herein again in this application.

After the electronic device 100 categorizes the encoders into a plurality of categories and the audio play device 200 categorizes the decoders into a plurality of categories, the electronic device 100 negotiates with the audio play device 200 to obtain a common category. Then, when the electronic device 100 transmits audio data to the audio play device 200, the electronic device 100 encodes the audio data by using a default encoder of a category of the common category and sends encoded audio data to the audio play device 200, and the audio play device 200 decodes the encoded audio data by using a default decoder of the category and then plays the audio data.

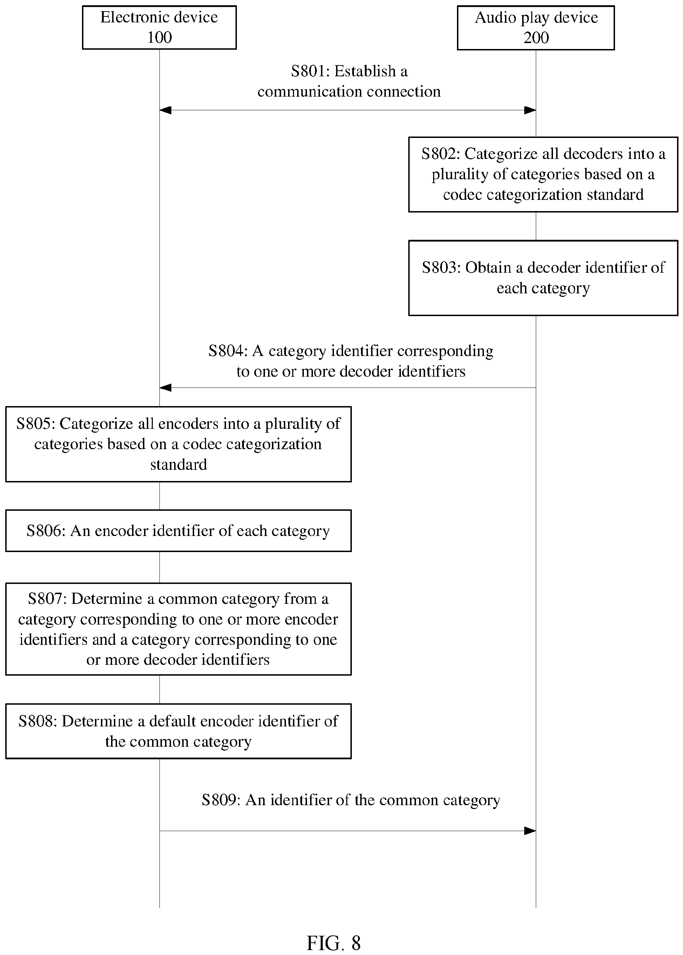

FIG. 8 is a schematic diagram of an example in which an electronic device 100 negotiates with an audio play device 200 on a common category.

S801: The electronic device 100 establishes a communication connection to the audio play device 200.

The electronic device 100 may establish a communication connection to the audio play device 200 through any one of Bluetooth, Wi-Fi direct, a local area network, or the like. How the electronic device 100 establishes a communication connection to the audio play device 200 is described in detail below. Details are not described herein in this application. In this embodiment of this application, an example in which the electronic device 100 establishes a communication connection to the audio play device 200 through the Bluetooth technology is used for description.

S802: The audio play device 200 categorizes all decoders into a plurality of categories based on a codec categorization standard.

The audio play device 200 first obtains the codec categorization standard. It can be understood that the codec category standard is preset on the audio play device 200.

Then the audio play device 200 obtains values of one or more parameters of all the decoders in the audio play device 200.

When the audio play device 200 determines that a value of one or more parameters of a decoder falls within a value range of one or more parameters used in the codec categorization standard, the audio play device 200 categorizes the decoder into one or more categories.

According to this method, the audio play device 200 categorizes all the decoders in the audio play device 200 into a plurality of categories. It should be noted that one decoder may be categorized into a plurality of categories. The audio play device 200 records a decoder identifier of each category. For example, when a category obtained based on the codec categorization standard is a category 1, a decoder identifier included in the category 1 includes a decoder 1 and a decoder 2; when a category obtained based on the codec categorization standard is a category 2, a decoder identifier included in the category 2 includes the decoder 2 and a decoder 3; when a category obtained based on the codec categorization standard is a category 3, a decoder identifier included in the category 3 includes the decoder 3; and when a category obtained based on the codec categorization standard is a category 4, a decoder identifier included in the category 4 is empty.

The codec categorization standard and how the audio play device 200 categorizes all the decoders into a plurality of categories based on the values of the one or more parameters of all the decoders are described in detail in Table 1 to Table 4. Details are not described herein again in this application.

S803: The audio play device 200 obtains the decoder identifier of each category.

It can be learned from S802 that the audio play device 200 records the decoder identifier of each category after categorizing all the decoders in the audio play device 200 into a plurality of categories.

S804: The audio play device 200 sends, to the electronic device 100, a category identifier corresponding to one or more decoder identifiers.

After the audio play device 200 obtains the decoder identifier of each category, the audio play device 200 only needs to send, to the electronic device 100, the category identifier corresponding to one or more decoder identifiers.

In some embodiments, the audio play device 200 may alternatively send, to the electronic device 100, the category identifier corresponding to one or more decoder identifiers and the decoder identifier corresponding to each category.

In some embodiments, the audio play device 200 may alternatively send, to the electronic device 100, only all decoder identifiers and a value of one or more parameters corresponding to each decoder. The electronic device 100 categorizes all the decoders in the audio play device 200 into a plurality of categories based on a codec categorization standard, that is, the electronic device 100 obtains a decoder identifier corresponding to each category. Specifically, for the electronic device 100, the electronic device 100 obtains the codec categorization standard. It can be understood that the codec category standard is preset on the electronic device 100.

When the electronic device 100 determines that a value of one or more parameters of a decoder falls within a value range of one or more parameters used in the codec categorization standard, the electronic device 100 categorizes the decoder into one or more categories.

According to this method, the electronic device 100 categorizes all the decoders in the audio play device 200 into a plurality of categories. It should be noted that one decoder may be categorized into a plurality of categories. The electronic device 100 records a decoder identifier of each category. For example, when a category obtained based on the codec categorization standard is a category 1, a decoder identifier included in the category 1 includes a decoder 1 and a decoder 2; when a category obtained based on the codec categorization standard is a category 2, a decoder identifier included in the category 2 includes the decoder 2 and a decoder 3; when a category obtained based on the codec categorization standard is a category 3, a decoder identifier included in the category 3 includes the decoder 3; and when a category obtained based on the codec categorization standard is a category 4, a decoder identifier included in the category 4 is empty.

After the electronic device 100 obtains the decoder identifier of each category, the electronic device 100 may obtain a category identifier corresponding to one or more decoder identifiers.

S805: The electronic device 100 categorizes all encoders into a plurality of categories based on a codec categorization standard.

The electronic device 100 first obtains the codec categorization standard. It can be understood that the codec category standard is preset on the electronic device 100.

Then the electronic device 100 obtains values of one or more parameters of all the encoders in the electronic device 100.

When the electronic device 100 determines that a value of one or more parameters of an encoder falls within a value range of one or more parameters used in the codec categorization standard, the electronic device 100 categorizes the encoder into one or more categories.

According to this method, the electronic device 100 categorizes all the encoders into a plurality of categories according to the foregoing method. It should be noted that one encoder may be categorized into a plurality of categories. The electronic device 100 records an encoder identifier of each category. For example, when a category obtained based on the codec categorization standard is a category 1, an encoder identifier included in the category 1 includes an encoder 1 and an encoder 2; when a category obtained based on the codec categorization standard is a category 2, an encoder identifier included in the category 2 includes the encoder 2 and an encoder 3; when a category obtained based on the codec categorization standard is a category 3, an encoder identifier included in the category 3 includes the encoder 3; and when a category obtained based on the codec categorization standard is a category 4, an encoder identifier included in the category 4 is the encoder 1 and an encoder 4.

The codec categorization standard and how the electronic device 100 categorizes all the encoders into a plurality of categories based on the values of the one or more parameters of all the encoders are described in detail in Table 1 to Table 4. Details are not described herein again in this application.

S806: The electronic device 100 obtains the encoder identifier of each category.

It can be learned from S805 that the electronic device 100 records the encoder identifier of each category after categorizing all the encoders in the electronic device 100 into a plurality of categories. It can be understood that S805 and S806 may be performed before S802. This is not limited herein in this application.

S807: The electronic device 100 determines a common category from a category corresponding to one or more encoder identifiers and a category corresponding to one or more decoder identifiers.

The electronic device 100 receives a category that corresponds to one or more decoder identifiers and that is sent by the audio play device 200. For example, the category that corresponds to one or more decoder identifiers and that is sent by the audio play device 200 may be the category 1, the category 2, the category 3, and the category 4.

After obtaining the encoder identifier of each category, the electronic device 100 determines a category corresponding to one or more encoder identifiers. For example, the electronic device 100 determines that the category corresponding to one or more encoder identifiers may be the category 1, the category 2, and the category 4.

Then the electronic device 100 determines a common category from the category corresponding to one or more encoder identifiers and the category corresponding to one or more decoder identifiers. The common category is an intersection between the category corresponding to one or more encoder identifiers and the category corresponding to one or more decoder identifiers. The common category means that the electronic device 100 and the audio play device 200 may transmit audio data by using an encoder and a decoder of the category. For example, the common category may be the category 1, the category 2, and the category 4.

S808: The electronic device 100 determines a default encoder identifier of the common category.

For any common category, if a quantity of encoder identifiers is 1 or a quantity of decoder identifiers is 1, the electronic device 100 determines that an encoder identifier of the category is a default encoder identifier, or a decoder identifier of the category is a default decoder identifier.

For example, when the common category is the category 3, the encoder identifier included in the category 3 includes the encoder 3, and when the category obtained based on the codec categorization standard is the category 3, the decoder identifier included in category 3 includes the decoder 3. Because the category 3 includes only one encoder identifier, the electronic device 100 determines that the encoder 3 is a default encoder of the category 3. Because the category 3 includes only one decoder identifier, the electronic device 100 determines that the decoder 3 is a default decoder of the category 3.

For any common category, if a quantity of encoder identifiers is greater than 1 or a quantity of decoder identifiers is greater than 1, the electronic device 100 determines a default encoder identifier from more than one encoder identifier according to a preset rule, or the electronic device 100 determines a default decoder identifier from more than one decoder identifier according to a preset rule.

The preset rule may be a priority rule, a low power consumption rule, a high efficiency rule, or the like.

In an optional implementation, the electronic device 100 determines a default encoder identifier from more than one encoder identifier according to the priority rule, or the electronic device 100 determines a default decoder identifier from more than one decoder identifier according to the priority rule.

Table 5 shows an example of priority rankings of encoders and decoders.

**Table 5**

| Encoder identifier | Encoder priority ranking | Decoder identifier | | Decoder priority ranking |
|---|---|---|---|---|
| Encoder 1 | 1 | Decoder 1 | | 1 |
| Encoder 2 | 2 | Decoder 2 | | 2 |
| Encoder 3 | 3 | Decoder 3 | | 3 |
| Encoder 4 | 4 | Decoder 4 | | 4 |

It can be understood that priorities of encoders and decoders may be generally recognized in the industry, or may be set by a developer. A sequence of priorities of codecs is not limited in this application.

The electronic device 100 determines a default encoder identifier from more than one encoder identifier based on the priorities of the codecs shown in Table 5, or the electronic device 100 determines a default decoder identifier from more than one decoder identifier according to the priority rule.

For example, for the category 1, the decoder identifier included in the category 1 includes the decoder 1 and the decoder 2, and the encoder identifier included in the category 1 includes the encoder 1 and the encoder 2. Because a priority ranking of the encoder 1 is higher than that of the encoder 2, the electronic device 100 determines that the encoder 1 is a default encoder of the category 1. Because a priority ranking of the decoder 1 is higher than that of the decoder 2, the electronic device 100 determines that the decoder 1 is a default decoder of the category 1.

In an optional implementation, the electronic device 100 determines a default encoder identifier from more than one encoder identifier according to the low power rule, or the electronic device 100 determines a default decoder identifier from more than one decoder identifier according to the low power rule.

Table 6 shows an example of power rankings of encoders and decoders.

**Table 6**

| Encoder identifier | Encoder power ranking in ascending order | Decoder identifier | Decoder power ranking in ascending order |
|---|---|---|---|
| Encoder 1 | 1 | Decoder 1 | 1 |
| Encoder 2 | 2 | Decoder 2 | 2 |
| Encoder 3 | 3 | Decoder 3 | 3 |
| Encoder 4 | 4 | Decoder 4 | 4 |

It can be understood that power rankings of encoders and decoders may be generally recognized in the industry, or may be set by a developer. Power rankings of codecs are not limited in this application.

The electronic device 100 determines a default encoder identifier from more than one encoder identifier based on the encoder power ranking in ascending order shown in Table 6, or the electronic device 100 determines a default decoder identifier from more than one decoder identifier based on the decoder power ranking in ascending order.

For example, for the category 1, the decoder identifier included in the category 1 includes the decoder 1 and the decoder 2, and the encoder identifier included in the category 1 includes the encoder 1 and the encoder 2. Because power of the encoder 1 is lower than that of the encoder 2, the electronic device 100 determines that the encoder 1 is a default encoder of the category 1. Because power of the decoder 1 is lower than that of the decoder 2, the electronic device 100 determines that the decoder 1 is a default decoder of the category 1.

In an optional implementation, the electronic device 100 determines a default encoder identifier from more than one encoder identifier according to the efficiency rule, or the electronic device 100 determines a default decoder identifier from more than one decoder identifier according to the efficiency rule.

Table 7 shows an example of efficiency rankings of encoders and decoders.

**Table 7**

| Encoder identifier | Encoder efficiency ranking in a descending order | Decoder identifier | Decoder efficiency ranking in descending order |
|---|---|---|---|
| Encoder 1 | 1 | Decoder 1 | 1 |
| Encoder 2 | 2 | Decoder 2 | 2 |
| Encoder 3 | 3 | Decoder 3 | 3 |
| Encoder 4 | 4 | Decoder 4 | 4 |

It can be understood that efficiency rankings of encoders and decoders may be generally recognized in the industry, or may be set by a developer. Efficiency rankings of codecs are not limited in this application.

The electronic device 100 determines a default encoder identifier from more than one encoder identifier based on the encoder efficiency ranking shown in Table 6, or the electronic device 100 determines a default decoder identifier from more than one decoder identifier based on the decoder efficiency ranking.

For example, for the category 1, the decoder identifier included in the category 1 includes the decoder 1 and the decoder 2, and the encoder identifier included in the category 1 includes the encoder 1 and the encoder 2. Because efficiency of the encoder 1 is higher than that of the encoder 2, the electronic device 100 determines that the encoder 1 is a default encoder of the category 1. Because efficiency of the decoder 1 is higher than that of the decoder 2, the electronic device 100 determines that the decoder 1 is a default decoder of the category 1.

The electronic device 100 may alternatively determine, according to another rule, a default encoder identifier from more than one encoder identifier, or determine a default decoder identifier from more than one decoder identifier. This is not limited herein in this application.

In some embodiments, the electronic device 100 determines a default encoder identifier of a common category, and the electronic device 100 further needs to determine a default decoder identifier of the common category.

Specifically, when the audio play device 200 sends, to the electronic device 100, all decoder identifiers and a value of one or more parameters corresponding to each decoder, the electronic device 100 categorizes all decoders in the audio play device 200 into a plurality of categories based on a codec categorization standard, and then the electronic device 100 determines a common category supported by the electronic device 100 and the audio play device 200. Alternatively, the audio play device 200 categorizes all decoders in the audio play device 200 into a plurality of categories based on a codec categorization standard, and sends, to the electronic device 100, a category corresponding to one or more decoder identifiers and a decoder identifier corresponding to each category, and then the electronic device 100 determines a common category supported by the electronic device 100 and the audio play device 200. After determining the common category, the electronic device 100 determines a default encoder identifier of each common category. The electronic device 100 also needs to determine a default decoder identifier of each common category. Specifically, when a quantity of decoder identifiers corresponding to a common category is 1, the electronic device 100 determines that a decoder identifier corresponding to the category is a default decoder identifier. When a quantity of decoder identifiers corresponding to a common category is greater than 1, the electronic device 100 may determine a default decoder identifier of the category by using the embodiments shown in Table 5 to Table 7. Details are not described herein again in this application.

S809: The electronic device 100 sends an identifier of the common category to the audio play device 200.

After the electronic device 100 determines the common category, the electronic device 100 sends the identifier of the common category to the audio play device 200.

The audio play device 200 receives the identifier of the common category that is sent by the electronic device 100.

In some embodiments, the audio play device 200 further needs to determine a default decoder identifier of each common category.

For any common category, if a quantity of decoder identifiers is 1, the audio play device 200 determines that a decoder identifier of the category is a default decoder identifier.

For example, when the category obtained based on the codec categorization standard is the category 3, the decoder identifier included in category 3 includes the decoder 3. Because the category 3 includes only one decoder identifier, the audio play device 200 determines that the encoder 3 is a default decoder of the category 3.

For any common category, if a quantity of decoder identifiers is greater than 1, the audio play device 200 determines a default decoder identifier from more than one decoder identifier according to a preset rule.

The preset rule may be a priority rule, a low power consumption rule, a high efficiency rule, or the like.

A method for determining, by the audio play device 200, a default decoder identifier from more than one decoder identifier according to the priority rule, the low power consumption rule, or the high efficiency rule is consistent with the method for determining, by the electronic device 100, a default decoder identifier from more than one decoder identifier according to the priority rule, the low power consumption rule, or the high efficiency rule. Details are not described herein again in this application.

S809 may alternatively be performed after S802. This is not limited herein in this application.

In some embodiments, when the electronic device 100 determines the default decoder identifier of the common category, when sending the identifier of the common category to the audio play device 200, the electronic device 100 further needs to send the default decoder identifier of the common category to the audio play device 200.

Optionally, the electronic device 100 may alternatively send, to the audio play device 200, the identifier of the common category and a default decoder identifier and a default encoder identifier of each category.

After the electronic device 100 and the audio play device 200 determine the common category and a default codec of each common category, the electronic device 100 selects an appropriate category from the common category based on an application type, audio play characteristics (a sampling rate, a quantization bit depth, or a sound channel quantity), whether an audio rendering capability of the electronic device is enabled, a network condition of a channel, and the like, and selects a default codec of the category, to transmit audio data.

The following describes how the electronic device 100 selects an appropriate category from the common category based on the application type, the audio play characteristics (the sampling rate, the quantization bit depth, or the sound channel quantity), whether the audio rendering capability of the electronic device is enabled, the network condition of the channel, and the like.

1. Application type: In the electronic device 100, different types of audio play applications have different requirements for audio play characteristics. The electronic device 100 obtains requirements of an audio play application for a minimum sampling rate, a minimum quantization bit depth, and a sound channel quantity of audio data, and then selects an appropriate category from the common category according to the requirements of the audio play application for the minimum sampling rate, the minimum quantization bit depth, and the sound channel quantity of audio data. For example, some applications have a high requirement for sound quality, and have a high requirement for a value of a sampling rate of audio data and a value of a quantization bit depth. For example, for a general audio play application, a value of a sampling rate of audio data is 32 kHz, and a value of a quantization bit depth of audio data is 16 bits. However, an application with a high requirement for sound quality requires that a minimum value of a sampling rate of audio data be 48 kHz and a minimum value of a quantization bit depth of audio data be 24 bits. The electronic device 100 may select, based on a condition that a value of a sampling rate includes 48 kHz and a value of a quantization bit depth includes 24 bits, a default codec of the category to transmit audio data.

2. Audio play characteristics: In the electronic device 100, an application may play different audio data, and different audio data may have different characteristics. The electronic device 100 obtains requirements for a minimum sampling rate, a minimum quantization bit depth, and a sound channel quantity of audio data being played, and then selects an appropriate category from the common categories according to the requirements for the minimum sampling rate, the minimum quantization bit depth, and the sound channel quantity of the audio data being played. For example, some audio data has a high requirement for sound quality, and a high requirement is imposed on a sampling rate and a quantization bit depth of the audio data. For example, a value of a sampling rate of general audio data is 32 kHz, and a value of a quantization bit depth of the audio data is 16 bits. However, a minimum value of a sampling rate of some preset audio data with high sound quality is 48 kHz, and a minimum value of a quantization bit depth of the audio data is 24 bits. The electronic device 100 may select, based on a condition that a value of a sampling rate includes 48 kHz and a value of a quantization bit depth includes 24 bits, a default codec of the category to transmit audio data.

3. Whether the audio rendering capability of the electronic device is enabled: A value of a sampling rate of audio data currently played by the electronic device is a sampling rate 1, a value of a quantization bit depth is a quantization bit depth 1, a value of a bit rate is a bit rate 1, and a value of a sound channel quantity is a sound channel quantity 1. After the audio rendering capability of the electronic device 100 is enabled, a rendering unit of the electronic device 100 may increase the value of the sampling rate of the audio data from the sampling rate 1 to a sampling rate 2, the rendering unit of the electronic device 100 may increase the value of the quantization bit depth of the audio data from the quantization bit depth 1 to a quantization bit depth 2, and the rendering unit of the electronic device 100 may increase the value of the sound channel quantity of the audio data from the sound channel quantity 1 to a sound channel quantity 2. The sampling rate 2 is greater than the sampling rate 1, the quantization bit depth 2 is greater than the quantization bit depth 1, and the sound channel quantity 2 is greater than the sound channel quantity 1. Then the electronic device 100 selects a default codec, for transmitting the audio data, of a category in which a sampling rate includes the sampling rate 2, a quantization bit depth includes the quantization bit depth 2, a value of a bit rate includes the bit rate 1, and a sound channel quantity includes the sound channel quantity 2 from the common category based on that the value of the sampling rate of the audio data is the sampling rate 2, the value of the quantization bit depth of the audio data is the quantization bit depth 2, the value of the bit rate is the bit rate 1, and the value of the sound channel quantity of the audio data is the sound channel quantity 2.

4. Network condition of the channel: A value of a sampling rate of audio data currently played by the electronic device is a sampling rate 1, a value of a quantization bit depth is a quantization bit depth 1, a value of a sound channel quantity is a sound channel quantity 1, and a value of a bit rate is a bit rate 1. In this case, the electronic device 100 selects a category in which a sampling rate includes the sampling rate 1, a quantization bit depth includes the quantization bit depth 1, a sound channel quantity includes the sound channel quantity 1, and a bit rate includes the bit rate 1 from the common category based on that the value of the sampling rate of the audio data is the sampling rate 1, the value of the quantization bit depth of the audio data is the quantization bit depth 1, the value of the sound channel quantity of the audio data is the sound channel quantity 1, and the value of the bit rate of the audio data is the bit rate 1; and uses a default codec of this category to transmit the audio data.

It should be noted that the electronic device 100 may alternatively select an appropriate category from the common category based on other parameters, not limited to the application type, the audio play characteristics (the sampling rate, the quantization bit depth, and the sound channel quantity), whether the audio rendering capability of the electronic device is enabled, the network condition of the channel, and the like that are listed in the foregoing embodiments. Details are not described herein again in this application.

After the electronic device 100 and the audio play device 200 select an appropriate category from the common category and transmit audio data by using a default codec of the category, due to a change of an application type, a change of audio play characteristics (a sampling rate, a quantization bit depth, or a sound channel quantity), enabling of the audio rendering capability of the electronic device, a change of a network condition of a channel, or other factors, the electronic device 100 reselects another category, and notifies the audio play device 200 of an identifier of the category. The electronic device 100 transmits audio data to the audio play device 200 by using a default codec of the another category.

1. The application type changes from an application type 1 to an application type 2: In the electronic device 100, different types of audio play applications have different requirements for audio play characteristics. When the electronic device 100 plays audio data based on the application type 1, a value of a sampling rate of the audio data is a sampling rate 1, a value of a quantization bit depth is a quantization bit depth 1, a value of a bit rate is a bit rate 1, and a value of a sound channel quantity is a sound channel quantity 1. After the electronic device 100 switches an audio data play application from an application 1 to an application 2, if the application 2 has a high requirement for sound quality of audio data, when the application 2 plays the audio data, a value of a sampling rate of the audio data is a sampling rate 2, a value of a quantization bit depth is a quantization bit depth 2, a value of a bit rate is a bit rate 2, and a value of a sound channel quantity is the sound channel quantity 1, where the sampling rate 2 is greater than the sampling rate 1, the quantization bit depth 2 is greater than the quantization bit depth 1, and the bit rate 2 is greater than the bit rate 1. Due to the parameter change, the electronic device 100 reselects a codec category. The electronic device 100 selects a default codec of a category in which a sampling rate includes the sampling rate 2, a quantization bit depth includes the quantization bit depth 2, a value of a bit rate includes the bit rate 2, and a sound channel quantity includes the sound channel quantity 1 from the common category to transmit audio data.

2. Audio content switches from audio data 1 to audio data 2: In the electronic device 100, an application may play different audio data, and different audio data may have different characteristics. When the electronic device 100 plays audio data 1 based on the application type, a value of a sampling rate of the audio data 1 is a sampling rate 1, a value of a quantization bit depth is a quantization bit depth 1, a value of a bit rate is a bit rate 1, and a value of a sound channel quantity is a sound channel quantity 1. After the electronic device 100 switches played audio content from the audio data 1 to the audio data 2, if sound quality of the audio data 2 is higher, when the electronic device 100 plays the audio data 2, a value of a sampling rate of the audio data 2 is a sampling rate 2, a value of a quantization bit depth is a quantization bit depth 2, a value of a bit rate is a bit rate 2, and a value of a sound channel quantity is the sound channel quantity 1, where the sampling rate 2 is greater than the sampling rate 1, the quantization bit depth 2 is greater than the quantization bit depth 1, and the bit rate 2 is greater than the bit rate 1. Due to the parameter change, the electronic device 100 reselects a codec category. The electronic device 100 selects a default codec of a category in which a sampling rate includes the sampling rate 2, a quantization bit depth includes the quantization bit depth 2, a value of a bit rate includes the bit rate 2, and a sound channel quantity includes the sound channel quantity 1 from the common category to transmit audio data.

3. The audio rendering capability of the electronic device switches from a disable state to an enabled state: A value of a sampling rate of audio currently played by the electronic device is a sampling rate 1, a value of a quantization bit depth is a quantization bit depth 1, a value of a bit rate is a bit rate 1, and a value of a sound channel quantity is a sound channel quantity 1. After the audio rendering capability of the electronic device 100 is enabled, the rendering unit of the electronic device 100 may increase the value of the sampling rate of the audio data from the sampling rate 1 to a sampling rate 2, the rendering unit of the electronic device 100 may increase the value of the quantization bit depth of the audio data from the quantization bit depth 1 to a quantization bit depth 2, and the rendering unit of the electronic device 100 may increase the value of the sound channel quantity of the audio data from the sound channel quantity 1 to a sound channel quantity 2. The sampling rate 2 is greater than the sampling rate 1, the quantization bit depth 2 is greater than the quantization bit depth 1, and the sound channel quantity 2 is greater than the sound channel quantity 1. Due to the parameter change, the electronic device 100 reselects a codec category. The electronic device 100 selects a default codec of a category in which a sampling rate includes the sampling rate 2, a quantization bit depth includes the quantization bit depth 2, a value of a bit rate includes the bit rate 1, and a sound channel quantity includes the sound channel quantity 2 from the common category to transmit audio data.

4. The network condition of the channel deteriorates: A value of a sampling rate of audio data currently played by the electronic device is a sampling rate 1, a value of a quantization bit depth is a quantization bit depth 1, a value of a sound channel quantity is a sound channel quantity 1, and a value of a bit rate is a bit rate 1. Due to strong interference, attenuation, and the like of a wireless transmission channel, a bit rate supported by the wireless transmission channel decreases from the bit rate 1 to a bit rate 2, where the bit rate 2 is less than the bit rate 1. Due to the parameter change, the electronic device 100 reselects a codec category. The electronic device 100 selects a default codec of a category in which a sampling rate includes the sampling rate 1, a quantization bit depth includes the quantization bit depth 1, a value of a bit rate includes the bit rate 2, and a sound channel quantity includes the sound channel quantity 1 from the common category to transmit audio data.

After the electronic device 100 reselects a default codec of another category, the electronic device 100 transmits audio data to the audio play device 200 by using the default codec of the another category. To alleviate stalling during codec switching, smooth transition during codec switching can be implemented by using the following method in embodiments of this application.

The electronic device 100 switches a category obtained based on the codec categorization standard from a category 1 to a category 2, where the category 1 corresponds to a default encoder 1 and a default decoder 1, and the category 2 corresponds to a default encoder 2 and a default decoder 2. In this case, the electronic device 100 switches from the encoder to the encoder 2, and the audio play device 200 switches from the decoder 1 to the decoder 2.

When delays of the encoder 1 and the encoder 2 are the same, the electronic device 100 needs to complete the switching from the encoder 1 to the encoder 2 within one audio data frame. The audio data frame for transition between the encoder 1 and the encoder 2 is referred to as an ith audio data frame. The encoder 1 encodes the ith audio data frame to obtain a packet A (data packet A). The encoder 2 encodes the ith audio data frame to obtain a packet B (data packet B).

The electronic device 100 sends the packet A and the packet B to the audio play device 200. The audio play device 200 decodes the packet A by using the decoder 1 to obtain audio data pcmA, and the audio play device 200 also decodes the packet B by using the decoder 2 to obtain audio data pcmB. Then the audio play device 200 smooths the ith audio data frame. A smoothing process is shown in a formula (1):

$$Pcm(i)=wi\times pcmA(i)+(1-wi)\times pcmB(i) \qquad\qquad \text{Formula (1)}$$

As shown in the formula (1), Pcm(i) indicates a smoothed ith audio data frame, wi indicates a smoothing coefficient, and wi may be linear smoothing, cos smoothing, or the like. A value of wi ranges from 0 to 1. A smaller smoothing coefficient wi indicates stronger smoothing effect and a smaller amount of adjustment on a prediction result. A larger smoothing coefficient wi indicates weaker smoothing effect and a greater amount of adjustment on a prediction result. pcmA(i) indicates audio data obtained by the decoder 1 by decoding the packet A, and pcmB(i) indicates audio data obtained by the decoder 2 by decoding the packet B. The audio play device 200 may obtain, based on the formula (1), an audio data frame Pcm(i) obtained by smoothing the ith audio data frame. In this way, the audio play device 200 plays the audio data frame obtained by smoothing the ith audio data frame, so that smooth transition is implemented for an audio data frame during codec switching.

When delays of the encoder 1 and the encoder 2 are different, the electronic device 100 needs to complete the switching from the encoder 1 to the encoder 2 within a plurality of audio data frames. A process of calculating a total quantity D of audio data frames during switching from the encoder 1 to the encoder 2 is shown in a formula (2):

$$D=round((max(\text{total delay of the encoder 1, total delay of the encoder 2})+(\text{frame length}-\text{total delay}$$

$$\text{of the encoder 1}\%\text{frame length})+\text{frame length}-1)/\text{frame length}) \qquad \text{Formula (2)}$$

As shown in the formula (2), max indicates an operation for obtaining a maximum value, % indicates a modulo operation, and the frame length indicates that the encoder 1 encodes audio data with specific duration into a frame, where the frame of audio data with the specific duration is the frame length.

For the total quantity D of audio data frames during transition, each frame of audio data is encoded by using the encoder 1 and the encoder 2, and two data packets may be obtained for each frame of audio data: a packet A (data packet A) and a packet B (data packet B). The electronic device 100 sends the packet A and the packet B to the audio play device 200. The audio play device receives the packet A and the packet B, decodes the packet A by using the decoder 1 to obtain audio data pcmA, and decodes the packet B by using the decoder 2 to obtain audio data pcmB. For the total quantity D of audio data frames during switching, first D-1 audio data frames are still audio data decoded by the decoder 1. For a D$^{th}$ audio data frame, the audio play device 200 smooths the D$^{th}$ audio data frame. A smoothing process is shown in a formula (3):

$$Pcm(i)=wi\times pcmA(i)+(1-wi)\times pcmB(i) \qquad\qquad \text{Formula (3)}$$

As shown in the formula (3), Pcm(i) indicates a smoothed D$^{th}$ audio data frame, wi indicates a smoothing coefficient, and wi may be linear smoothing, cos smoothing, or the like. A value of wi ranges from 0 to 1. A smaller smoothing coefficient wi indicates stronger smoothing effect and a smaller amount of adjustment on a prediction result. A larger smoothing coefficient wi indicates weaker smoothing effect and a greater amount of adjustment on a prediction result. pcmA(i) indicates audio data obtained by the decoder 1 by decoding the D$^{th}$ audio data frame, and pcmB(i) indicates audio data obtained by the decoder 2 by decoding the D$^{th}$ audio data frame. The audio play device 200 may obtain, based on the formula (3), an audio data frame Pcm(i) obtained by smoothing the D$^{th}$ audio data frame. In this way, the audio play device 200 plays the first D-1 audio data frames and the audio data frame obtained by smoothing the D$^{th}$ audio data frame, so that smooth transition is implemented for an audio data frame during codec switching.

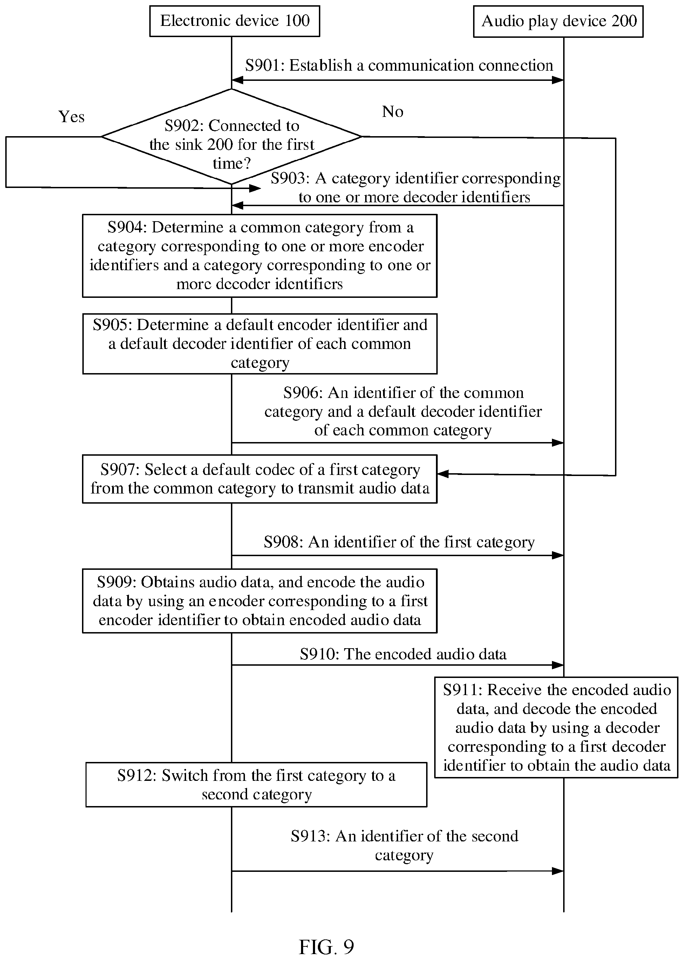

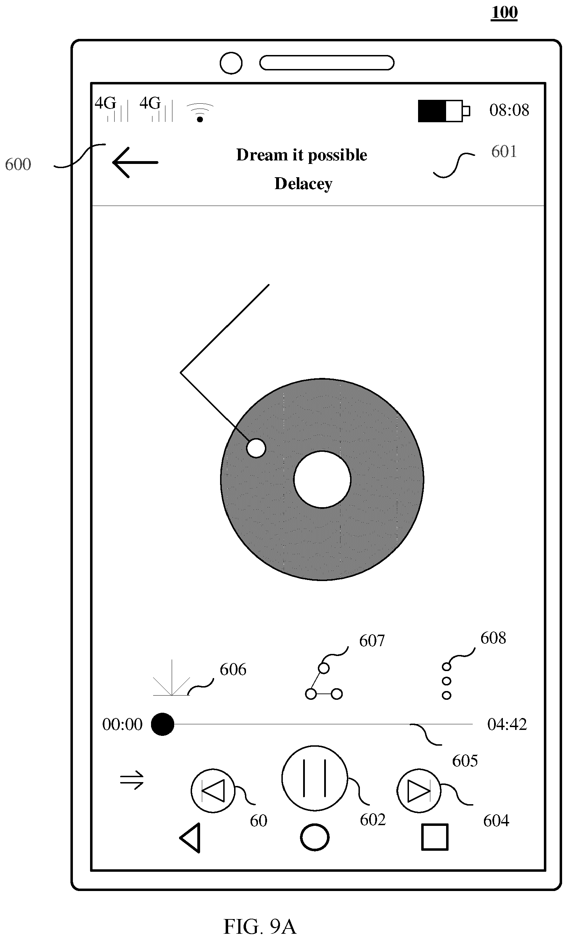

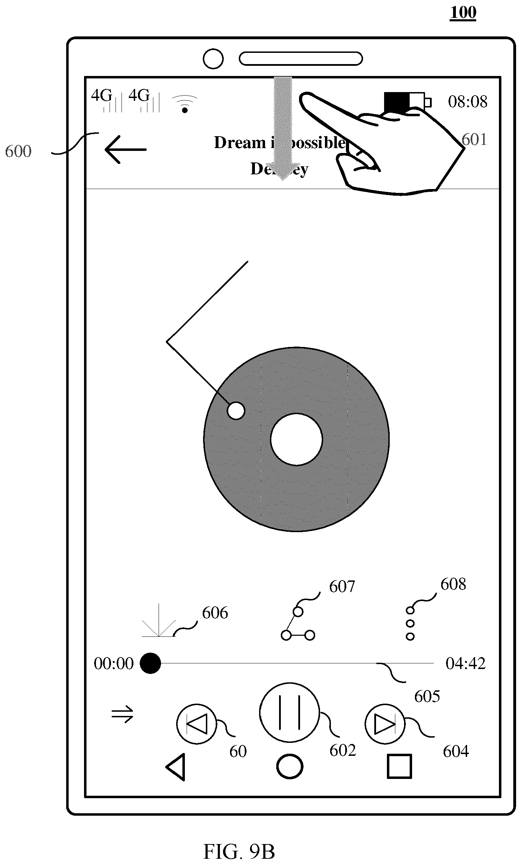

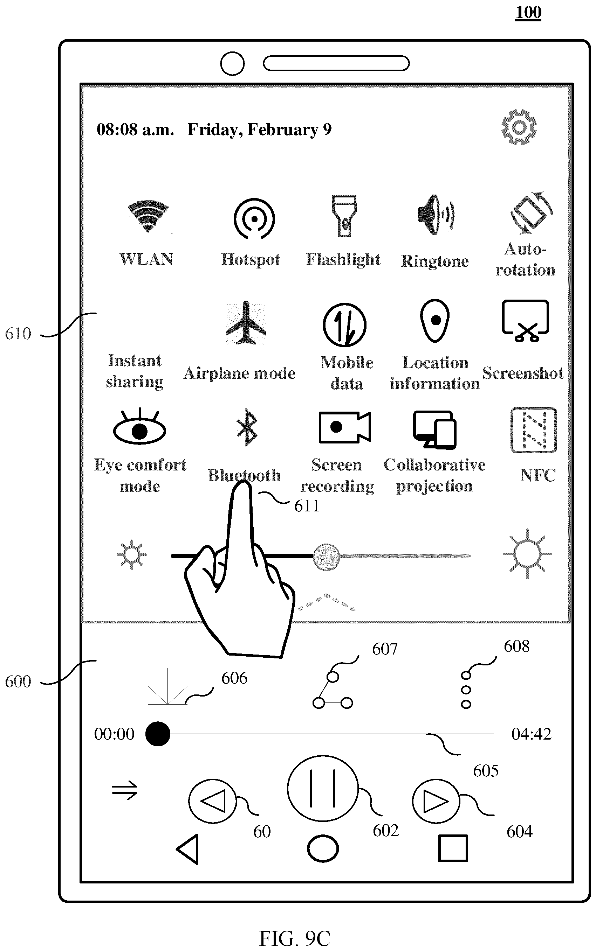

FIG. 9 is a flowchart of a codec negotiation and switching method according to an embodiment of this application.

S901: An electronic device 100 establishes a communication connection to an audio play device 200.

The electronic device 100 may establish a communication connection to the audio play device 200 through one or more of Bluetooth, Wi-Fi direct, and NFC. In this embodiment of this application, an example in which the electronic device 100 establishes a communication connection to the audio play device 200 through the Bluetooth technology is used for description.

With reference to diagrams of UIs, the following describes in detail how the electronic device 100 establishes a communication connection to the audio play device 200.

FIG. 9A to FIG. 9C are diagrams of example UIs on which the electronic device 100 establishes a communication connection to the audio play device 200 through Bluetooth. In addition to Bluetooth, the electronic device 100 may alternatively establish a communication connection to the audio play device 200 through one or more of Wi-Fi direct and NFC.

FIG. 9A shows an example audio play user interface 600 on the electronic device 100. As shown in FIG. 9A, the audio play interface 600 includes a music name 601, a play control 602, a previous control 603, a next control 604, a play progress bar 605, a download control 606, a share control 607, a more control 608, and the like. For example, the music name 601 may be "Dream it possible". The play control 602 is configured to trigger the electronic device 100 to play audio data corresponding to the music name 601. The previous control 603 may be configured to trigger the electronic device 100 to switch to previous audio data in a playlist for playing. The next control 604 may be configured to trigger the electronic device 100 to switch to next audio data in the playlist for playing. The play progress bar 605 may indicate play progress of current audio data. The download control 606 may be configured to trigger the electronic device 100 to download the audio data corresponding to the music name 601, and store the audio data to a local storage medium. The share control 607 may be configured to trigger the electronic device 100 to share, to another application, a play link for the audio data corresponding to the music name 601. The more control 608 may be configured to trigger the electronic device 100 to display more function controls related to music play.

In addition to music play, the electronic device 100 may further play audio data played by a video application, audio data played by a game application, audio data of a real-time call, and the like. A source of audio data played by the electronic device 100 is not limited in this application.

As shown in FIG. 9B and FIG. 9C, when the electronic device 100 detects a swipe-down gesture on a display, the electronic device 100 displays, on the user interface 600 in response to the swipe gesture, a window 610 shown in FIG. 9C. As shown in FIG. 9C, a Bluetooth control 611 may be displayed in the window 610, and the Bluetooth control 611 may receive an operation (for example, a touch operation or a tap operation) for enabling or disabling a Bluetooth function of the electronic device 100. A representation form of the Bluetooth control 611 may include an icon and/or text (for example, text "Collaborative projection"). On/Off controls for other functions, such as Wi-Fi, hotspot, flashlight, ringtone, auto-rotation, instant sharing, airplane mode, mobile data, location information, screenshot, eye comfort mode, screen recording, collaborative projection, and NFC, may be further displayed in the window 610. That is, a user operation for enabling the collaborative projection function is detected. In some embodiments, after detecting a user operation performed on the Bluetooth control 611, the electronic device 100 may change a display form of the Bluetooth control 611, for example, add a shadow to the Bluetooth control 611.

In addition to the interface shown in FIG. 9B, a user may alternatively input a swipe-down gesture on another interface to trigger the electronic device 100 to display the window 610.

In addition to a user operation, shown in FIG. 9B and FIG. 9C, performed by a user on the Bluetooth control 611 in the window 610, in this embodiment of this application, a user operation for enabling the Bluetooth function may alternatively be implemented in another form. This is not limited in this embodiment of this application.

For example, the electronic device 100 may alternatively display a settings interface provided by a settings (settings) application. The settings interface may include a control, provided for a user, for enabling or disabling the Bluetooth function of the electronic device 100. The user may enable the Bluetooth function of the electronic device 100 by inputting a user operation on the control.

When detecting a user operation for enabling the Bluetooth function, the electronic device 100 discovers, through Bluetooth, another electronic device that is near the electronic device 100 and on which a Bluetooth function is enabled. For example, the electronic device 100 may discover and connect to, through Bluetooth, the nearby audio play device 200 and another electronic device.

S902: The electronic device 100 determines whether a connection is to be established to the audio play device 200 for the first time. If the electronic device 100 is to establish a connection to the audio play device 200 for the first time, the electronic device 100 performs S903; otherwise, the electronic device 100 performs S907.

S903: The audio play device 200 sends, to the electronic device 100, a category identifier corresponding to one or more decoder identifiers.

Before the audio play device 200 sends, to the electronic device 100, the category identifier corresponding to one or more decoder identifiers, the audio play device 200 categorizes all decoders into a plurality of categories based on a codec categorization standard. How the audio play device 200 categorizes all the decoders into a plurality of categories based on the codec categorization standard is described in detail in the embodiment shown in S702. Details are not described herein again in this application.

For example, the audio play device 200 sends an identifier of a first category and an identifier of a second category to the electronic device 100, and the electronic device 100 receives the identifier of the first category and the identifier of the second category that are sent by the audio play device 200; or the audio play device 200 sends an identifier of a first category to the electronic device 100, and the electronic device 100 receives the identifier of the first category that is sent by the audio play device 200. A decoder of the first category includes at least a first decoder, and a decoder of the second category includes at least a second decoder.

Before the audio play device 200 sends, to the electronic device 100, the category identifier corresponding to one or more decoder identifiers, the audio play device 200 categorizes a first encoder into the first category based on parameter information of the first encoder and the codec categorization standard, and categorizes a second encoder into the second category based on parameter information of the second encoder and the codec categorization standard, where the parameter information of the first encoder and the parameter information of the second encoder include one or more of a sampling rate, a bit rate, a quantization bit depth, a sound channel quantity, and an audio stream format; and the audio play device is further configured to categorize the first decoder into the first category based on parameter information of the first decoder and the codec categorization standard, and categorize the second decoder into the second category based on parameter information of the second decoder and the codec categorization standard, where the parameter information of the first decoder and the parameter information of the second decoder include one or more of a sampling rate, a bit rate, a quantization bit depth, a sound channel quantity, and an audio stream format, and the codec categorization standard includes a mapping relationship between a codec category and parameter information of a codec. It should be noted that the parameter information of the first encoder, the parameter information of the second encoder, the parameter information of the first decoder, and the parameter information of the second decoder are all the same.

S904: The electronic device 100 determines a common category from a category corresponding to one or more encoder identifiers and a category corresponding to one or more decoder identifiers.

In response to the category identifier that corresponds to one or more decoder identifiers and that is sent by the audio play device 200, the electronic device 100 receives the category identifier that corresponds to one or more decoder identifiers and that is sent by the audio play device 200.

For example, the electronic device 100 determines that the common category supported by the electronic device and the audio play device is the first category and the second category.

Alternatively, the electronic device does not receive the identifier of the second category that is sent by the audio play device, or a quantity of encoders, categorized into the second category, of the electronic device is 0. In this case, the electronic device 100 determines that the common category supported by the electronic device and the audio play device is the first category.

The common category means that the electronic device 100 may transmit audio data to the audio play device 200 by using a codec of the category.

It can be understood that, before establishing a connection, the electronic device 100 categorizes all encoders in the electronic device 100 into a plurality of categories based on a codec categorization standard, and determines a category corresponding to one or more encoder identifiers.

In some embodiments, the electronic device 100 may alternatively categorize all encoders in the electronic device 100 into a plurality of categories based on a preset codec categorization standard after establishing a connection, and the audio play device 200 may alternatively categorize all decoders in the audio play device 200 into a plurality of categories according to a preset codec categorization standard after establishing a connection, and determine a category corresponding to one or more decoder identifiers. This is not limited herein in this application.

In some embodiments, after the electronic device 100 establishes a connection to the audio play device 200, the audio play device 200 sends, to the electronic device 100, all decoder identifiers on the audio play device 200 and a value of one or more parameters corresponding to each decoder, and the electronic device 100 categorizes all encoders in the electronic device 100 and all decoders in the audio play device 200 into a plurality of categories based on a codec categorization standard, and determines a category corresponding to one or more encoder identifiers and a category corresponding to one or more decoder identifiers. This is not limited herein in this application.

The codec categorization standard may be obtained based on one or a combination of two or more of the following parameters: a sampling rate, a quantization bit depth, a bit rate, a sound channel quantity, an audio stream format, and the like.

For example, when the codec categorization standard is obtained based on the sampling rate, the quantization bit depth, the bit rate, the sound channel quantity, and the audio stream format, two categories may be obtained through categorization based on the codec categorization standard.

Specifically, when a value of a sampling rate of a codec is greater than or equal to a first sampling rate (a target sampling rate), a value of a bit rate of the codec is greater than or equal to a first bit rate (a target bit rate), a value of a quantization bit depth of the codec is greater than or equal to a first quantization bit depth (a target quantization bit depth), a value of a sound channel quantity of the codec is greater than or equal to a first sound channel quantity (a target sound channel quantity), and an audio stream format is PCM (a target audio stream format), the codec is categorized into a category 1; and when a value of a sampling rate of a codec is less than the first sampling rate, a value of a bit rate of the codec is less than the first bit rate, a value of a quantization bit depth of the codec is less than the first quantization bit depth, a value of a sound channel quantity of the codec is greater than or equal to the first sound channel quantity, and an audio stream format is PCM, the codec is categorized into a category 2.

For example, the first sampling rate is 48 kHz, the first bit rate is 600 kbps, the first quantization bit depth is 24 bits, the first sound channel quantity is 2, and the audio stream format is PCM. In this case, a codec categorization standard for the category 1 is as follows: A sampling rate of a codec is greater than or equal to 48 kHz, a bit rate of the codec is greater than or equal to 600 kbps, a quantization bit depth of the codec is greater than or equal to 24 bits, a sound channel quantity of the codec is greater than or equal to two sound channels, and an audio stream format is PCM. A codec categorization standard for the category 2 is as follows: A sampling rate of a codec is less than 48 kHz, a bit rate of the codec is less than 600 kbps, a quantization bit depth of the codec is less than 24 bits, a sound channel quantity of the codec is greater than or equal to two sound channels, and an audio stream format is PCM. A codec categorized into the category 1 may be referred to as a codec with high-definition sound quality, and a codec categorized into the category 2 may be referred to as a codec with standard sound quality.

The audio play device 200 includes a decoder 1, a decoder 2, and a decoder 3, where the decoder 1 belongs to the category 1, and the decoder 2 and the decoder 3 belong to the category 2.

The electronic device 100 includes an encoder 1, an encoder 2, and an encoder 3, where the encoder 1 belongs to the category 1, and the encoder 2 and the encoder 3 belong to the category 2.

In this case, the common category supported by the electronic device 100 and the audio play device 200 includes the category 1 and the category 2.

How the electronic device 100 categorizes an encoder into a corresponding category based on a codec categorization standard and how the audio play device 200 categorizes a decoder into a corresponding category based on a codec categorization standard are described in detail in the embodiment shown in FIG. 7. Details are not described herein again in this application.

S905: The electronic device 100 determines a default encoder identifier and a default decoder identifier of each common category.

After the electronic device 100 determines the common category supported by the electronic device 100 and the audio play device 200, the electronic device 100 and the audio play device 200 may transmit audio data by using a codec of the common category.

If a quantity of encoders of the common category is greater than 1 and/or a quantity of decoders of the common category is greater than 1, the electronic device 100 needs to determine a default encoder identifier and a default decoder identifier of each common category. Then the electronic device 100 transmits audio data to the audio play device 200 by using the default encoder and the default decoder of each common category.

For any common category, if a quantity of encoder identifiers is 1 or a quantity of decoder identifiers is 1, the electronic device 100 determines that an encoder of the category is a default encoder, or a decoder of the category is a default decoder.

For example, when the common category is the category 1 (the first category), a codec categorized into the category 1 is a high-definition audio codec. An encoder of the category 1 includes the encoder 1 (the first encoder), and a decoder of the category 1 includes the decoder 1 (the first decoder). Because the category 1 includes one encoder and one decoder, the electronic device 100 determines that the encoder 1 and the decoder 1 are a default encoder and a default decoder of the category 1. When the electronic device 100 determines that audio data is to be transmitted by using the codec of the category 1, the electronic device 100 sends an identifier of the used category (an identifier of the category 1) to the audio play device 200.

The electronic device 100 encodes the audio data into first encoded audio data by using the encoder 1 of the category 1, and sends the first encoded audio data to the audio play device 200. The audio play device 200 decodes compressed audio data into first play audio data by using the decoder 1 of the category 1, and plays the first play audio data.

For example, when the common category is the category 2, a codec categorized into the category 2 is a basic audio codec. An encoder of the category 2 includes the encoder 2 (the second encoder), and a decoder of the category 2 includes the decoder 2 (the second decoder). Because the category 2 includes only one encoder and one decoder, the electronic device 100 determines that the encoder 2 and the decoder 2 are a default encoder and a default decoder of the category 2. When the electronic device 100 determines that audio data is to be transmitted by using the codec of the category 2, the electronic device 100 sends the identifier of the used category (an identifier of the category 2) to the audio play device 200.

The electronic device 100 packages the audio data by using the encoder 2 of the category 2, and sends packaged audio data to the audio play device 200. The audio play device 200 decompresses compressed audio data by using the decoder 2 of the category 2, and plays the audio data.

For any common category, if a quantity of encoder identifiers is greater than 1 or a quantity of decoder identifiers is greater than 1, the electronic device 100 needs to determine one of a plurality of encoders of the category as a default encoder or one of a plurality of decoders of the category as a default decoder.

For example, when the common category is the category 1, a codec categorized into the category 1 is a high-definition audio codec. An encoder of the category 1 includes the encoder 1 (the first encoder) and the encoder 3 (a third encoder), and a decoder of the category 1 includes the decoder 1 (the first decoder) and the decoder 3 (a third decoder). Because the category 1 includes a plurality of encoders and a plurality of decoders, the electronic device 100 determines a default encoder and a default decoder of the category 1. The electronic device 100 may determine a default encoder and a default decoder of the category 1 from the plurality of encoders and the plurality of decoders according to a preset rule. The preset rule may be a priority rule, a low power consumption rule, a high efficiency rule, or the like. Specifically, for a method for determining, by the electronic device 100, a default encoder (the first encoder) and a default decoder (the first decoder) of the category 1 from the plurality of encoders and the plurality of decoders according to the priority rule, the low power consumption rule, or the high efficiency rule, refer to the embodiment shown in S808. Details are not described herein again in this application. After the electronic device 100 determines that the encoder 1 and the decoder 1 are a default encoder and a default decoder of the category 1, the electronic device 100 sends a default decoder identifier and/or a default encoder identifier of the category to the audio play device 200.

Then, when the electronic device 100 determines that audio data is to be transmitted by using the codec of the category 1, the electronic device 100 sends an identifier of the used category (an identifier of the category 1) to the audio play device 200.

The electronic device 100 encodes the audio data into first encoded audio data by using the encoder 1 of the category 1, and sends the first encoded audio data to the audio play device 200. The audio play device 200 decodes the first encoded audio data into first play audio data by using the decoder 1 of the category 1, and plays the first play audio data.

For example, when the common category is the category 1 and the category 2, a codec categorized into the category 1 is a high-definition audio codec, and a codec categorized into the category 2 is a basic audio codec. An encoder of the category 1 includes the encoder 1, a decoder of the category 1 includes the decoder 1, an encoder of the category 2 includes the encoder 2, and a decoder of the category 2 includes the decoder 2. Because the category 1 includes only one encoder and one decoder and category 2 includes only one decoder and one encoder, the electronic device 100 determines that the encoder 1 and the decoder 1 are a default encoder and a default decoder of the category 1, and the encoder 2 and the decoder 2 are a default encoder and a default decoder of the category 2. When the electronic device 100 transmits audio data by using the codec of the category 1 or the category 2, the electronic device 100 sends an identifier of the used category (an identifier of the category 1 or an identifier of the category 2) to the audio play device 200.

Alternatively, when the common category is the category 1 and the category 2, a codec categorized into the category 1 is a high-definition audio codec, and a codec categorized into the category 2 is a basic audio codec. An encoder of the category 1 includes the encoder 1 and the encoder 3, a decoder of the category 1 includes the decoder 1 and the decoder 3, an encoder of the category 2 includes the encoder 2 and an encoder 4, and a decoder of the category 2 includes a decoder 2 and a decoder 4. Because the category 1 includes a plurality of encoders and a plurality of decoders and the category 2 also includes a plurality of encoders and a plurality of decoders, the electronic device 100 may determine a default encoder and a default decoder of each of the category 1 and the category 2 from the plurality of encoders and the plurality of decoders according to a preset rule. The preset rule may be a priority rule, a low power consumption rule, a high efficiency rule, or the like. Specifically, for a method for determining, by the electronic device 100, a default encoder and a default decoder of each of the category 1 and the category 2 from the plurality of encoders and the plurality of decoders according to the priority rule, the low power consumption rule, or the high efficiency rule, refer to the embodiment shown in S808. Details are not described herein again in this application. After the electronic device 100 determines that the encoder 1 and the decoder 1 are a default encoder and a default decoder of the category 1 and the encoder 2 and the decoder 2 are a default encoder and a default decoder of the category 2, the electronic device 100 sends a default decoder identifier and/or a default encoder identifier of the category 1 and a default decoder identifier and/or a default encoder identifier of the category 2 to the audio play device 200.

The electronic device 100 may transmit audio data by using the default codec of the category 1 or the category 2. For example, the electronic device 100 may transmit audio data by using a codec of the category 1, where the codec of the category 1 is a high-definition audio codec. When a network condition changes, played audio content changes, or the like, the electronic device 100 may switch from the codec of the category 1 to a codec of the category 2, and transmit audio data by using the codec of the category 2.

After the electronic device 100 determines the common category supported by the electronic device 100 and the audio play device 200, in an optional implementation, the electronic device 100 determines a default encoder identifier and a default decoder identifier of each common category. A method for determining, by the electronic device 100, a default encoder identifier and a default decoder identifier of each common category supported by the electronic device 100 and the audio play device 200 is described in detail in the embodiment shown in FIG. 7. Details are not described herein again in this application.

In another optional implementation, the electronic device 100 only needs to determine a default encoder identifier of a common category supported by the electronic device 100 and the audio play device 200. Then the electronic device 100 sends the common category supported by the electronic device 100 and the audio play device 200 to the audio play device 200, and the audio play device 200 determines a default decoder identifier of the common category supported by the electronic device 100 and the audio play device 200.

In some embodiments, the preset codec categorization standard may be updated at a fixed interval (for example, one month). Therefore, when the codec categorization standard is periodically updated, the electronic device 100 also needs to periodically (for example, at an interval of one month) categorize encoders into a plurality of categories, and the audio play device 200 also needs to periodically (for example, at an interval of one month) categorize decoders into a plurality of categories.

In an optional implementation, the electronic device 100 and the audio play device 200 may categorize codecs into a plurality of categories at appropriate time based on captured user behavior habits.

For example, within a time period of "24:00 to 7:00", the electronic device 100 and the audio play device 200 may categorize codecs into a plurality of categories within the time period of "24:00 to 7:00". Because a user is having a rest at home within the time period of "24:00 to 7:00", codec categorization performed within this time period does not affect user experience of using a device.

S906: The electronic device 100 sends, to the audio play device 200, an identifier of the common category and a default decoder identifier of each common category.

After the electronic device 100 determines the common category supported by the electronic device 100 and the audio play device 200, the electronic device 100 sends, to the audio play device 200, the identifier of the common category (the identifier of the first category and the identifier of the second category, or the identifier of the first category) supported by the electronic device 100 and the audio play device 200 and a default decoder identifier of each common category.

The audio play device 200 receives the identifier of the common category supported by the electronic device 100 and the audio play device 200 and a default decoder identifier of each common category that are sent by the electronic device 100. The electronic device 100 transmits audio data to the audio play device 200 based on the common category supported by the electronic device 100 and the audio play device 200.

In some embodiments, if the audio play device 200 categorizes all decoders in the audio play device 200 into a plurality of categories based on a codec categorization standard, before the electronic device 100 negotiates on a common category supported by the electronic device 100 and the audio play device 200, the audio play device 200 sends, to the electronic device 100, each category identifier and a decoder identifier corresponding to each category. In this case, after the electronic device 100 determines a common category supported by the electronic device 100 and the audio play device 200, the electronic device 100 only needs to send the common category supported by the electronic device 100 and the audio play device 200 to the audio play device 200.

After the electronic device 100 determines the common category supported by the electronic device 100 and the audio play device 200, when the audio play device 200 determines a default decoder identifier of the common category supported by the electronic device 100 and the audio play device 200, the electronic device 100 only needs to send an identifier of the common category supported by the electronic device 100 and the audio play device 200 to the audio play device 200.

In some embodiments, when the electronic device 100 negotiates on a common category, the audio play device 200 sends, to the electronic device 100, all decoder identifiers on the audio play device 200 and a value of one or more parameters corresponding to each decoder. The electronic device 100 categorizes all encoders in the electronic device 100 and all decoders in the audio play device 200 into a plurality of categories based on a codec categorization standard. Then the electronic device 100 determines a common category supported by the electronic device 100 and the audio play device 200. In this case, in addition to the common category supported by the electronic device 100 and the audio play device 200, the electronic device 100 further needs to send a decoder identifier of the common category supported by the electronic device 100 and the audio play device 200 to the audio play device 200.

Further, after the electronic device 100 determines the common category supported by the electronic device 100 and the audio play device 200, the electronic device 100 may determine a default decoder identifier of the common category supported by the electronic device 100 and the audio play device 200. When the electronic device 100 determines the default decoder identifier of common category supported by the electronic device 100 and the audio play device 200, when sending the identifier of common category supported by the electronic device 100 and the audio play device 200 to the audio play device 200, the electronic device 100 further needs to send the default decoder identifier of the common category supported by the electronic device 100 and the audio play device 200 to the audio play device 200.

Alternatively, after the electronic device 100 determines the common category supported by the electronic device 100 and the audio play device 200, when the audio play device 200 determines the default decoder identifier of the common category supported by the electronic device 100 and the audio play device 200, when sending the common category supported by the electronic device 100 and the audio play device 200 to the audio play device 200, the electronic device 100 further needs to send the default decoder identifier of the common category supported by the electronic device 100 and the audio play device 200 to the audio play device 200.

S907: The electronic device 100 selects a default codec of the first category from the common category to transmit audio data.

The electronic device 100 obtains first parameter information of audio data, and when the first parameter information of the audio data meets a first condition, encodes the audio data into first encoded audio data based on the first encoder of the first category, and sends the first encoded audio data to the audio play device.

Specifically, the electronic device 100 may select a default codec of a category (for example, the first category) from the common category supported by the electronic device 100 and the audio play device 200 based on an application type, audio play characteristics (a sampling rate, a quantization bit depth, or a sound channel quantity), whether an audio rendering capability of the electronic device is enabled, a network condition of a channel, an audio stream format, and the like, to transmit audio data. A default encoder of the first category is the first encoder, and a default decoder of the first category is the first decoder. This part of content is described in detail in the foregoing embodiments. Details are not described herein again in this application.

For example, the electronic device 100 determines, based on the application type, the audio play characteristics (the sampling rate, the quantization bit depth, or the sound channel quantity), whether the audio rendering capability of the electronic device is enabled, the network condition of the channel, and the like, that the first parameter information is as follows: A sampling rate is the first sampling rate, a quantization bit depth is the first quantization bit depth, a bit rate is the first bit rate, and a sound channel quantity is the first sound channel quantity. The electronic device 100 selects a default codec of a category in which a sampling rate includes the first sampling rate, a quantization bit depth includes the first quantization bit depth, a bit rate includes the first bit rate, a sound channel quantity includes the first sound channel quantity, and an audio stream format includes PCM from the common category to transmit audio data.

When the electronic device 100 determines two or more categories from the common category supported by the electronic device 100 and the audio play device 200 based on the application type, the audio play characteristics (the sampling rate, the quantization bit depth, or the sound channel quantity), whether the audio rendering capability of the electronic device is enabled, the network condition of the channel, the audio stream format, and the like, the electronic device 100 may select a category with a highest priority from the two or more categories into the first category, and transmit audio data by using a default codec of the category with the highest priority. It can be understood that a higher sampling rate, a higher bit rate, and a higher quantization depth specified in the codec categorization standard indicate higher sound quality of a codec categorized into the category. Higher sound quality of a codec indicates a higher priority of a category to which the codec belongs.

For example, the common category supported by the electronic device 100 and the audio play device 200 includes the category 1 and the category 2. It is assumed that a category selected by the electronic device 100 based on the application type, the audio play characteristics (the sampling rate, the quantization bit depth, or the sound channel quantity), whether the audio rendering capability of the electronic device is enabled, the network condition of the channel, the audio stream format, and the like includes the category 1 and the category 2. A codec categorized into the category 1 is a codec with high-definition sound quality, and a codec categorized into the category 2 is a codec with standard sound quality. A priority of the category 1 is higher than that of the category 2. Therefore, the electronic device 100 preferentially selects a default codec of the category 1 to transmit audio data.

S908: The electronic device 100 sends the identifier of the first category to the audio play device 200.

The audio play device 200 receives the identifier of the first category that is sent by the electronic device 100, and the electronic device 100 transmits audio data to the audio play device 200 by using a default codec corresponding to the identifier of the first category.

S909: The electronic device 100 obtains audio data, and encodes the audio data by using an encoder corresponding to a first encoder identifier to obtain encoded audio data.

The first encoder identifier is a default encoder identifier of the first category.

S910: The electronic device 100 sends the encoded audio data (first encoded audio data) to the audio play device 200.

Specifically, the electronic device 100 may obtain currently played audio data through recording or the like, and then compress the obtained audio data, and send compressed audio data to the audio play device 200 through a communication connection to the audio play device 200. For example, the electronic device 100 and the audio play device 200 share multimedia content based on miracast. The electronic device 100 captures audio played by the electronic device 100, compresses the audio by using an advanced audio coding (advanced audio coding, AAC) algorithm, encapsulates compressed audio data into a transport stream (transport stream, TS), and then encodes the TS stream according to a real-time transport protocol (real-time transport protocol, RTP), and sends encoded data to the audio play device 200 through a Bluetooth channel connection.

S911: The audio play device 200 receives the encoded audio data sent by the electronic device 100, and decodes the encoded audio data by using a decoder corresponding to a first decoder identifier to obtain audio data (first play audio data).

The first decoder identifier is a default decoder identifier of the first category.

The audio play device 200 decodes the encoded audio data by using the decoder corresponding to the first decoder identifier to obtain uncoded audio data, and plays the audio data.

S912: The electronic device 100 switches from the first category to the second category.

When a sampling rate, a bit rate, a quantization bit depth, and/or a sound channel quantity of audio data of the electronic device 100 change, the electronic device 100 reselects a codec of another category (namely, the second category) to transmit audio data, and the electronic device 100 notifies the audio play device 200 of an identifier of the category. The electronic device 100 transmits audio data to the audio play device 200 by using a codec of the second category. This part of content is described in detail in the foregoing embodiments. Details are not described herein again in this application.

When a sampling rate, a bit rate, a quantization bit depth, and/or a sound channel quantity of audio data played by the electronic device change due to a user choice, a change of an application type, a change of audio content, enabling of the audio rendering capability of the electronic device, deterioration of a network condition of a channel, or the like, the electronic device 100 switches from the first category to the second category.

For example, when the electronic device 100 receives an operation of selecting a high-quality mode by a user, the electronic device 100 switches from the first category to the second category, where audio quality of a codec of the second category is higher than that of a codec of the first category. A sampling rate, a bit rate, and a quantization bit depth of the codec of the second category are all greater than those of the codec of the first category.

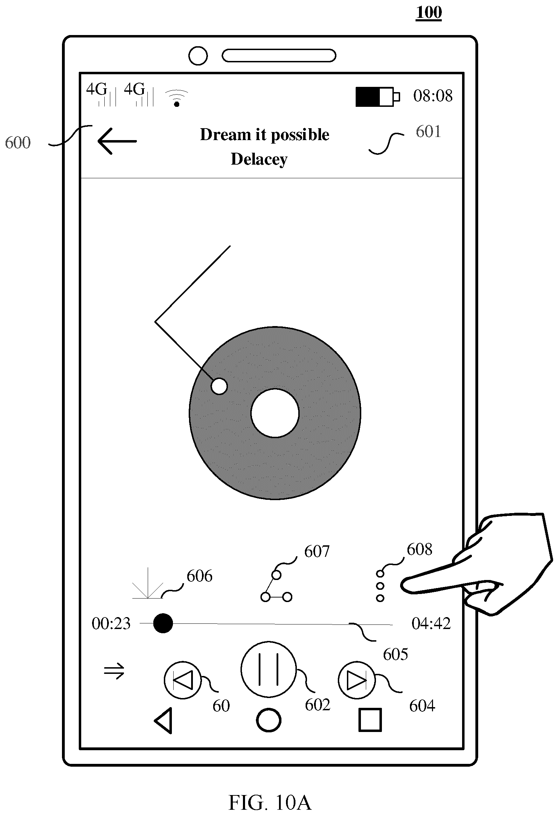

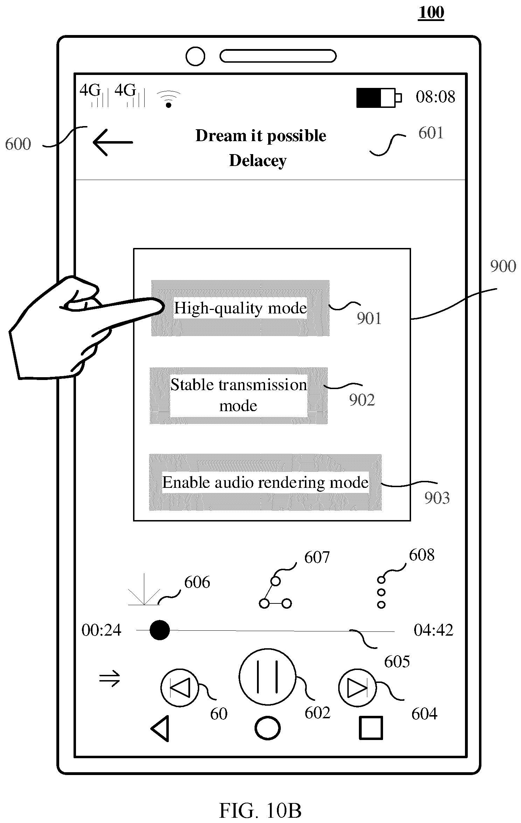

As shown in FIG. 10A, the electronic device 100 receives an operation of tapping a more control 608 by a user, and in response to the user operation, the electronic device 100 displays a prompt box 900 shown in FIG. 10B. The prompt box 900 includes a high-quality mode control 901, a stable transmission mode control 902, and an audio rendering mode enabling control 903. When the user expects higher sound quality of audio data played by the electronic device 100, the high-quality mode control 901 in the prompt box 900 may receive a tap operation performed by the user, and in response to the tap operation performed by the user, the electronic device 100 switches from the first category to the second category, where audio quality of a codec of the second category is higher than that of a codec of the first category.

For example, when the electronic device 100 receives a user operation and enables the audio rendering capability, the electronic device 100 increases a sampling rate of played audio data from the first sampling rate to a second sampling rate, a rendering unit of the electronic device 100 may increase a value of a quantization bit depth of the audio data from the first quantization bit depth to a second quantization bit depth, and the rendering unit of the electronic device 100 may increase a value of a sound channel quantity of the audio data from the first sound channel quantity to a second sound channel quantity. The second sampling rate is greater than the first sampling rate, the second quantization bit depth is greater than the first quantization bit depth, and the second sound channel quantity is greater than the first sound channel quantity.

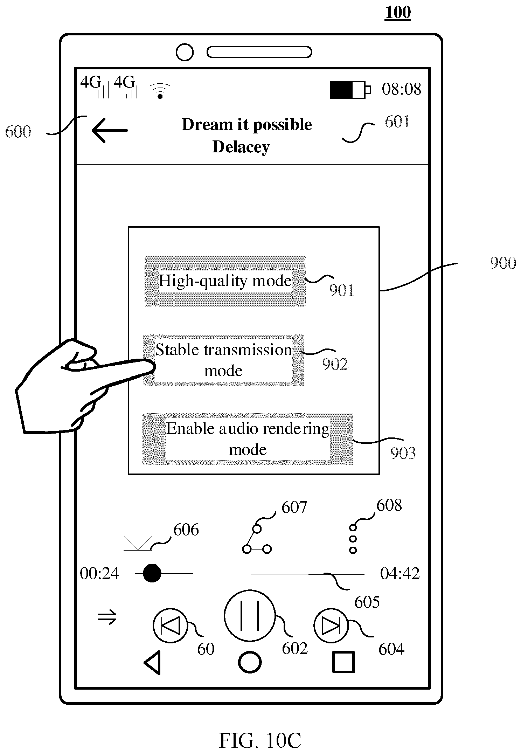

As shown in FIG. 10C, when the user expects the electronic device 100 to enable the audio rendering capability, the audio rendering mode enabling control 903 in the prompt box 900 may receive a tap operation performed by the user, and in response to the tap operation performed by the user, the electronic device 100 switches from the first category to the second category, where a sampling rate, a bit rate, a quantization bit depth, and a sound channel quantity of a codec of the second category are all greater than those of a codec of the first category.

For example, when a network of the electronic device 100 is unstable, the electronic device 100 may receive a user operation and switch a transmission mode for current audio data to a stable transmission mode. When the user chooses to enable the stable transmission mode, the electronic device 100 switches from the first category to the second category, where a bit rate of a codec of the second category is lower than that of a codec of the first type. Alternatively, the electronic device 100 may automatically switch to the stable transmission mode. This is not limited herein in this application.

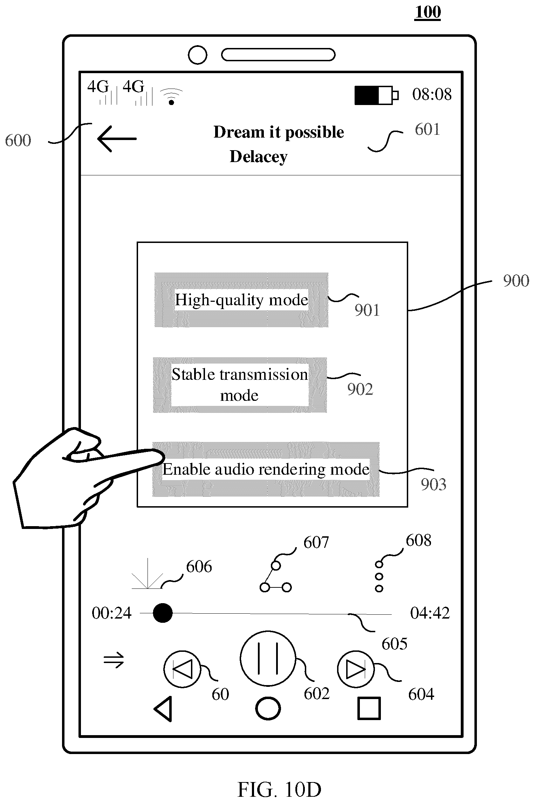

As shown in FIG. 10D, when the user chooses to enable the stable transmission mode, the stable transmission mode control 902 in the prompt box 900 may receive a tap operation performed by the user, and in response to the tap operation performed by the user, the electronic device 100 switches from first category to the second category, where a bit rate of a codec of the second category is lower than that of a codec of the first category.

The electronic device 100 obtains second parameter information of audio data. When the second parameter information of the audio data meets a second condition, the electronic device 100 switches from the first category to the second category, encodes the audio data into second encoded audio data based on the second encoder of the second category, and sends the second encoded audio data to the audio play device.

The electronic device 100 sends the identifier of the second category to the audio play device 200.

When an application type of audio data played by the electronic device 100 changes from an application type 1 to an application type 2, audio data played by the electronic device 100 switches from audio data 1 to audio data 2, or the audio rendering capability of the electronic device is enabled, the second parameter information is as follows: A sampling rate of audio data played by the electronic device 100 changes from the first sampling rate to the second sampling rate. In this case, the electronic device 100 selects a default codec of a category in which a sampling rate includes the second sampling rate, a quantization bit depth includes the first quantization bit depth, a bit rate includes the first bit rate, a sound channel quantity includes the first sound channel quantity, and an audio stream format includes PCM from the common category supported by the electronic device 100 and the audio play device 200, to transmit audio data.

The first condition and the second condition in S907 to S912 are described in detail as follows:

A type of a parameter in the first parameter information, a type of a parameter in the parameter information of the first encoder, a type of a parameter in the parameter information of the first decoder, a type of a parameter in the parameter information of the second parameter, a type of a parameter in the parameter information of the second encoder, and a type of a parameter in the parameter information of the second decoder are the same. That the first parameter information meets the first condition and the second parameter information meets the second condition specifically includes: A sampling rate in the first parameter information is greater than or equal to the target sampling rate, and a sampling rate in the second parameter information is less than the target sampling rate; and/or a bit rate in the first parameter information is greater than or equal to the target bit rate, and a bit rate in the second parameter information is less than the target bit rate; and/or a quantization bit depth in the first parameter information is greater than or equal to the target quantization bit depth, and a quantization bit depth in the second parameter information is less than the target quantization bit depth; and/or a sound channel quantity in the first parameter information is greater than or equal to the target sound channel quantity, and a sound channel quantity in the second parameter information is less than the target sound channel quantity; and/or an audio stream format in the first parameter information is the target audio stream format, and an audio stream format in the second parameter information is the target audio stream format.

S913: The electronic device 100 sends the identifier of the second category to the audio play device 200.

The audio play device 200 receives the identifier of the second category that is sent by the electronic device 100. The electronic device 100 transmits audio data to the audio play device 200 by using a default codec corresponding to the identifier of the second category.

Specifically, the electronic device 100 captures audio data, the electronic device 100 encodes the audio data by using an encoder corresponding to a second encoder identifier to obtain encoded audio data (second encoded audio data), the electronic device 100 sends the encoded audio data to the audio play device 200, the audio play device 200 decodes the audio data by using a decoder corresponding to a second decoder identifier to obtain uncoded audio data (second play audio data), and the audio play device 200 plays the uncoded audio data (second play audio data).

The second encoder identifier is a default encoder identifier of the second category, and the second decoder identifier is a default decoder identifier of the second category.

To avoid image stalling during codec switching performed by the electronic device 100 and the audio play device 200, smooth transition is implemented for audio data during switching performed by the electronic device 100 and the audio play device 200, to improve user experience.

When delays of the first encoder and the second encoder are the same, the electronic device encodes a first audio frame in the audio data into a first encoded audio frame by using the first encoder, and sends the first encoded audio frame to the audio play device; encodes the first audio frame in the audio data into a second encoded audio frame by using the second encoder, and sends the second encoded audio frame to the audio play device; and encodes a second audio frame in the audio data into an Nth encoded audio frame by using the second encoder, and sends the Nth encoded audio frame to the audio play device. The audio play device decodes the first encoded audio frame into a first decoded audio frame by using the first decoder, decodes the second encoded audio frame into a second decoded audio frame by using the second decoder, and decodes the Nth encoded audio frame into an Nth play audio frame by using the second decoder; and smooths the first decoded audio frame and the second decoded audio frame to obtain a first play audio frame. The electronic device 100 first plays the first play audio frame, and then the electronic device 100 plays the Nth play audio frame. In this way, when the delays of the first encoder and the second encoder are the same, switching between the first encoder and the second encoder needs to be completed within one frame, and the frame is the first audio frame. The audio play device smooths the first audio frame and then plays a smoothed first audio frame, to prevent stalling during codec switching, and implement smooth transition. An adjacent audio frame after the first audio frame, for example, the second audio frame, does not need to be smoothed, and the second audio frame is directly decoded by using the second decoder and played.

The audio play device obtains the first play audio frame by using the following formula: $Pcm=wi\times pcmA+(1-wi)\times pcmB$, where Pcm is the first play audio frame, wi is a smoothing coefficient, wi i is greater than 0 and less than 1, pcmA is the first decoded audio frame, and pcmB is the second decoded audio frame.

When delays of the first encoder and the second encoder are different, the electronic device obtains D audio data frames by using the following formula: $D=round((\max(\text{total delay of an encoder 1, total delay of an encoder 2})+(\text{frame length-total delay of the encoder 1}\%\text{frame length})+\text{frame length-1})/\text{frame length})$, where D indicates a total quantity of audio data frames during switching between the first encoder and the second encoder, max indicates an operation for obtaining a maximum value, % indicates a modulo operation, and the frame length indicates duration of one frame of audio data; encodes a first audio frame to a $D^{th}$ audio frame in the audio data by using the first encoder to obtain a third encoded audio frame to a $(D+2)^{th}$ encoded audio frame; encodes the $D^{th}$ audio frame in the audio data by using the second encoder to obtain a $(D+3)^{th}$ encoded audio frame, and encodes a $(D+1)^{th}$ audio frame in the audio data by using the second encoder to obtain an Nth encoded audio frame; and sends the third encoded audio frame to the $(D+2)^{th}$ encoded audio frame, the $(D+3)^{th}$ encoded audio frame, and the Nth encoded audio frame to the audio play device. The audio play device decodes, by using the first decoder, the third encoded audio frame to the (D+2)$^{th}$ encoded audio frame into a second play audio frame to a (D+1)$^{th}$ play audio frame, and decodes, by using the second decoder, the (D+3)$^{th}$ encoded audio frame into a third decoded audio frame; plays the second play audio frame to the D$^{th}$ play audio frame; smooths the (D+1)$^{th}$ play audio frame and the third decoded audio frame to obtain a target play audio frame, and plays the target play audio frame; and decodes, by using the second decoder, the Nth encoded audio frame into an Nth decoded audio frame, and plays the Nth decoded audio frame. In this way, when the delays of the first encoder and the second encoder are different, switching between the first encoder and the second encoder needs to be completed within a plurality of frames (D frames). In this way, during switching between the first encoder and the second encoder, a moment at which audio data encoded by the first encoder arrives at the audio play device and is decoded is the same as a moment at which audio data encoded by the second encoder arrives at the audio play device and is decoded. If encoder switching needs to be completed within D frames, the audio play device directly decodes the first audio frame to a (D-1)$^{th}$ audio frame and plays decoded audio frames, and the audio play device smooths the D$^{th}$ audio frame and then plays a smoothed audio frame, to prevent stalling during codec switching, and implement smooth transition. An adjacent audio frame after the D$^{th}$ audio frame, for example, an Nth audio frame, does not need to be smoothed, and an Nth audio frame is directly decoded and played.

The audio play device obtains the target play audio frame by using the following formula: Pcm=wi×pcmA+(1-wi)×pcmB, where Pcm is the target play audio frame, wi is a smoothing coefficient, wi is greater than 0 and less than 1, pcmA is the (D+1)$^{th}$ play audio frame, and pcmB is the third decoded audio frame.

How the electronic device 100 and the audio play device 200 implement smooth transition for audio data during switching is described in detail in the foregoing embodiments. Details are not described herein again in this application.

S912 and S913 may alternatively be replaced with the following operations: When the second parameter information meets the second condition, the audio data is encoded into third encoded audio data by using the first encoder of the first category, and the third encoded audio data is sent to the audio play device. The audio play device is further configured to decode the third encoded audio data into third play audio data by using the first decoder of the first category. When the electronic device and the audio play device support only one codec category (the first category), and when parameter information of audio data changes from the first parameter information to the second parameter information and the second parameter information meets the second condition, the electronic device cannot switch a codec, and the electronic device transmits the audio data to the audio play device still by using a default codec of the first category.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

**Claims**

1. A codec negotiation and switching system, wherein the system comprises an electronic device and an audio play device, wherein
   the electronic device is configured to:

   when first parameter information of audio data meets a first condition, encode the audio data into first encoded audio data based on a first encoder of a first category, and send the first encoded audio data to the audio play device, wherein the first category is a common codec category that is supported by the electronic device and the audio play device and that is determined by the electronic device before obtaining the audio data; and
   send an identifier of the first category to the audio play device;
   the audio play device is configured to:

   receive the identifier of the first category that is sent by the electronic device; and
   decode the first encoded audio data into first play audio data by using a first decoder of the first category;
   the electronic device is further configured to:

   when second parameter information of audio data meets a second condition, encode the audio data into second encoded audio data based on a second encoder of a second category, and send the second encoded audio data to the audio play device, wherein the second category is a common codec category that is supported by the electronic device and the audio play device and that is determined by the electronic device before obtaining the audio data; and

send an identifier of the second category to the audio play device; and
the audio play device is further configured to:

receive the identifier of the second category that is sent by the electronic device; and
decode the second encoded audio data into second play audio data by using a second decoder of the second category, wherein
the first condition is different from the second condition, and the first category is different from the second category.

2. The system according to claim 1, wherein an encoder of the first category comprises at least the first encoder, and an encoder of the second category comprises at least the second encoder.

3. The system according to claim 2, wherein the electronic device is further configured to:
receive the identifier of the first category and the identifier of the second category that are sent by the audio play device, wherein a decoder of the first category comprises at least the first decoder, and a decoder of the second category comprises at least the second decoder.

4. The system according to claim 3, wherein the electronic device is further configured to:

determine that a common category supported by the electronic device and the audio play device is the first category and the second category; and
send the identifier of the first category and the identifier of the second category to the audio play device; and
the audio play device is further configured to:
receive the identifier of the first category and the identifier of the second category that are sent by the electronic device.

5. The system according to claim 4, wherein the encoder of the first category comprises only the first encoder, and the decoder of the first category comprises only the first decoder;
after the electronic device determines that the common category supported by the electronic device and the audio play device is the first category and the second category, the electronic device is further configured to:

when the first parameter information meets the first condition, encode the audio data into the first encoded audio data by using the first encoder of the first category, and send the first encoded audio data to the audio play device; and
the audio play device is further configured to decode the first encoded audio data into the first play audio data by using the first decoder of the first category.

6. The system according to claim 5, wherein the encoder of the first category further comprises a third encoder, and the decoder of the first category further comprises a third decoder;
after the electronic device determines that the common category supported by the electronic device and the audio play device is the first category and the second category, the electronic device is further configured to:

when the first parameter information meets the first condition, encode the audio data into the first encoded audio data by using the first encoder of the first category, and send the first encoded audio data to the audio play device, wherein power consumption of the first encoder is lower than that of the third encoder, or a priority or efficiency of the first encoder is higher than that of the third encoder; and
the audio play device is further configured to decode the first encoded audio data into the first play audio data by using the first decoder of the first category, wherein power consumption of the first decoder is lower than that of the second decoder, or a priority or efficiency of the first decoder is higher than that of the second decoder.

7. The system according to claim 1, wherein when a common encoder category supported by the electronic device and the audio play device comprises only the first category, the electronic device is further configured to:

when the second parameter information meets the second condition, encode the audio data into third encoded audio data by using the first encoder of the first category, and send the third encoded audio data to the audio play device; and
the audio play device is further configured to decode the third encoded audio data into third play audio data by using the first decoder of the first category.

EP 4 318 467 A1

8. The method according to claim 7, wherein that the common encoder category supported by the electronic device and the audio play device comprises only the first category comprises:
the electronic device does not receive the identifier of the second category that is sent by the audio play device, or a quantity of encoders, categorized into the second category, of the electronic device is 0.

9. The system according to claim 7, wherein the encoder of the first category comprises only the first encoder, and the decoder of the first category comprises only the first decoder;
when the first parameter information meets the first condition, the electronic device is further configured to:

encode the audio data into the first encoded audio data by using the first encoder of the first category, and send the first encoded audio data to the audio play device; and
the audio play device is further configured to decode the first encoded audio data into the first play audio data by using the first decoder of the first category.

10. The system according to claim 7, wherein the encoder of the first category further comprises a third encoder, and the decoder of the first category further comprises a third decoder;
when the first parameter information meets the first condition, the electronic device is further configured to:

encode the audio data into the first encoded audio data based on the first encoder of the first category, and send the first encoded audio data to the audio play device, wherein power consumption of the first encoder is lower than that of the third encoder, or a priority or efficiency of the first encoder is higher than that of the third encoder; and
the audio play device is further configured to decode the first encoded audio data into the first play audio data by using the first decoder of the first category, wherein power consumption of the first decoder is lower than that of the third decoder, or a priority or efficiency of the first decoder is higher than that of the third decoder.

11. The system according to any one of claims 2 to 10, wherein a codec of the first category is a codec with high-definition sound quality, and a codec of the second category is a codec with standard sound quality; or
a codec of the first category is a codec with standard sound quality, and a codec of the second category is a codec with high-definition sound quality.

12. The system according to claim 1, wherein before the electronic device obtains the audio data, the electronic device is further configured to:

categorize the first encoder into the first category based on parameter information of the first encoder and a codec categorization standard, and categorize the second encoder into the second category based on parameter information of the second encoder and the codec categorization standard, wherein the parameter information of the first encoder and the parameter information of the second encoder comprise one or more of a sampling rate, a bit rate, a quantization bit depth, a sound channel quantity, and an audio stream format; and
the audio play device is further configured to:

categorize the first decoder into the first category based on parameter information of the first decoder and the codec categorization standard, and categorize the second decoder into the second category based on parameter information of the second decoder and the codec categorization standard, wherein the parameter information of the first decoder and the parameter information of the second decoder comprise one or more of a sampling rate, a bit rate, a quantization bit depth, a sound channel quantity, and an audio stream format, wherein
the codec categorization standard comprises a mapping relationship between a codec category and parameter information of a codec.

13. The system according to claim 12, wherein a sampling rate of a codec of the first category is greater than or equal to a target sampling rate, and a sampling rate of a codec of the second category is less than the target sampling rate; and/or

a bit rate of the codec of the first category is greater than or equal to a target bit rate, and a bit rate of the codec of the second category is less than the target bit rate; and/or
a sound channel quantity of the codec of the first category is greater than or equal to a target sound channel quantity, and a sound channel quantity of the codec of the second category is less than the target sound channel quantity; and/or
a quantization bit depth of the codec of the first category is greater than or equal to a target quantization bit depth, and a quantization bit depth of the codec of the second category is less than the target quantization bit depth; and/or
an audio stream format of the codec of the first category is a target audio stream format, and an audio stream format of the codec of the second category is the target audio stream format.

14. The system according to claim 13, wherein a type of a parameter in the first parameter information, a type of a parameter in the parameter information of the first encoder, a type of a parameter in the parameter information of the first decoder, a type of a parameter in the parameter information of the second parameter, a type of a parameter in the parameter information of the second encoder, and a type of a parameter in the parameter information of the second decoder are the same; and
that the first parameter information meets the first condition and the second parameter information meets the second condition specifically comprises:

a sampling rate in the first parameter information is greater than or equal to the target sampling rate, and a sampling rate in the second parameter information is less than the target sampling rate; and/or
a bit rate in the first parameter information is greater than or equal to the target bit rate, and a bit rate in the second parameter information is less than the target bit rate; and/or
a quantization bit depth in the first parameter information is greater than or equal to the target quantization bit depth, and a quantization bit depth in the second parameter information is less than the target quantization bit depth; and/or
a sound channel quantity in the first parameter information is greater than or equal to the target sound channel quantity, and a sound channel quantity in the second parameter information is less than the target sound channel quantity; and/or
an audio stream format in the first parameter information is the target audio stream format, and an audio stream format in the second parameter information is the target audio stream format.

15. The system according to claim 1, wherein when delays of the first encoder and the second encoder are the same, the electronic device is further configured to:

encode a first audio frame in the audio data into a first encoded audio frame by using the first encoder, and send the first encoded audio frame to the audio play device; and
encode the first audio frame in the audio data into a second encoded audio frame by using the second encoder, and send the second encoded audio frame to the audio play device; and
the audio play device is further configured to:

decode the first encoded audio frame into a first decoded audio frame by using the first decoder, and decode the second encoded audio frame into a second decoded audio frame by using the second decoder; and
smooth the first decoded audio frame and the second decoded audio frame to obtain a first play audio frame.

16. The system according to claim 1, wherein when delays of the first encoder and the second encoder are different, the electronic device is further configured to:

obtain D audio data frames by using the following formula: D=round((max(total delay of an encoder 1, total delay of an encoder 2)+(frame length-total delay of the encoder 1%frame length)+frame length-1)/frame length), wherein D indicates a total quantity of audio data frames during switching between the first encoder and the second encoder, max indicates an operation for obtaining a maximum value, % indicates a modulo operation, and the frame length indicates duration of one frame of audio data;
encode a first audio frame to a $D^{th}$ audio frame in the audio data by using the first encoder to obtain a third encoded audio frame to a $(D+2)^{th}$ encoded audio frame;
encode the Dth audio frame in the audio data by using the second encoder to obtain a $(D+3)^{th}$ encoded audio frame; and
send the third encoded audio frame to the $(D+2)^{th}$ encoded audio frame and the $(D+3)^{th}$ encoded audio frame to the audio play device; and
the audio play device is further configured to:

decode, by using the first decoder, the third encoded audio frame to the $(D+2)^{th}$ encoded audio frame into a second play audio frame to a (D+1)th play audio frame, and decode, by using the second decoder, the (D+3)th encoded audio frame into a third decoded audio frame;

play the second play audio frame to the Dth play audio frame; and

smooth the (D+1)th play audio frame and the third decoded audio frame to obtain a target play audio frame.

17. The system according to claim 15, wherein the audio play device is further configured to:
obtain the first play audio frame by using the following formula: Pcm=wi×pcmA+(1-wi)×pcmB, wherein Pcm is the first play audio frame, wi is a smoothing coefficient, wi is greater than 0 and less than 1, pcmA is the first decoded audio frame, and pcmB is the second decoded audio frame.

18. The system according to claim 16, wherein the audio play device is further configured to:
obtain the target play audio frame by using the following formula: Pcm=wi×pcmA+(1-wi)×pcmB, wherein Pcm is the target play audio frame, wi is a smoothing coefficient, wi is greater than 0 and less than 1, pcmA is the (D+1)th play audio frame, and pcmB is the third decoded audio frame.

19. A codec negotiation and switching method, wherein the method comprises:

when first parameter information of audio data meets a first condition, encoding, by an electronic device, audio data into first encoded audio data based on a first encoder of a first category, and sending the first encoded audio data to an audio play device, wherein the second category is a common codec category that is supported by the electronic device and the audio play device and that is determined by the electronic device before obtaining the audio data; and

when the second parameter information meets a second condition, encoding, by the electronic device, the audio data into second encoded audio data based on a second encoder of a second category, and sending the second encoded audio data to the audio play device, wherein the second category is a common codec category that is supported by the electronic device and the audio play device and that is determined by the electronic device before obtaining the audio data, the second category is a common codec category that is supported by the electronic device and the audio play device and that is determined by the electronic device before obtaining the audio data, the first condition is different from the second condition, and the first category is different from the second category.

20. The method according to claim 19, wherein an encoder of the first category comprises at least the first encoder, and an encoder of the second category comprises at least the second encoder.

21. The method according to claim 20, wherein the method further comprises:
receiving, by the electronic device, an identifier of the first category and an identifier of the second category that are sent by the audio play device, wherein a decoder of the first category comprises at least a first decoder, and a decoder of the second category comprises at least a second decoder.

22. The method according to claim 21, wherein the method further comprises:

determining, by the electronic device, that a common category supported by the electronic device and the audio play device is the first category and the second category; and

sending, by the electronic device, the identifier of the first category and the identifier of the second category to the audio play device.

23. The method according to claim 22, wherein the encoder of the first category comprises only the first encoder, and after the determining, by the electronic device, that a common category supported by the electronic device and the audio play device is the first category and the second category, the method further comprises:
when the first parameter information meets the first condition, encoding, by the electronic device, the audio data into the first encoded audio data by using the first encoder of the first category, and sending the first encoded audio data to the audio play device.

24. The method according to claim 23, wherein the encoder of the first category further comprises a third encoder, and after the determining, by the electronic device, that a common category supported by the electronic device and the audio play device is the first category and the second category, the method further comprises:
when the first parameter information meets the first condition, encoding, by the electronic device, the audio data into the first encoded audio data by using the first encoder of the first category, and sending the first encoded audio data to the audio play device, wherein power consumption of the first encoder is lower than that of the third encoder, or a priority or efficiency of the first encoder is higher than that of the third encoder.

25. The method according to claim 19, wherein when the common encoder category supported by the electronic device and the audio play device comprises only the first category, the method further comprises:
when the second parameter information meets the second condition, encoding, by the electronic device, the audio data into third encoded audio data by using the first encoder of the first category, and sending the third encoded audio data to the audio play device.

26. The method according to claim 25, wherein that the common encoder category supported by the electronic device and the audio play device comprises only the first category comprises: the electronic device does not receive the identifier of the second category that is sent by the audio play device; or a quantity of encoders, categorized into the second category, of the electronic device is 0.

27. The method according to claim 25, wherein the encoder of the first category comprises only the first encoder, and the decoder of the first category comprises only the first decoder; and
when the first parameter information meets the first condition, the electronic device encodes the audio data into the first encoded audio data based on the first encoder of the first category, and sends the first encoded audio data to the audio play device.

28. The method according to claim 25, wherein the encoder of the first category further comprises a third encoder, and the decoder of the first category further comprises a third decoder; and
when the first parameter information meets the first condition, the electronic device encodes the audio data into the first encoded audio data based on the first encoder of the first category, and sends the first encoded audio data to the audio play device, wherein power consumption of the first encoder is lower than that of the third encoder, or a priority or efficiency of the first encoder is higher than that of the third encoder.

29. The method according to any one of claims 20 to 28, wherein a codec of the first category is a codec with high-definition sound quality, and a codec of the second category is a codec with standard sound quality; or
a codec of the first category is a codec with standard sound quality, and a codec of the second category is a codec with high-definition sound quality.

30. The method according to claim 10, wherein before the electronic device obtains the audio data, the method further comprises:
categorizing, by the electronic device, the first encoder into the first category based on parameter information of the first encoder and a codec categorization standard, and categorizing the second encoder into the second category based on parameter information of the second encoder and the codec categorization standard, wherein the parameter information of the first encoder and the parameter information of the second encoder comprise one or more of a sampling rate, a bit rate, a quantization bit depth, a sound channel quantity, and an audio stream format, and the codec categorization standard comprises a mapping relationship between a codec category and parameter information of a codec.

31. The method according to claim 30, wherein a sampling rate of a codec of the first category is greater than or equal to a target sampling rate, and a sampling rate of a codec of the second category is less than the target sampling rate; and/or

a bit rate of the codec of the first category is greater than or equal to a target bit rate, and a bit rate of the codec of the second category is less than the target bit rate; and/or
a sound channel quantity of the codec of the first category is greater than or equal to a target sound channel quantity, and a sound channel quantity of the codec of the second category is less than the target sound channel quantity; and/or
a quantization bit depth of the codec of the first category is greater than or equal to a target quantization bit depth, and a quantization bit depth of the codec of the second category is less than the target quantization bit depth; and/or
an audio stream format of the codec of the first category is a target audio stream format, and an audio stream format of the codec of the second category is the target audio stream format.

32. The method according to claim 31, wherein a type of a parameter in the first parameter information, a type of a parameter in the parameter information of the first encoder, a type of a parameter in the parameter information of the first decoder, a type of a parameter in the parameter information of the second parameter, a type of a parameter in the parameter information of the second encoder, and a type of a parameter in the parameter information of the second decoder are the same; and

that the first parameter information meets the first condition and the second parameter information meets the second condition specifically comprises:

a sampling rate in the first parameter information is greater than or equal to the target sampling rate, and a sampling rate in the second parameter information is less than the target sampling rate; and/or

a bit rate in the first parameter information is greater than or equal to the target bit rate, and a bit rate in the second parameter information is less than the target bit rate; and/or

a quantization bit depth in the first parameter information is greater than or equal to the target quantization bit depth, and a quantization bit depth in the second parameter information is less than the target quantization bit depth; and/or

a sound channel quantity in the first parameter information is greater than or equal to the target sound channel quantity, and a sound channel quantity in the second parameter information is less than the target sound channel quantity; and/or

an audio stream format in the first parameter information is the target audio stream format, and an audio stream format in the second parameter information is the target audio stream format.

33. An electronic device, comprising one or more processors, one or more memories, and one or more encoders, wherein the one or more memories and the one or more encoders are coupled to the one or more processors, the one or more memories are configured to store computer program code, the computer program code comprises computer instructions, and the one or more processors invoke the computer instructions to enable the electronic device to perform the method according to any one of claims 19 to 32.

34. A computer-readable storage medium, wherein the computer-readable storage medium stores computer-executable instructions, and when being invoked by a computer, the computer-executable instructions are used to perform the method according to any one of claims 19 to 32.

35. A computer program product comprising instructions, wherein when the computer program product runs on a computer, the computer is enabled to perform the method according to any one of claims 19 to 32.

Audio data → **Audio content obtaining unit** → **Audio stream decoding unit** → **Audio mixing and rendering unit**

All encoder identifiers and all encoder capabilities → **Capability negotiation unit**

Default encoder identifier → **Wireless audio encoding unit**

All decoder identifiers and all decoder capabilities

Default decoder identifier

**Wireless transmission unit**

Electronic device 100

All decoder identifiers and all decoder capabilities

Default decoder identifier

Audio play device 200

**Wireless transmission unit**

All decoder identifiers and all decoder capabilities

Default decoder identifier

**Capability negotiation unit** → **Wireless audio decoding unit** → **Audio power amplifier unit** → **Audio play unit**

Default decoder identifier

FIG. 1

**Electronic device 100**

Bluetooth connection

**Audio play device 200**

FIG. 2

Electronic device 100

FIG. 3

Audio data

Category identifier
corresponding to
one or more
encoder identifiers

Category identifier
corresponding to one or
more decoder identifiers

Electronic
device 100

Category identifier
corresponding to
one or more
decoder identifiers

| Audio content obtaining unit | Audio stream decoding unit | Audio mixing and rendering unit |

Default encoder
identifier of a
first category

| Capability negotiation unit | Encoding control unit | Wireless audio encoding unit |

Identifier of the
first category

Wireless transmission unit

Identifier of
the first
category

Audio play
device 200

Wireless transmission unit

Category identifier
corresponding to one
or more decoder
identifiers

Identifier of the
first category

| Capability negotiation unit | Decoding control unit | Wireless audio decoding unit | Audio power amplifier unit | Audio play unit |

Identifier of the first category

FIG. 4

Electronic device 100

Antenna 1                                          Antenna 2

| Mobile communication module<br>2G/3G/4G/5G<br>[150] | Wireless communication module<br>BT/WLAN/GNSS/NFC/IR/FM<br>[160] |

Speaker [170A]

Receiver [170B]

Audio module [170]

Microphone [170C]

Headset jack [170D]

Displays 1 to N [194]

Cameras 1 to N [193]

Indicator [192]

Motor [191]

Button [190]

Internal memory [121]

SIM card interfaces 1 to N [195]

External memory interface [120]

USB interface [130]

Charging input

Processor

[110]

Charging management module [140]

Power management module [141]

Battery [142]

Sensor module [180]

Pressure sensor [180A]

Gyro sensor [180B]

Barometric pressure sensor [180C]

Magnetic sensor [180D]

Acceleration sensor [180E]

Distance sensor [180F]

Optical proximity sensor [180G]

Fingerprint sensor [180H]

Temperature sensor [180J]

Touch sensor [180K]

Ambient light sensor [180L]

Bone conduction sensor [180M]

FIG. 5

| Application layer | Camera | Calendar | Map | WLAN | Music | Messaging |
|---|---|---|---|---|---|---|
| | Gallery | Phone | Navigation | Bluetooth | Video | ... |

| Application framework layer | Window manager | Content provider | Phone manager | Resource manager |
|---|---|---|---|---|
| | Notification manager | View system | ... | |

| System library | Surface manager | Three-dimensional graphics processing library | Android runtime |
|---|---|---|---|
| | Two-dimensional graphics engine | Media library | ... |

| Kernel layer | Display driver | Camera driver | |
|---|---|---|---|
| | Audio driver | Sensor driver | ... |

FIG. 6

**Audio play device 200**

FIG. 7

| Electronic device 100 | Audio play device 200 |
|---|---|

S801: Establish a communication connection

S802: Categorize all decoders into a plurality of categories based on a codec categorization standard

S803: Obtain a decoder identifier of each category

S804: A category identifier corresponding to one or more decoder identifiers

S805: Categorize all encoders into a plurality of categories based on a codec categorization standard

S806: An encoder identifier of each category

S807: Determine a common category from a category corresponding to one or more encoder identifiers and a category corresponding to one or more decoder identifiers

S808: Determine a default encoder identifier of the common category

S809: An identifier of the common category

FIG. 8

| Electronic device 100 | | Audio play device 200 |

S901: Establish a communication connection

Yes ◁ S902: Connected to the sink 200 for the first time? ▷ No

S903: A category identifier corresponding to one or more decoder identifiers

S904: Determine a common category from a category corresponding to one or more encoder identifiers and a category corresponding to one or more decoder identifiers

S905: Determine a default encoder identifier and a default decoder identifier of each common category

S906: An identifier of the common category and a default decoder identifier of each common category

S907: Select a default codec of a first category from the common category to transmit audio data

S908: An identifier of the first category

S909: Obtains audio data, and encode the audio data by using an encoder corresponding to a first encoder identifier to obtain encoded audio data

S910: The encoded audio data

S911: Receive the encoded audio data, and decode the encoded audio data by using a decoder corresponding to a first decoder identifier to obtain the audio data

S912: Switch from the first category to a second category

S913: An identifier of the second category

FIG. 9

**100**

FIG. 9A

FIG. 9B

**100**

08:08 a.m.  Friday, February 9

WLAN  Hotspot  Flashlight  Ringtone  Auto-rotation

610

Instant sharing  Airplane mode  Mobile data  Location information  Screenshot

Eye comfort mode  Bluetooth  Screen recording  Collaborative projection  NFC

611

600

607

608

606

00:00  04:42

605

60  602  604

FIG. 9C

FIG. 10A

FIG. 10B

**100**

FIG. 10C

FIG. 10D

## INTERNATIONAL SEARCH REPORT

| International application No. |
| --- |
| **PCT/CN2022/083816** |

### A. CLASSIFICATION OF SUBJECT MATTER

G10L 19/002(2013.01)i; H04W 4/80(2018.01)i

According to International Patent Classification (IPC) or to both national classification and IPC

### B. FIELDS SEARCHED

Minimum documentation searched (classification system followed by classification symbols)

G10L 19; H04W 4

Documentation searched other than minimum documentation to the extent that such documents are included in the fields searched

Electronic data base consulted during the international search (name of data base and, where practicable, search terms used)

CNABS; WPABS; CNTXT: 语音, 音频, 转码, 码率, 比特率, 速率, 变换, 转换, 切换, 类型, 类别, 分类, 支持, 共有, 共同, 拥有, 过渡, 平滑, 平均, 帧, 长, 延迟, 延时, 同步, codec type, support, change, exchange, support, bit rate, frame length, delay

### C. DOCUMENTS CONSIDERED TO BE RELEVANT

| Category* | Citation of document, with indication, where appropriate, of the relevant passages | Relevant to claim No. |
| --- | --- | --- |
| X | CN 107404339 A (QINGDAO HISENSE ELECTRIC CO., LTD.) 28 November 2017 (2017-11-28)<br>description, paragraphs [0003] and [0021]-[0091] | 1-14, 19-35 |
| Y | CN 107404339 A (QINGDAO HISENSE ELECTRIC CO., LTD.) 28 November 2017 (2017-11-28)<br>description, paragraphs [0003], [0021]-[0091] | 15, 17 |
| Y | CN 104509119 A (VID SCALE INC.) 08 April 2015 (2015-04-08)<br>abstract | 15, 17 |
| A | CN 1300508 A (ALCATEL) 20 June 2001 (2001-06-20)<br>entire document | 1-35 |
| A | WO 2021018739 A1 (TAP SOUND SYSTEM) 04 February 2021 (2021-02-04)<br>entire document | 1-35 |
| A | WO 2020239985 A1 (TAP SOUND SYSTEM) 03 December 2020 (2020-12-03)<br>entire document | 1-35 |
| A | CN 103477388 A (PANASONIC CORP.) 25 December 2013 (2013-12-25)<br>entire document | 16 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **14 May 2022** | **24 May 2022** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT

| International application No. |
| --- |
| **PCT/CN2022/083816** |

**C.    DOCUMENTS CONSIDERED TO BE RELEVANT**

| Category* | Citation of document, with indication, where appropriate, of the relevant passages | Relevant to claim No. |
| --- | --- | --- |
| A | US 2007255433 A1 (CHOO EUGENE K.) 01 November 2007 (2007-11-01) entire document | 1-35 |

Form PCT/ISA/210 (second sheet) (January 2015)

<table>
<tr><td colspan="2">INTERNATIONAL SEARCH REPORT<br>Information on patent family members</td><td colspan="2">International application No.<br><br>**PCT/CN2022/083816**</td></tr>
</table>

| Patent document cited in search report | | | Publication date (day/month/year) | Patent family member(s) | | | Publication date (day/month/year) |
|---|---|---|---|---|---|---|---|
| CN | 107404339 | A | 28 November 2017 | CN | 107404339 | B | 16 July 2021 |
| CN | 104509119 | A | 08 April 2015 | JP | 2017005725 | A | 05 January 2017 |
| | | | | KR | 20150004394 | A | 12 January 2015 |
| | | | | JP | 2015518350 | A | 25 June 2015 |
| | | | | WO | 2013163224 | A1 | 31 October 2013 |
| | | | | US | 2013282917 | A1 | 24 October 2013 |
| | | | | TW | 201414254 | A | 01 April 2014 |
| | | | | KR | 20160063405 | A | 03 June 2016 |
| | | | | EP | 2842338 | A1 | 04 March 2015 |
| CN | 1300508 | A | 20 June 2001 | AU | 3662800 | A | 23 October 2000 |
| | | | | US | 6839557 | B1 | 04 January 2005 |
| | | | | JP | 2002541746 | A | 03 December 2002 |
| | | | | WO | 0060888 | A1 | 12 October 2000 |
| | | | | EP | 1043903 | A1 | 11 October 2000 |
| | | | | FR | 2792156 | A1 | 13 October 2000 |
| | | | | HU | 0102396 | A2 | 28 October 2001 |
| | | | | CN | 1112065 | C | 18 June 2003 |
| | | | | JP | 3663133 | B2 | 22 June 2005 |
| | | | | AU | 743022 | B2 | 17 January 2002 |
| WO | 2021018739 | A1 | 04 February 2021 | EP | 3771238 | A1 | 27 January 2021 |
| WO | 2020239985 | A1 | 03 December 2020 | KR | 20210130789 | A | 01 November 2021 |
| | | | | EP | 3745813 | A1 | 02 December 2020 |
| | | | | US | 2021160673 | A1 | 27 May 2021 |
| | | | | EP | 3829129 | A1 | 02 June 2021 |
| | | | | IN | 202147045687 | A | 03 December 2021 |
| CN | 103477388 | A | 25 December 2013 | WO | 2013061584 | A1 | 02 May 2013 |
| | | | | JP | WO2013061584 | A1 | 02 April 2015 |
| | | | | US | 2014058737 | A1 | 27 February 2014 |
| | | | | EP | 2772914 | A1 | 03 September 2014 |
| US | 2007255433 | A1 | 01 November 2007 | WO | 2007127055 | A2 | 08 November 2007 |
| | | | | EP | 2013767 | A2 | 14 January 2009 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110423987